# EUROPEAN PATENT SPECIFICATION

(11) **EP 2 895 036 B1**
(45) Date of publication and mention of the grant of the patent: **02.05.2018**
(21) Application number: 13837043.2
(22) Date of filing: 17.09.2013
(51) Int. Cl.: A47H 5/02, E06B 9/24

(54) **ROTATABLE DRIVE ELEMENT FOR MOVING A WINDOW COVERING**
DREHBARES ANTRIEBSELEMENT ZUM BEWEGEN EINER FENSTERABDECKUNG
ELÉMENT D'ENTRAÎNEMENT ROTATIF DESTINÉ À DÉPLACER UN COUVRE-FENÊTRE

(30) Priority: 17.09.2012 US 201261702093 P; 15.03.2013 US 201313841732
(43) Date of publication of application: 22.07.2015
(73) Proprietor: Current Products Corp., Pensacola, FL 32514 (US)
(72) Inventor: MULLET, Willis Jay, Gulf Breeze, FL 32561 (US); MATTHEWS, Daniel T., Pensacola, FL 32505 (US); FOX, Michael D., Pensacola, FL 32514 (US); LEE, Gerald Ashley, Milton, FL 32570 (US)
(74) Representative: EIP
(86) International application number: PCT/US2013/060205
(87) International publication number: WO 2014/043713

(56) References cited:
- DE-A1- 3 402 122
- JP-A- 2011 062 497
- KR-A- 20100 006 476
- US-A- 4 832 104
- US-A1- 2011 146 922
- US-B1- 7 104 305

## Description

### CROSS-REFERENCE TO RELATED APPLICATIONS

The present application claims the benefit of U.S. Provisional Patent Application Serial. No. 61/702,093, filed September 17, 2012 and claims the benefit of U.S. Patent Application Serial No. 13/841,732, filed March 15, 2013, which claims the benefit of U.S. Provisional Patent Application Serial. No. 61/702,093, filed September 17, 2012.

### FIELD OF THE INVENTION

Embodiments of the present invention relate generally to a window covering assembly used to cover windows. Specific embodiments of the invention relate to a window covering assembly with a rotatable drive element that has a structure formed into or on the outer surface of the rotatable drive element such that a window covering moves axially along the rotatable drive element when the rotatable drive element rotates. Further specific embodiments relate to a window covering assembly in which two different curtains are operated by the same rotating drive element such that the user is able to independently move each curtain.

### BACKGROUND OF THE INVENTION

Window coverings, such as curtains, are frequently used to provide privacy and to limit the amount of light that is permitted to pass through a window and into a room.

There are numerous types of window coverings known in the art. Curtains can be composed of panel(s) of fabric. For example, a curtain may be a single panel curtain that opens and closes from left to right. There is also a center closing curtain that is composed of two fabric panels that meet in the center of the window to close and cover the window.

Many different types of fabrics may be used depending on the user's needs and preferences. For example, sometimes it is necessary not only to cover but to also fully blackout the window such that no light passes through. In this instance, a blackout curtain composed of opaque fabric that completely darkens the window may be useful. There may also be other situations, however, where some light is desired and some visibility is desired. A sheer curtain composed of a translucent fabric may be useful in this instance.

The curtain panels are attached to and suspended from a transverse curtain rod that is hung above the window. The panels are usually joined to the curtain rod by hooks or rings. The curtains are able to be moved manually across the curtain rod(s) as desired by a pull rod or the like to either cover or uncover the window.

There are various mechanisms, both electrical and manual, to mechanically move a curtain back and forth across an opening. Typical designs use a curtain guide track where the curtains are suspended. Some curtain assemblies use a series of pulleys, cables, and belts to move the curtain. In some cases these mechanisms are motorized. In these cases, the number of components used adds complexity to the assembly and also increases the cost of the assembly.

Many different types of fabrics may be used depending on the user's needs and preferences. For example, sometimes it is preferred to not only cover but to also fully blackout the window such that no light passes through. In this instance, a blackout curtain composed of opaque fabric that completely darkens the window may be useful. There may also be other situations, however, where some light is desired and some visibility is desired. A sheer curtain composed of a translucent fabric may be useful in this instance.

A sheer curtain is often hung with a blackout curtain on the same window to accommodate different preferences for light and visibility at different times. For example, a blackout curtain may be used to block out unwanted early morning sun. The blackout curtain may then be opened to allow the sun to filter through the sheer curtain later in the day. When a blackout curtain is hung with a sheer curtain, utility bills may also be lowered by using the different curtains to keep a home cool or warm, depending on the weather.

Hanging two different curtains, however, requires the installation of two different curtain guide tracks, one guide track for each curtain. If two curtains are hung from the same curtain guide track, there is not the ability to move one curtain without moving the other curtain and it prevents both curtains from being in the deployed position simultaneously.

Therefore, it would be advantageous to have a simple curtain assembly that will move a curtain from the deployed position to the stored position with the minimum number of components that can be motorized as well as manually operated. It would further be advantageous to have a dual curtain assembly that will move two separate curtains.

### SUMMARY OF THE INVENTION

Embodiments of the present invention relate to a window covering assembly. For convenience, various embodiments will be described with respect to curtains with the understanding that the description applies to other window coverings as well. Embodiments of the window covering assembly include a drive element extending a length from a first end to a second end, the drive element having at least one guide structure formed on or into the outer surface of the drive element; wherein the at least one guide structure includes at least one clockwise helical groove;
wherein the at least one guide structure includes at least one counterclockwise helical groove; wherein the at least one clockwise helical groove and the at least one counterclockwise helical groove periodically intersect one another along a length of the drive element; a first drive attachment element having a corresponding structure that communicates with one or more of the at least one guide structure to move the first drive attachment element axially along the drive element when the drive element is rotated about a longitudinal axis of the drive element; wherein at least a portion of the drive element is hollow; wherein the outer surface of the drive element has a circular cross sectional shape; and further comprising a rotation assembly for rotating the drive element, the rotation assembly comprising a motor having an axis of rotation, wherein the longitudinal axis of the drive element is aligned with the axis of rotation of the motor. The assembly provides more control to an operator without affecting the overall structure of the assembly significantly.

In some embodiments of the invention, the guide structure forms a helical pattern on the rotatable drive element and the corresponding structure is a tooth that is moved by the groove when the drive element is rotated. The guide structure can also be a ridge or other structure that can cause the corresponding structure to move axially along the drive element when the drive rotates.

In specific embodiments the drive element can be a tube.

In specific embodiments, the window covering assembly includes a curtain wherein a first end of the curtain is fixed and a second end of the curtain is connected to the drive attachment element.

In specific embodiments, the window covering assembly includes a pull rod connected to the first drive attachment element, wherein the first drive attachment element is disengaged from the at least one guide structure of the drive element by applying force on the pull rod such that the first drive attachment element does not move axially along the drive element when the drive element is rotated.

In specific embodiments, rotating the drive element clockwise moves the first drive attachment element in a first axial direction along the drive element, rotating the drive element counter-clockwise moves the first drive attachment element in a second axial direction along the drive element; and the second axial direction is opposite to the first axial direction.

In specific embodiments, the motor is mounted within the hollow portion of the drive element. Embodiments of the invention relate to cutting one or more grooves in a cylindrical element.

DE-A-3402122 describes a device for controlling the opening and closing of curtains or drapes of the type having two portions which are moved in opposite directions to one another in a simple and efficient manner, wherein the opening and closing of curtains and drapes is operated under the action of a chain or cord.

U.S. Patent No. 4,125,057 (Cox) teaches a motor driven milling and boring machine used primarily for forming screw threads of any selected pitch, external to cylindrical or conic projection or within similar-shaped bore of workpiece, particularly workpieces such as are too large or irregular-shaped to be themselves rotated. A tubular housing, upstanding or tiltably disposable, journals a longitudinally displaceable and rotatable hanger which in turn axially journals a power-driven spindle having a selectively offset-positionable stub portion,
terminally carrying a thus radially extensible drive segment which distally positions a rotary milling cutter. A second or planetary tracking motor jointly operates a pair of selectively coupled ring gears of the housing, which in conjunction with a master nut fixed along the housing axis, move the hanger respectively annularly and axially so that the distal cutter may follow a helical path, the pitch of which path is determined by the chosen velocity ratio give the two ring gears. A particular velocity ratio results from the choice of gearing assembled in a detachable twin-segment gear train cassette insertable between the pair of ring gears. While remaining in place, the gear train may be disengaged from one drive component of the hanger to enable arcuate resetting for production of multi-start threads, or alternately to provide annular or linear movement of the cutter. A collar-shaped electromagnetic support base has associated tactile means for centering it, and hence centering the milling machine subsequently mounted thereupon, relative to the preformed bore of a workpiece which is to be threaded. Radial thrust-retraction means are provided for quick-withdrawal of a cutter head from a workface so that it can then be lifted out of a bore without retracing the helical entrance path.

U.S. Patent No. 4,212,568 (Minicozzi) teaches a rotary cutting tool blank comprising a cutting portion having a longitudinal axis and a plurality of teeth extending the length of said cutting portion, with each of the teeth having a cutting face and a trailing face and a land surface bridging the cutting and trailing faces. The land surfaces are interrupted by a plurality of spaced transverse depressions of relatively large radius arcuate cross section to form a plurality of cutting edge portions at the junction of the cutting face and the uninterrupted portions of the land surface. The cutting edge portions have a positive rake angle, and the trailing and cutting faces of each tooth have surfaces which undulate generally sinusoidally from one end of the cutting portion to the other so that the rake angle of each cutting edge portion varies continuously along its length. The cutting tool blank can be transformed to a cutting tool ready for use simply by suitably relieving the land surfaces to form cutting edges at the aforementioned cutting edge portions.

U.S. Patent No. 4,996,861 (Kellum) teaches an apparatus including an externally threaded spindle to which one end of a thin walled metal tube is detachably secured. The spindle is rotated to wind the tube into the external thread, thereby producing a helix. As the tube is wound onto the spindle, it is pressed into the thread grooves by an auxiliary roller.

U.S. Patent No. 5,263,381 (Shirai) teaches a ball screw comprising a threaded rod and a ball nut making a rectilinear motion around the rod as the rod is rotated. A first load ball groove and a second load groove which have an offset relation to each other are formed in the inner surface of the ball nut. A pre-load is imparted to ball bearings rolling in these two load grooves. The ball nut has a resilient portion between the first and second load ball grooves. The resilient portion can be displaced axially. Any excessive pre-load created by the error introduced either in the lead of the ball-rolling groove or in the lead of the first or second load ball groove is absorbed by the resilient portion. Consequently, the novel ball screw is superior in accuracy to the prior art ball screw, and is easier to fabricate.

U.S. Patent No. 5,775,187 (Nikolai et al) teaches a method of machining and a tool is used for obtaining patterns in the form of alternating ridges, pads, cells, and ridges of a triangular cross section on the surface of a blank. The method facilitates selection of the geometrical parameters of the tool and the machining mode for the tool to obtain alternating ridges and depressions with parallel sides of the profile at predetermined intervals and predetermined heights and angles of slope. The width of the space between projections can be varied in the range of millimeters and micrometers.

U.S. Patent No. 5,971,045 (Watanabe) teaches a veneer lathe comprising a knife (2) for peeling a log (1), which is secured rotatably to a knife stock, and a roller bar (3) disposed to press a circumferential surface of the log (1) at an upstream side, in relative to said knife (2), of a rotational direction of the log (1). The roller bar (3) has a diameter of not more than 30 mm, and is provided on the circumferential surface thereof with a large number of projections (5) whose height is not higher than the circumferential surface of the roller bar (3). The roller bar (3) is sustained in a sliding bearing (9) and adapted to receive a rotational force from a driving source. The roller bar (3) functions not only as a pressure bar but also as a power transmitting media to rotate the log (1), thereby preventing the generation of lathe check of veneer to be produced.

U.S. Patent No. 6,186,756 (Kojima) teaches a rotor 1 forming screw teeth projectingly provided at its outer end 2 on the axis thereof with a center shaft 3. The center shaft 3 is provided at its outer end 4 with a smaller-diameter shaft 5 or a concaved fitting hole. A separate rotor shaft 6 which is to be fitted over the smaller-diameter shaft 5 or fitted into the concaved fitting hole is provided with another concaved fitting hole 7 or smaller-diameter shaft. A metal shaft around which synthetic resin is molded is formed at its peripheral surface with a spiral groove or corrugated groove in the opposite revolutional direction with respect to the revolutional direction of the screw rotor. The spiral groove is formed with smooth arc curved line connecting profiles of adjacent grooves. The shaft is provided with a step, and synthetic resin is molded around the shaft surface to form a screw rotor.

U.S. Patent No. 6,289,595 (Galestien) teaches the determination of the complete two-dimensional axial cross section of internal and external screw threads and similar workpieces, wherein in a plane through the centerline of the workpiece, two screw thread profiles which are located diametrically opposite each other are measured through two two-dimensional scan measurements in this plane or through arithmetic construction based on two profile depth measurements with a measuring ball or measuring wire, further on the basis of the assumption that the screw thread profiles in question further have a known dimension and geometry, whereafter these two opposite profiles are linked to each other by performing one or more linked measurements such as, for instance, the outside diameter in the case of external screw thread and the core diameter in the case of internal screw thread. If a proper concentricity of the core diameter, the outside diameter and flank diameter is involved, it may suffice to measure or scan only one profile and one or more linked measurements.

U.S. Patent No. 7,849,769 (Akiyama) teaches a precision roll turning lathe which can form a pattern including three-dimensionally shaped portions, such as three-sided pyramids, on the surface of a roll, with high accuracy. Specifically, a tool post is provided with a tool turning axis (A axis) which is used to turn a tool such that, when forming a spiral groove cut through the roll, a cutting face of a tip of the tool is oriented perpendicular to a direction along which the spiral groove extends.

U.S. Patent No. 8,308,463 (Kataoka) teaches providing a screw rotor including a resin rotor formed around a metallic shaft without generation of cracks. Spiral chamfers are formed on surfaces of metallic shafts around which resin rotors are formed. Preferably the surfaces of the shafts may be sandblasted, and after the surfaces of the shafts are preliminarily coated with resin and then the rotors may be molded.

The prior art teaches several methods to form helical or spiraling grooves in or on the outer surface of a shaft or tube. Some of these methods are complicated and time consuming ways of forming or machining the grooves. Accordingly, there is a need for a method and apparatus for more efficiently and/or more accurately machining grooves in an outer surface of a cylindrical shaft or tube.

These features and aspects of the invention as well as its advantages are understood by referring to the following description, appended claims, and accompanying drawings, in which:
FIG. 1 is a perspective view of one embodiment of the curtain assembly showing a curtain in the deployed position and the window is covered.
FIG. 2 is a perspective view of one embodiment of the curtain assembly showing the curtain in the stored position and the window is not covered.
FIG. 3 is a perspective view of one embodiment of the curtain assembly showing a left hand curtain in the stored position.
FIG. 4 is an enlarged perspective view of one embodiment of the curtain assembly showing a center closing curtain in the deployed position covering the window.
FIG. 5 is an enlarged perspective view of the components of the rotatable drive element according to one embodiment of the curtain assembly in which the rotation of the drive element is powered by a battery operated motor.
FIG. 6 is an enlarged perspective view of the components of the rotatable drive element according to one embodiment of the curtain assembly in which the power supply to the motor is external to the drive element.
FIG. 7 is an enlarged perspective view of one embodiment of the curtain assembly showing the rotatable drive element with a clockwise helical groove.
FIG. 8 is an enlarged perspective view of one embodiment of the curtain assembly showing the rotatable drive element with a counter clockwise helical groove.
FIG. 9 is an enlarged perspective view of one embodiment of the curtain assembly showing the rotatable drive element with a clockwise helical groove and a counter clockwise helical groove.
FIG. 10 is an enlarged perspective view of the drive attachment element according to one embodiment.
FIG. 11 is an enlarged side view of the drive attachment element 36 showing the structure 62 as a tooth according to one embodiment.
FIG. 12 is an enlarged cross-sectional view of the drive attachment element **36** showing the angle of the drive tooth **62** according to one embodiment.
FIG. 13 is an enlarged perspective view of the drive attachment element having a first drive tooth and a second drive tooth according to one embodiment.
FIG. 14 is an enlarged side view of the drive attachment element **36** having a first drive tooth and a second drive tooth according to one embodiment.
FIG. 15 is an enlarged cross-sectional view of the drive attachment element **36** showing the angle of the second drive tooth **90** according to one embodiment.
FIG. 16 is an enlarged cross-sectional view of the drive attachment element **36** showing the angle of the first drive tooth **88** according to one embodiment.
FIG. 17 is a section view of the tube **26** and the drive attachment element **36** showing the engagement of the first drive tooth **88** in the first helical groove **38.**
FIG. 18 is an enlarged end view of a motor drive adapter according to one embodiment of the curtain assembly.
FIG. 19 is an enlarged perspective view of a motor drive adapter according to one embodiment of the curtain assembly.
FIG. 20 is an enlarged perspective view of the rotatable drive element according to one embodiment.
FIG. 21 is an enlarged end view of the rotatable drive element according to one embodiment.
FIG. 22 is an enlarged perspective view of the preferred tube embodiment with the position a section was taken to reflect the two clockwise helical grooves **38** and two counter clockwise grooves **40** in the tube **26.**
FIG. 23 is an end view of the drive element assembly of the preferred embodiment showing the starting points of the clockwise helical grooves **38** and the counter clockwise grooves **40.**
FIG. 24 is the cross section view taken from FIG. 22.
FIG. 25 is the preferred embodiment curtain assembly.
FIG. 26 is a drawing of the functional relationship of the helical grooves **38** and **40** to the midpoint of the drive element to assure the drive attachment elements meet in the midpoint of the drive element on center close draperies.
FIG. 27 is a perspective view of one embodiment of the curtain assembly when the outer curtain is a blackout curtain in the deployed position and the inner curtain is a sheer curtain in the deployed position.
FIG. 28 is a perspective view of one embodiment of the curtain assembly when the outer curtain is a blackout curtain in the stored position and the inner curtain is a sheer curtain in the deployed position.
FIG. 29 is a perspective view of the embodiment of the curtain assembly when both the outer and inner curtains are in the stored position.
FIG. 30 is a perspective view of the preferred embodiment with the outer curtain is a blackout curtain with a portion cut away to show the position of the external battery pack from FIG. 6.
FIG. 31 is an enlarged perspective view of the components of the rotatable drive element according to one embodiment of the curtain assembly showing an internal battery power supply.
FIG. 32 is an enlarged perspective view of the components of the rotatable drive element according to one embodiment of the curtain assembly show an external power supply.
FIG. 33 is a cross-sectional view of the drive section of the rotatable drive element showing the helical groove and a non-driving groove according to one embodiment of the curtain assembly.
FIG. 34 is an enlarged perspective view of one embodiment of the curtain assembly non-driving groove.
FIG. 35 is an enlarged perspective view of one distal end of the rotatable drive element showing the inner drive attachment element and the inner driver stall area according to the same embodiment of the curtain assembly shown in FIG. 34.
FIG. 36 is an enlarged side view of the inner drive attachment element according to one embodiment of the curtain assembly.
FIG. 37 is an enlarged perspective view of the inner drive attachment element according to one embodiment of the curtain assembly.
FIG. 38 is an enlarged sectioned view of the inner drive attachment element according to one embodiment of the curtain assembly.
FIG. 39 is an enlarged side view of the inner drive attachment element according to one embodiment of the curtain assembly.
FIG. 40 is an enlarged perspective view of the inner drive attachment element according to one embodiment of the curtain assembly.
FIG. 41 is an enlarged sectioned view of the inner drive attachment element according to one embodiment of the curtain assembly.
FIG. 42 is an enlarged perspective view of an outer idler attachment element according to one embodiment of the curtain assembly.
FIG. 43 is an enlarged sectioned view of an outer idler attachment element according to one embodiment of the curtain assembly.
FIG. 44 is an enlarged side view of an outer idler attachment element according to one embodiment of the curtain assembly.
FIG. 45 is an enlarged side view of an outer drive attachment element according to one embodiment of the curtain assembly.
FIG. 46 is an enlarged sectioned view of an outer drive attachment element according to one embodiment of the curtain assembly.
FIG. 47 is an enlarged perspective view of an outer drive attachment element according to one embodiment of the curtain assembly.
FIG. 48 is an end view of the curtain assembly showing the guide track, guides, attachment elements, and the position of the inter-curtain engager.
FIG. 49 is a is a perspective view of a curtain assembly according to one embodiment when the outer curtains are center closing blackout curtains in the stored position and the inner curtains are center closing sheer curtains in the deployed position.
FIG. 50 is a perspective view of a curtain assembly according to one embodiment when the outer curtains are center closing blackout curtains in the deployed position and the inner curtains are center closing sheer curtains in the stored position.
FIG. 51 is a perspective view of the tube end with the inner driver stall area.
FIG. 52 is a top view of the curtain assembly with the guide track removed to see the position of the guides and attachment elements with the inner and outer curtains deployed and the outer drive attachment element can stop the tube from rotation when it stalls against the inner attachment element in the stall area.
FIG. 53 is a top view of the curtain assembly with the guide track removed to see the position of the guides and attachment elements with the inner curtains deployed and the inter-curtain engager is in the engage-outer-drive-attachment-element position and the inner drive attachment element is in the stall area.
FIG. 54 is a top view of the curtain assembly with the guide track removed to see the position of the guides and attachment elements with the inner and outer curtains in the stored position and the outer simple attachment elements and the outer drive attachment element are in the non-driving or stall area. The inner curtain drive attachment element can stop the tube from rotation when it contacts the outer curtain drive attachment element.

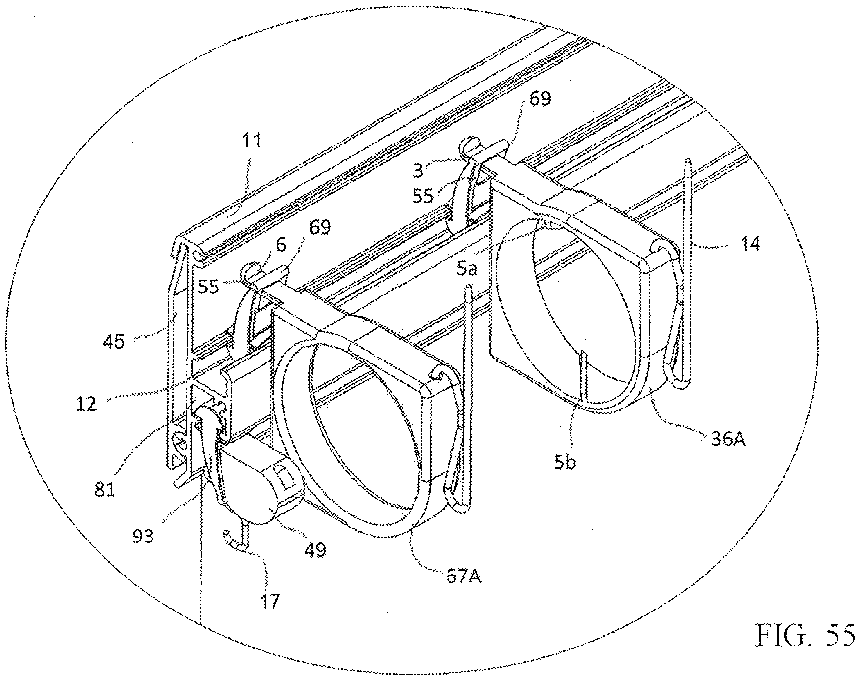

FIG. 55 is a perspective view of the area where the outer attachments are stored with the tube, inner and outer curtains removed to show the position of the inter-curtain engager and the carrier tracks.

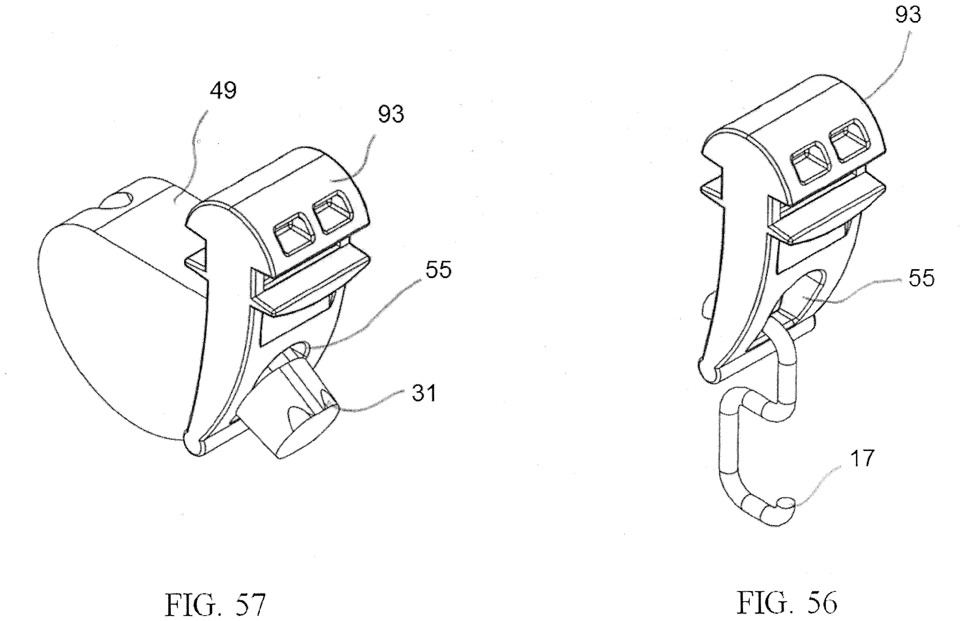

FIG. 56 is a perspective view of the inner curtain carrier and S-hook.
FIG. 57 is a perspective view of the inner curtain carrier with the inner curtain engager.

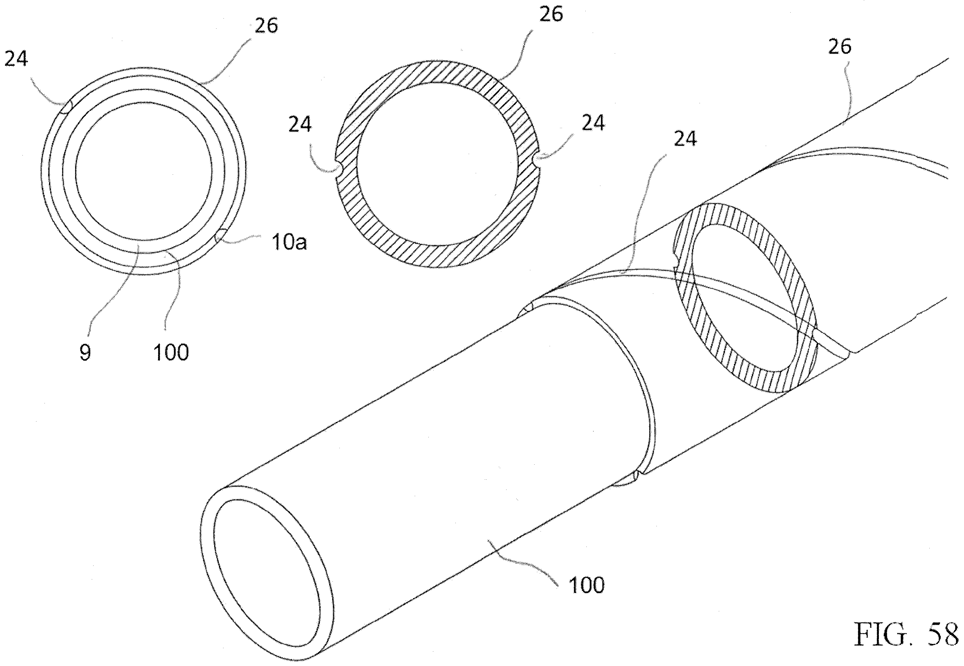

FIG. 58 is three views of the preferred tube embodiment with an outer driver stall area and two helical grooves spaced 180 degrees apart.
FIG. 59 is another tube embodiment with four helical grooves, two are counter clockwise spaced 180 degrees apart and two are clockwise spaced 180 degrees apart.
FIG. 60 is another embodiment of a tri-lobed tube, drive element, and internal tube driver.

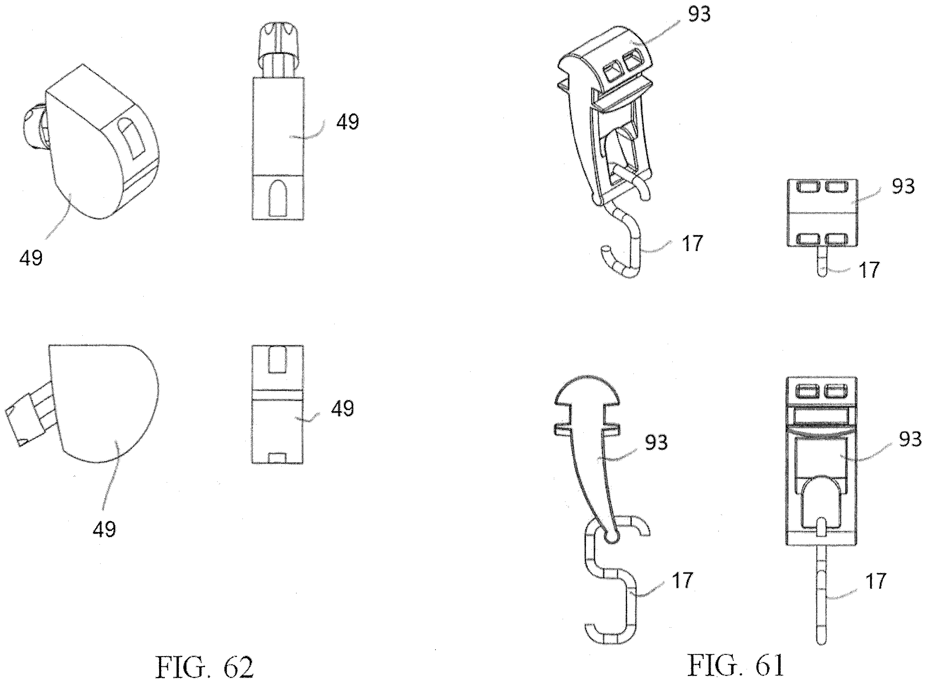

FIG. 61 shows four views of the inner curtain carrier and S-hook.
FIG. 62 shows four views of the inter-curtain engager.
FIGS. 63A-63L show flowcharts for the control system for specific embodiments of the invention.

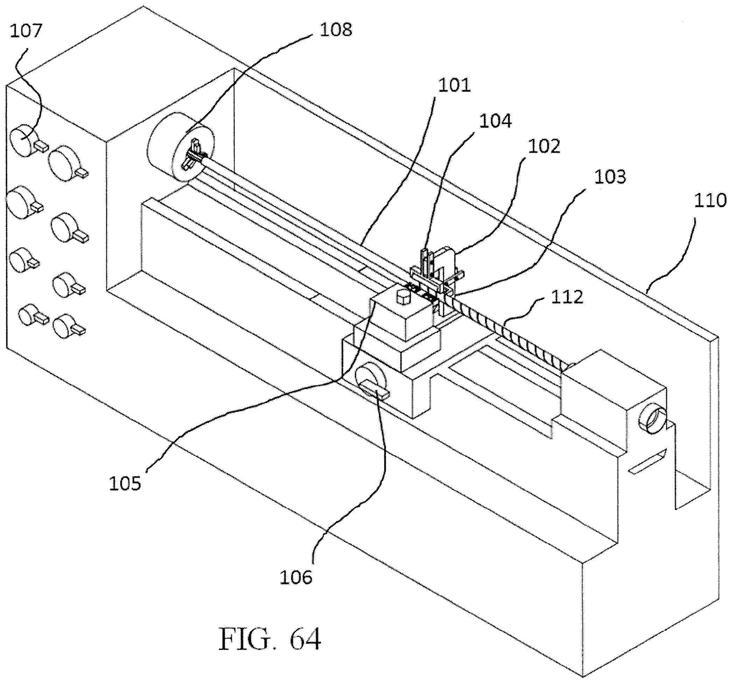

FIG. 64 is a perspective view of an apparatus for cutting one or more grooves in a cylindrical element, where the apparatus is cutting a unidirectional set of grooves.

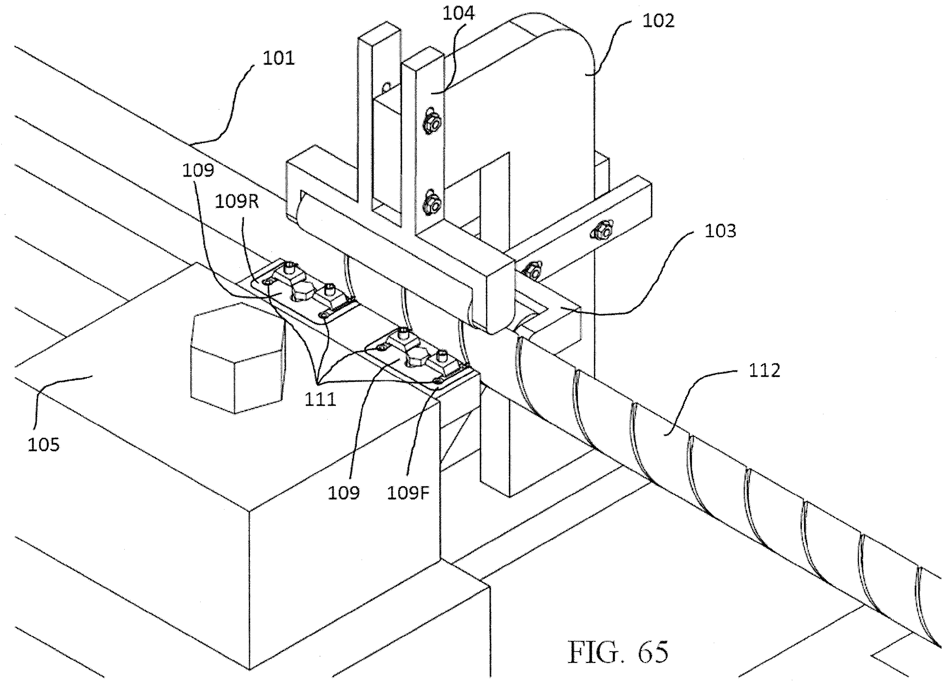

FIG. 65 is an enlarged perspective view of the embodiment shown in Figure 64.

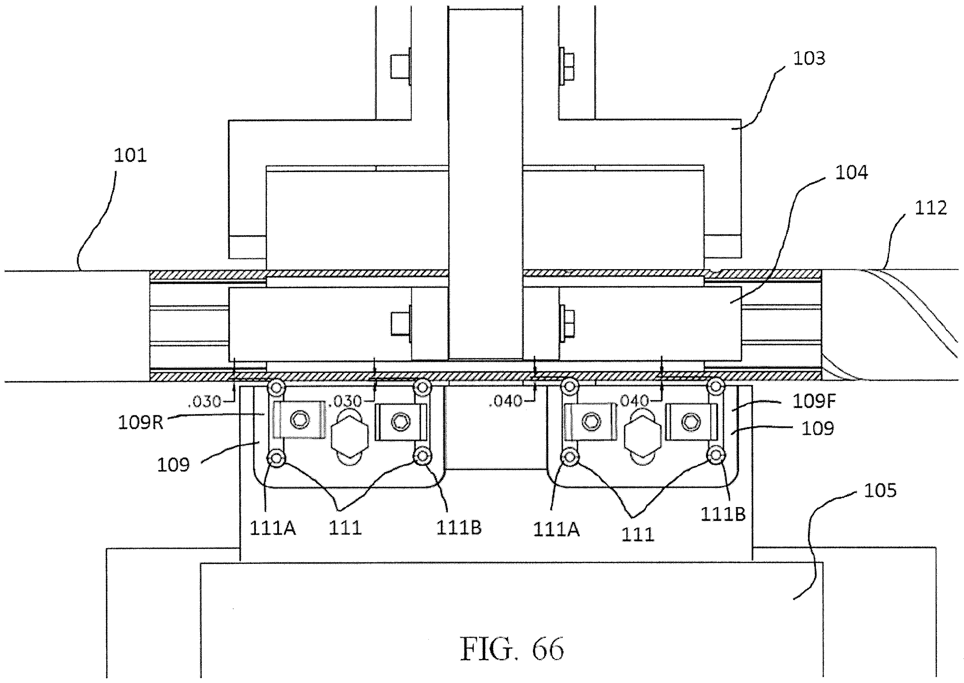

FIG. 66 is an enlarged top view of the embodiment shown in Figure 64, showing the tool holder, with a portion of a cylindrical tube shown with a cutaway in order to show the placement of the tools.

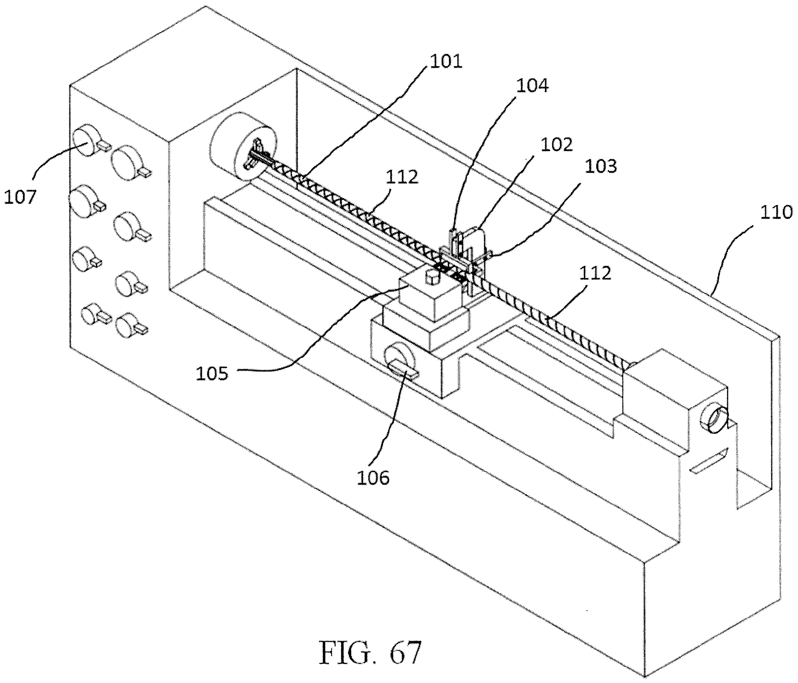

FIG. 67 is a perspective view of the apparatus of Figure 64, where the apparatus is cutting bidirectional sets of grooves.

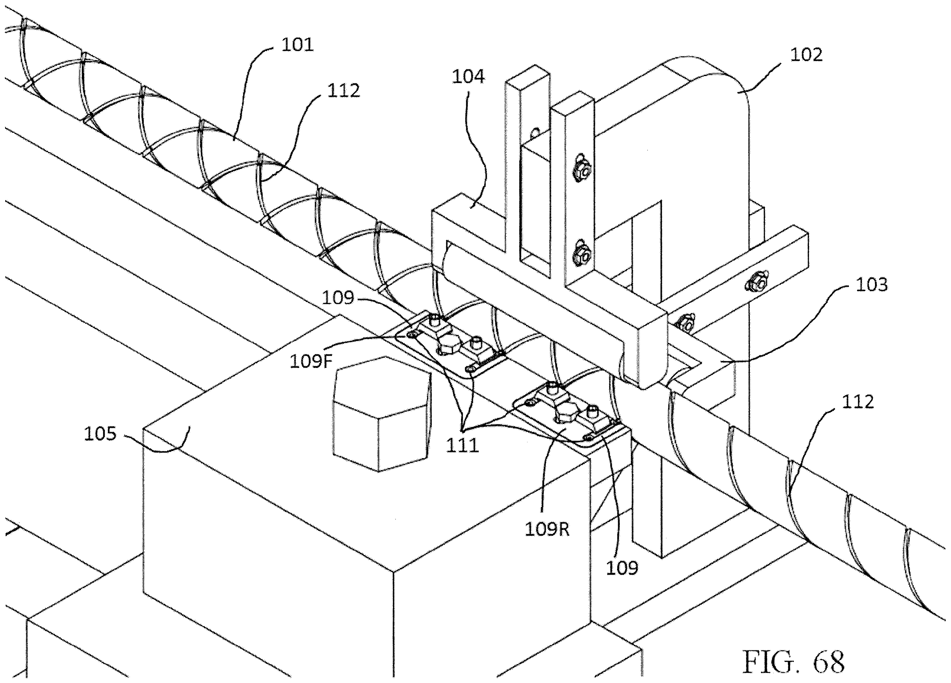

FIG. 68 is an enlarged perspective view of the embodiment shown in Figure 67.

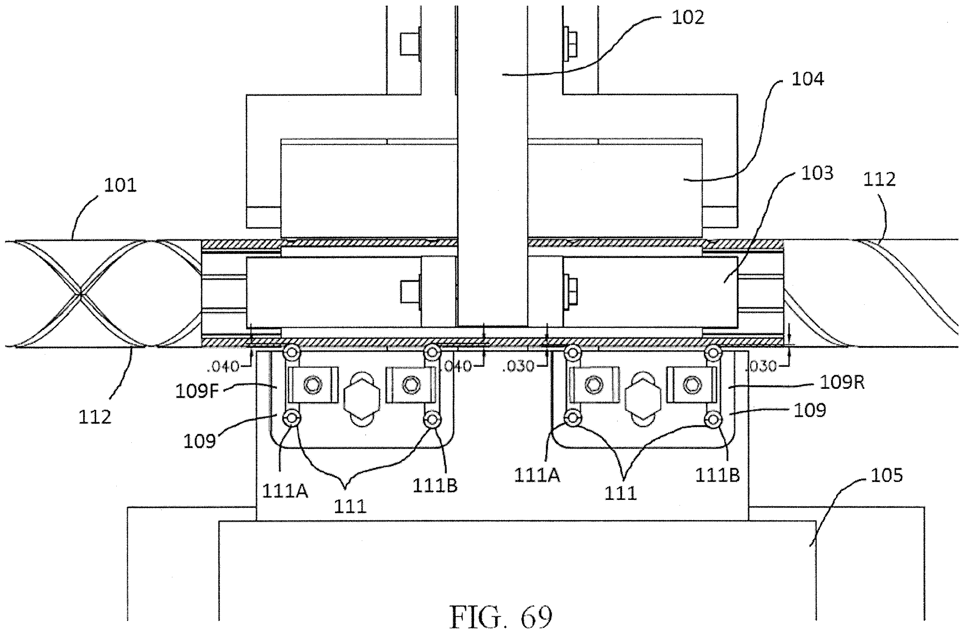

FIG. 69 is an enlarged top view of the tool holder, with a portion of a cylindrical tube shown with a cutaway in order to show the placement of the tools.

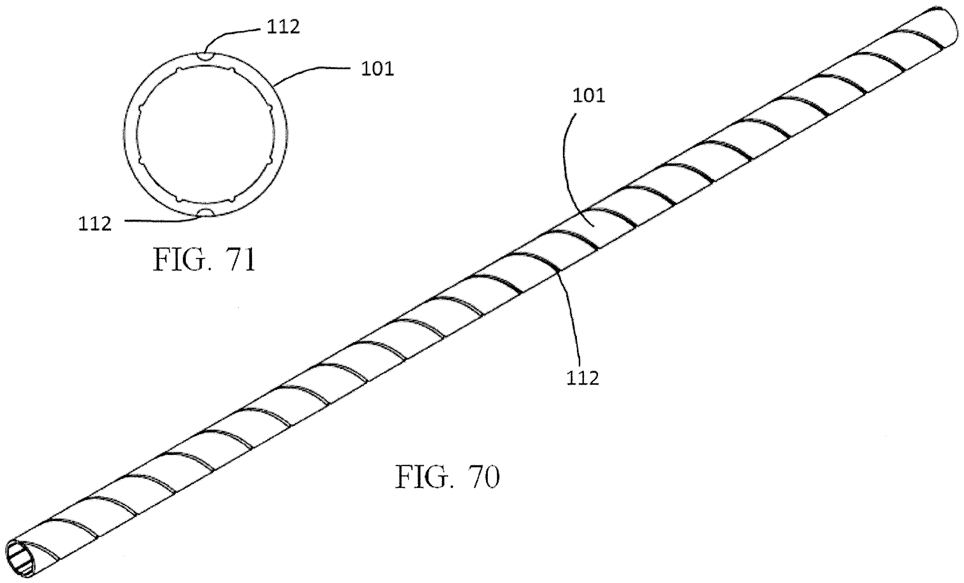

FIG. 70 shows a unidirectional pair of grooves cut in a cylindrical tube in accordance with an embodiment of the subject invention.
FIG. 71 is an enlarged end view of the cylindrical tube of Figure 70.

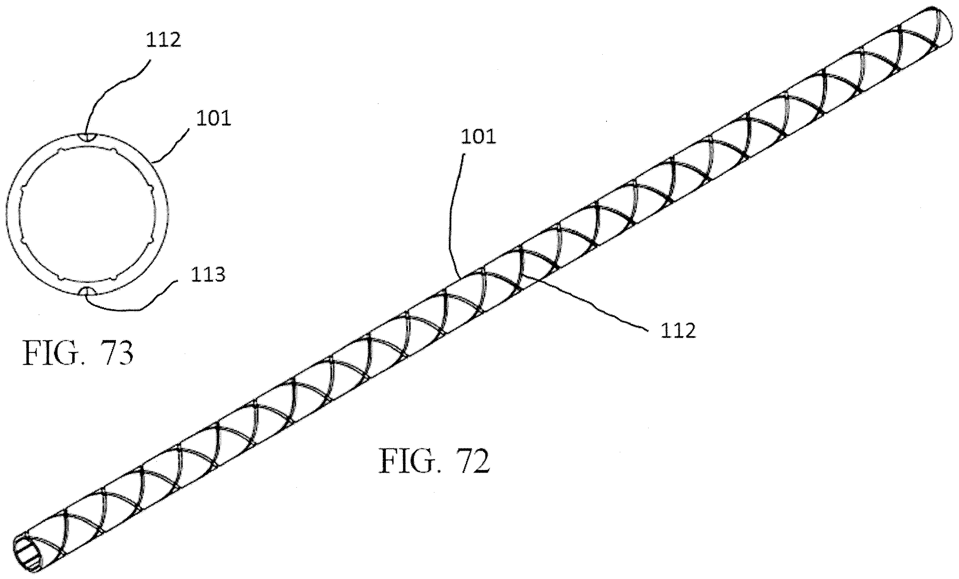

FIG. 72 shows two bidirectional pairs of grooves cut in a cylindrical tube in accordance with an embodiment of the subject invention.
FIG. 73 is an enlarged end view of the cylindrical tube of Figure 72.

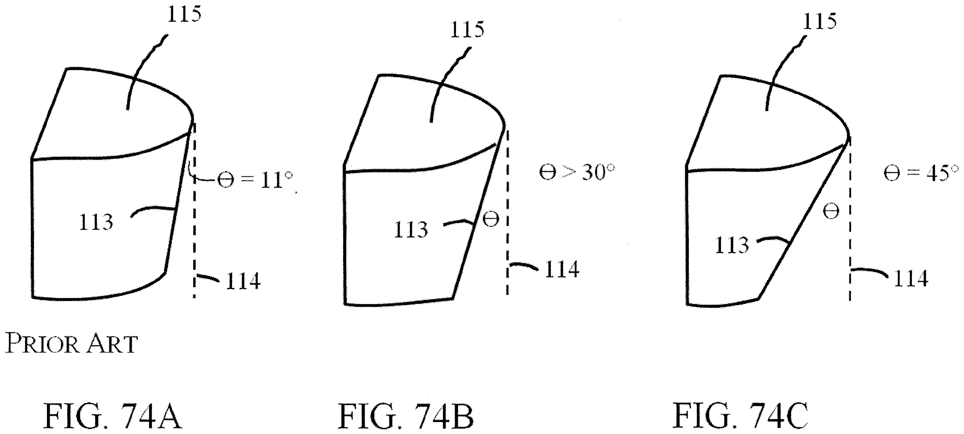

FIG. 74A shows an embodiment of a prior art bit or tool.
FIG. 74B shows an embodiment of a bit or tool in accordance with a specific embodiment of the subject invention.
FIG. 74C shows an embodiment of a bit or tool in accordance with a specific embodiment of the subject invention.

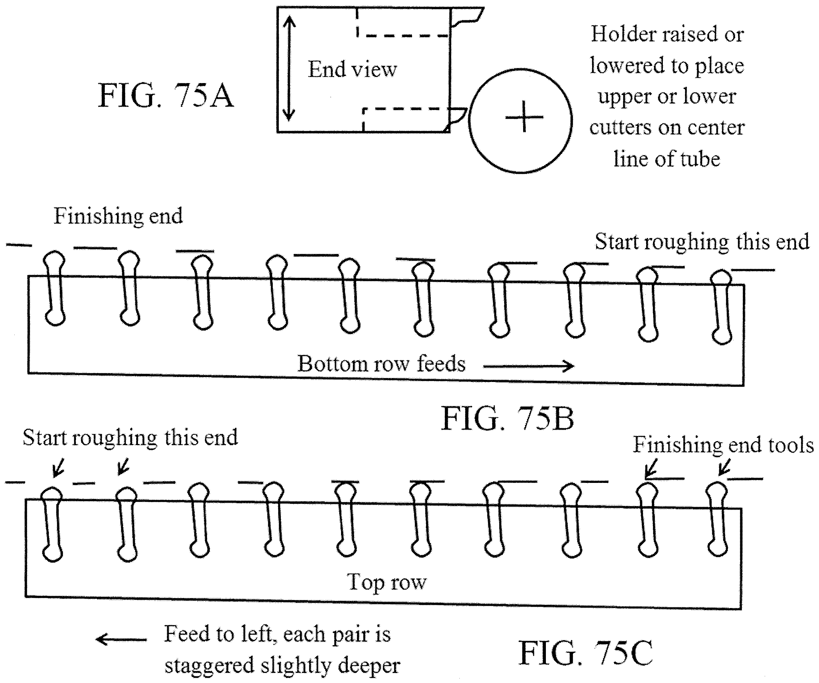

FIGS. 75A, 75B, and 75C show an embodiment of a tool holder that incorporates two rows of tools.

### DETAILED DESCRIPTION

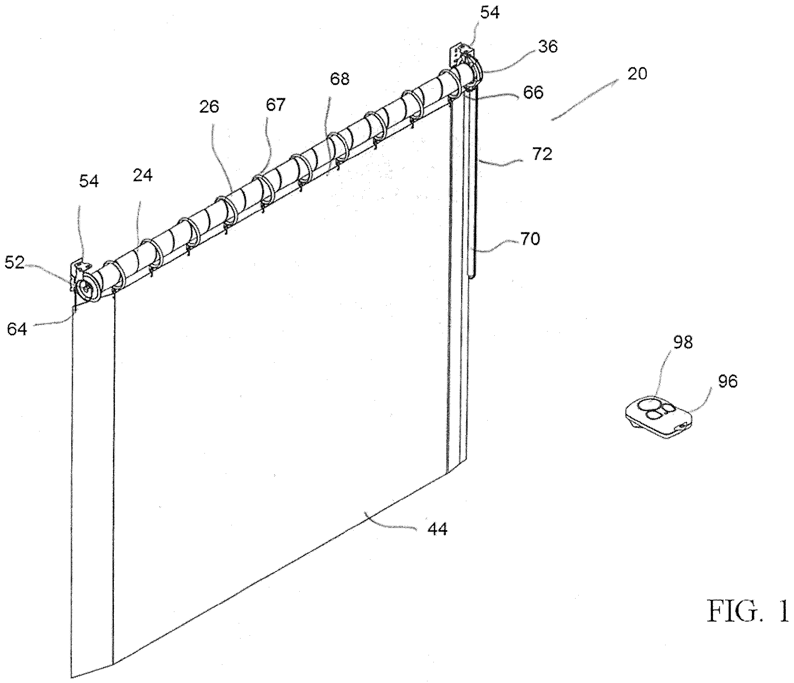

Referring to FIG. 1, a curtain assembly **20** according to one embodiment of the invention is shown. The curtain assembly **20** comprises a rotatable drive element **22** wherein a helical guide structure **24** is formed into the outer surface **26** of the drive element **22,** a drive attachment element **36** having a corresponding structure **62** that communicates with the helical guide structure **24** to move the drive attachment element **36** axially along the drive element **22** when the drive element **22** is rotated and a rotation assembly **32** (not shown) for rotating the drive element **22.** In some embodiments of the invention, the helical guide structure **24** is a helical groove **24** and the corresponding structure **62** is a tooth. While the helical guide structure **24** is shown in FIGS. 1-3 as a helical groove, the helical guide structure **24** is not limited to a groove. Similarly, the corresponding structure **36** discussed in the embodiments below is a tooth **62** but is not limited to being a tooth. In some embodiments, one or more curtain supports **67** supported by the rotatable drive element **22** can also be utilized to support the curtain. The drive attachment element **36,** as shown in FIGS. 1-3 will be explained further below.

### DESCRIPTION OF CURTAINS

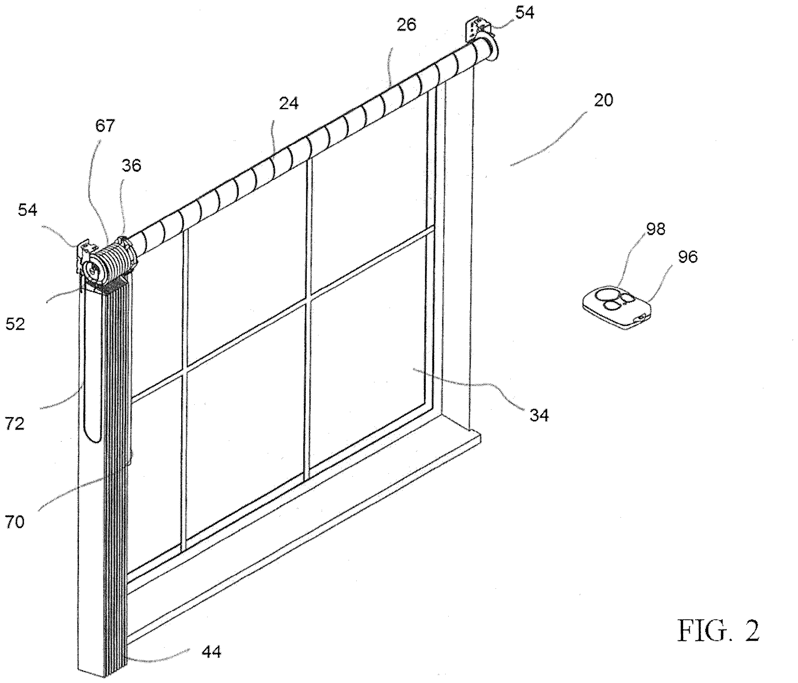

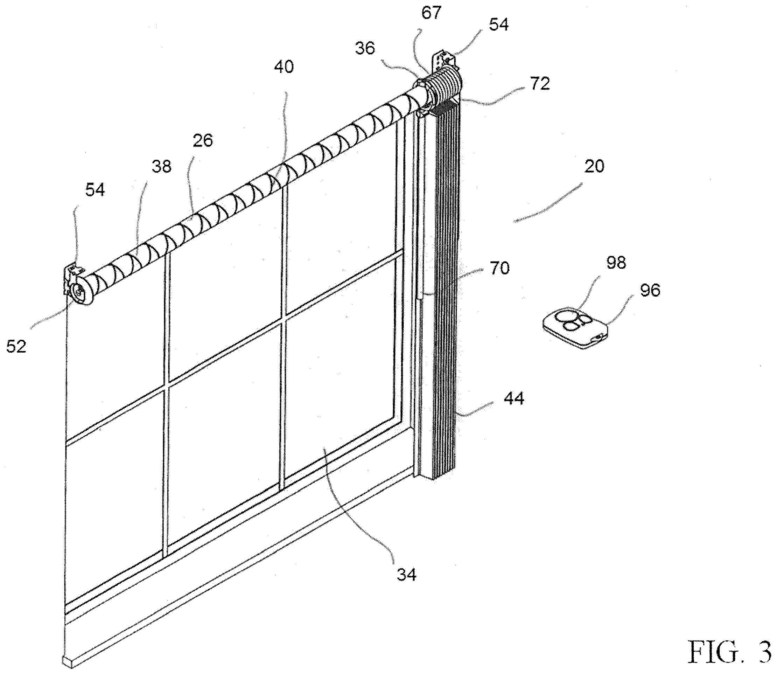

As shown in FIG. 1, the curtain **44** used is composed of a single continuous panel of fabric that moves back and forth across the drive element **22** to the deployed position (covering the window) and to the stored position (not covering the window **34**). The curtain **44** may extend to the right to the deployed position (covering the window **34**) and then gather to the left to the stored position, uncovering the window **34.** This is shown in FIGS. 1 and 2. For example, FIG. 1 shows that a curtain **44** extended to the right (deployed position) to cover the window **34** and FIG. 2 shows the curtain **44** gathered to the left (stored position) to uncover the window **34.** In other embodiments, the curtain **44** may extend to the left to the deployed position (covering the window **34**) and then gather to the right to the stored position (uncovering the window **34**). For example, FIG. 3 shows a curtain assembly **20** wherein the curtain **44** is gathered to the right (stored position) to uncover the window **34.** Although not shown, the curtain **44** in FIG. 3 would extend to the left to the deployed position to cover the window **34.**

Again, although curtain is used to describe a preferred embodiment of the invention, other embodiments utilize other window coverings, such as verticals and draperies.

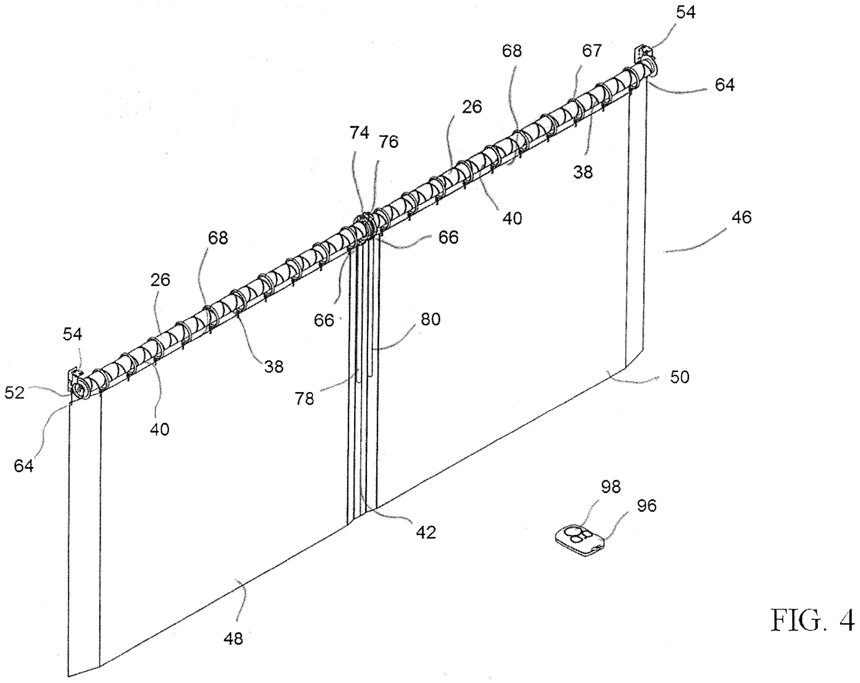

In some embodiments, the curtain **44** may be a center closing curtain **46.** A center closing curtain **46** is composed of two fabric panels, a right panel **50** and a left panel **48** that meet in the center **42** of the window **34** to close and cover the window **34.** FIG. 4 shows a curtain assembly **20** where a center closing curtain **46** is used and is in the deployed position. The window **34** is covered in this instance. For example, the right panel **50** extends to the left to the center of the window **42.** The left panel **48** extends to the right to the center of the window **42.**

### DRIVE ELEMENT

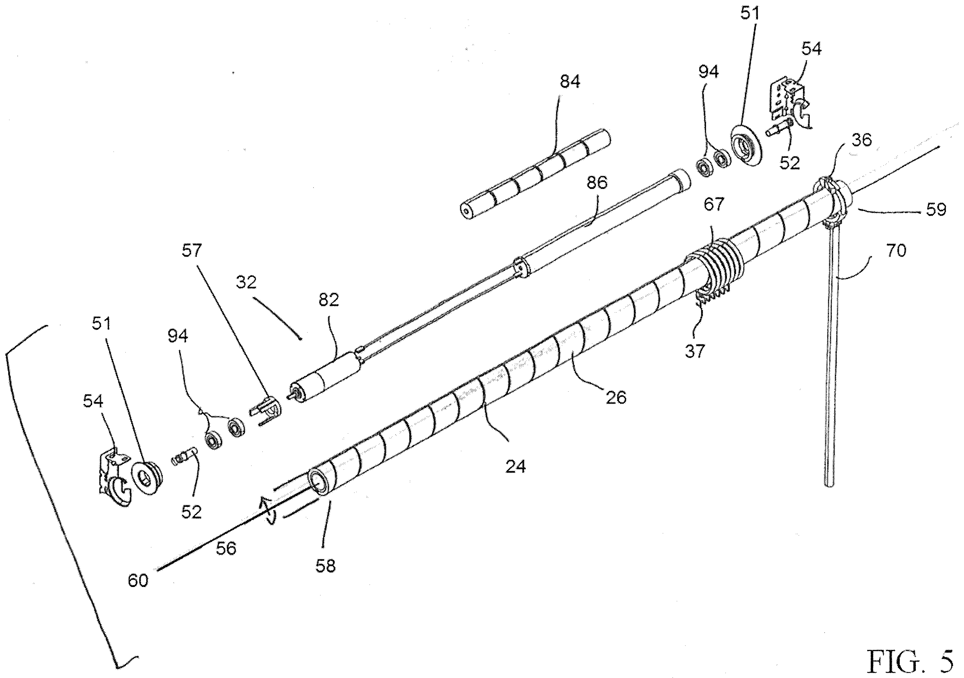

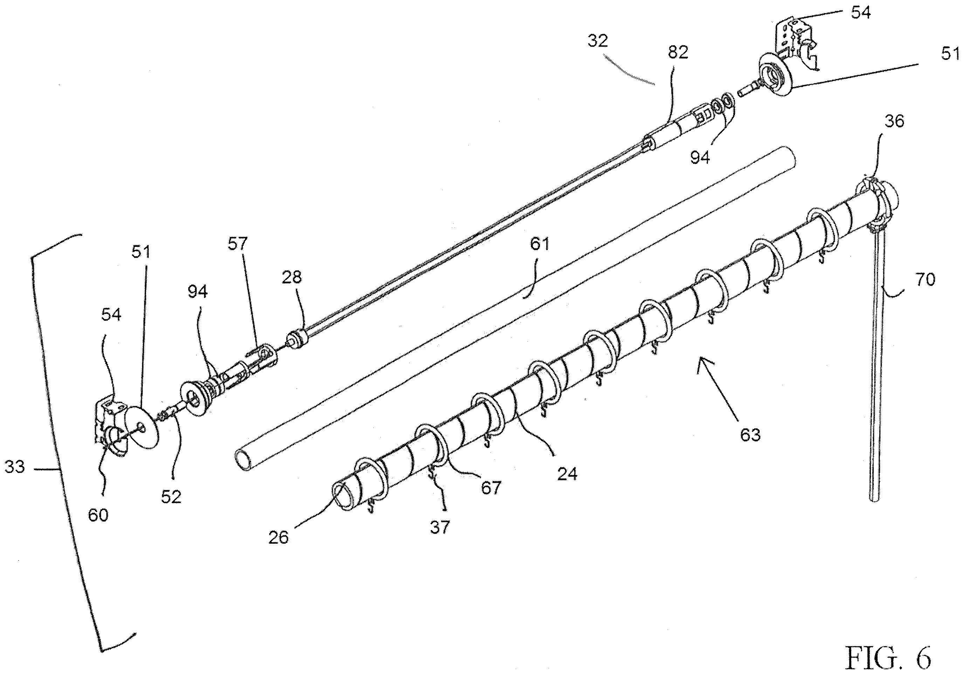

The curtain assembly **20** includes a drive element **22.** FIGS. 5 and 6 show one embodiment of the drive element **22** in detail. A curtain **44** can be connected to the drive element **22** by one or more curtain supports **36** and **67** as explained below. Alternatively, at least a portion of the curtain can be supported by another structure adjacent to the rotatable drive element **22,** such as a support guide (not shown).

The rotatable drive element **22** is designed to be installed above a window **34,** or near the top of the window **34,** similar to a traditional curtain rod. For example, as shown in FIG. 1, drive element **22** is mounted on axles **52** that are located and secured in the end brackets **54.** The end brackets **54** are adapted for connection with, for example, a window frame, sash, or wall. The end brackets **54** may also include a rubber mounting disk **13,** not shown, that is compressed, and, optionally, inserted into a finial **95** or other structure to create friction, when the drive element **22** is installed, to hold the drive element **22** firmly in place and minimize noise.

The drive element **22** may vary in size. For example, the drive element **22** may be the width of the window **34,** narrower than the window **34,** or wider than the window **34.** The outer diameter **56** of the drive element **22** may similarly vary. In specific embodiments, the drive element has an outer diameter of the drive element that is 1 inch, 1 ¼ inches, 1 ½ inches, 2 inches, 1-2 inches, 1-1 ½ inches, 1 ½ - 2 inches, less than 1 inch, and/or greater than 2 inches. In some embodiments, the drive element **22** has a hollow portion that is sized to mount a motor **82** inside the hollow portion of the drive element **22** rather than mounting the motor **82** outside the drive element **22.** Using the inside of the drive element **22** to conceal the motor **82** may give a more aesthetically pleasing design for a curtain assembly **20.** Any number of materials, such as aluminum, other metals or alloys, plastics, wood, and ceramics, may be used to fabricate the drive element **22** provided the drive element **22** can support the weight of the curtain **44.**

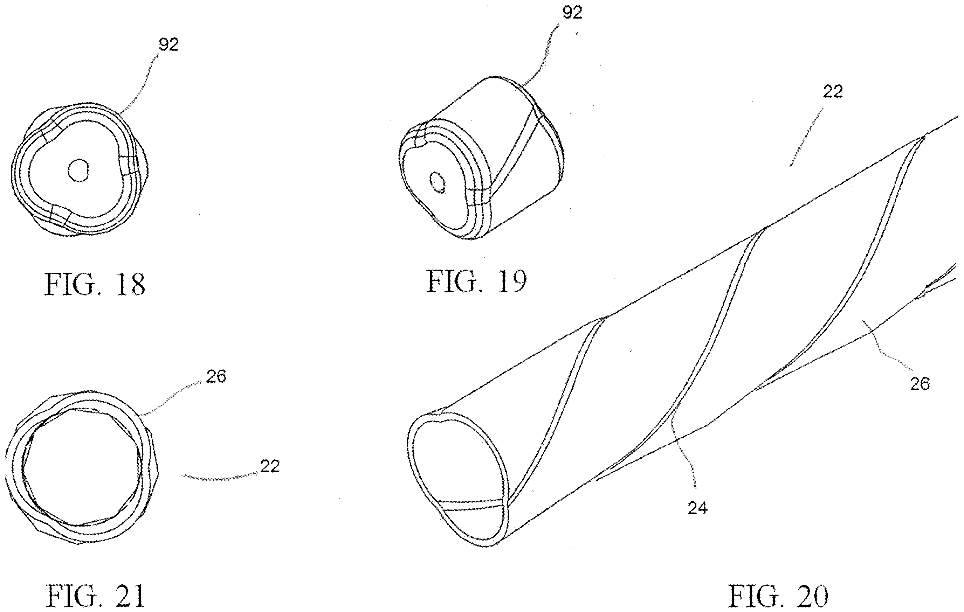

Although the FIGS. 5 and 6 show the outer surface of the drive element **22** as cylindrical in shape, the cross-sectional shape of the drive element **22** is not limited and may be non-circular. In an alternative embodiment, as shown in FIGS. 20 and 21, the rotatable drive element **22** may be tri-lobed.

### GUIDE STRUCTURE

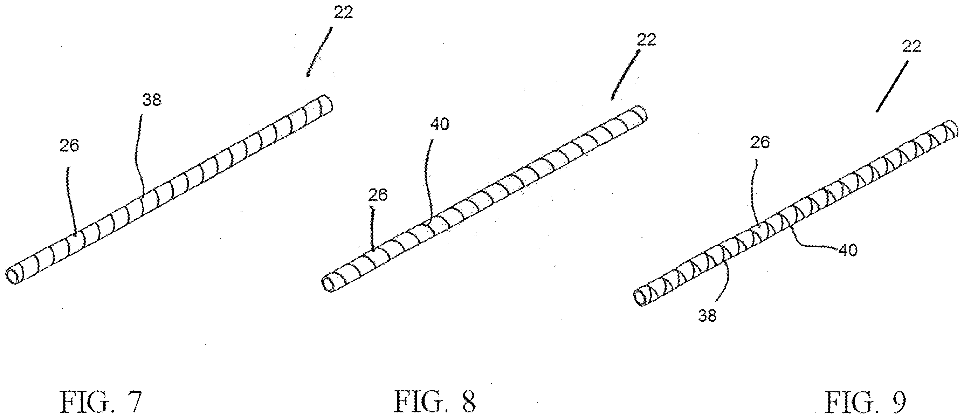

The drive element **22** has at least one guide structure **24** formed, for example, on, or into, the outer surface **26** of the drive element **22.** For convenience, as a preferred embodiment employs a one or more helical guide structure, it is understood that descriptions of embodiments of the invention having helical guide structures also applies to embodiments having guide structures with other patterns. A preferred guide structure **24** is a helical guide structure **24.** Such a guide structure may be a groove in some embodiments, as shown in FIGS. 7-9. The helical guide structure **24,** however, is not limited to being a helical groove. For example, the guide structure **24** may be a ridge, protrusion, or other structure that can communicate with the corresponding structure of the drive attachment element to axially move the drive attachment element along the drive element when the drive element is rotated.

The helical groove **24** can extend along a portion of, or the entirety of, the drive element **22.** In a preferred embodiment, the helical groove extends from one distal end portion, referred to as the motor end **58,** to the opposing distal end portion, referred to as the bearings end **59,** of the drive element **22.** Alternatively, the helical guide structure **24** can begin and end at any desired point along the longitudinal axis of the drive element **22,** and/or stop and start over various portions of the drive element, depending on the application. The length of the helical groove **24** is a factor in determining how far a curtain 44 will travel across the drive element, i.e., the entire length of the drive element **22** as opposed to some shorter section of the drive element **22.** The angle of the helical groove determines how far the drive attachment element will move along the drive element for a given amount of rotation of the drive element.

In an embodiment, the helical groove **24** is formed in either a clockwise direction or a counterclockwise direction. FIG. 7 illustrates a drive element **22** having a counterclockwise helical groove **38.** FIG. 8 illustrates a drive element **22** having a clockwise helical groove **40.**

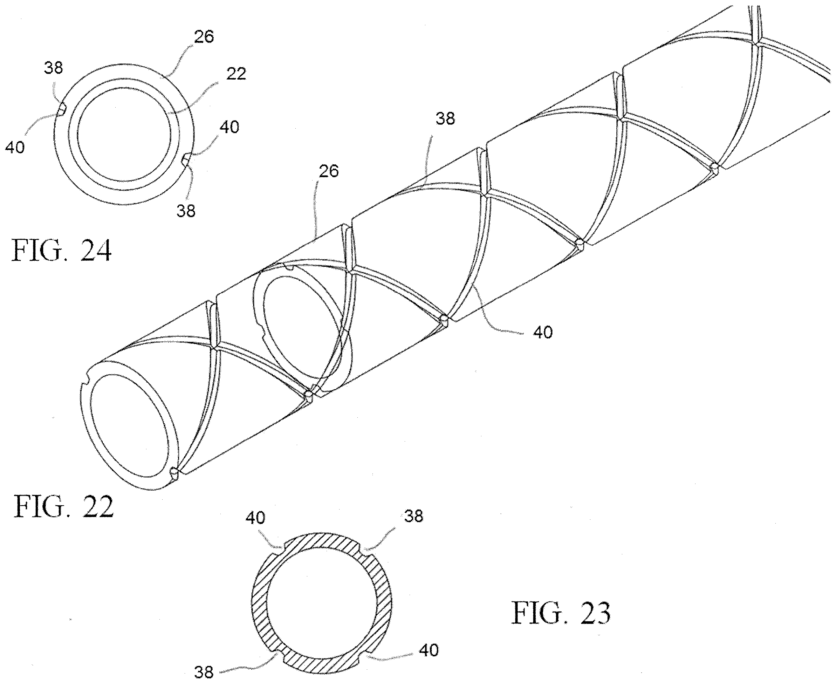

In one embodiment, the drive element **22** has two helical grooves **24,** one formed in the clockwise direction and one formed in the counterclockwise direction. FIG. 9 illustrates a drive element **22** in which there are a counter clockwise helical groove **38** and a clockwise helical groove **40.** In yet other embodiments, the drive element **22** may have four helical grooves, two clockwise helical grooves **38** and two counter clockwise helical grooves **40** as shown in FIGS. 22-24.

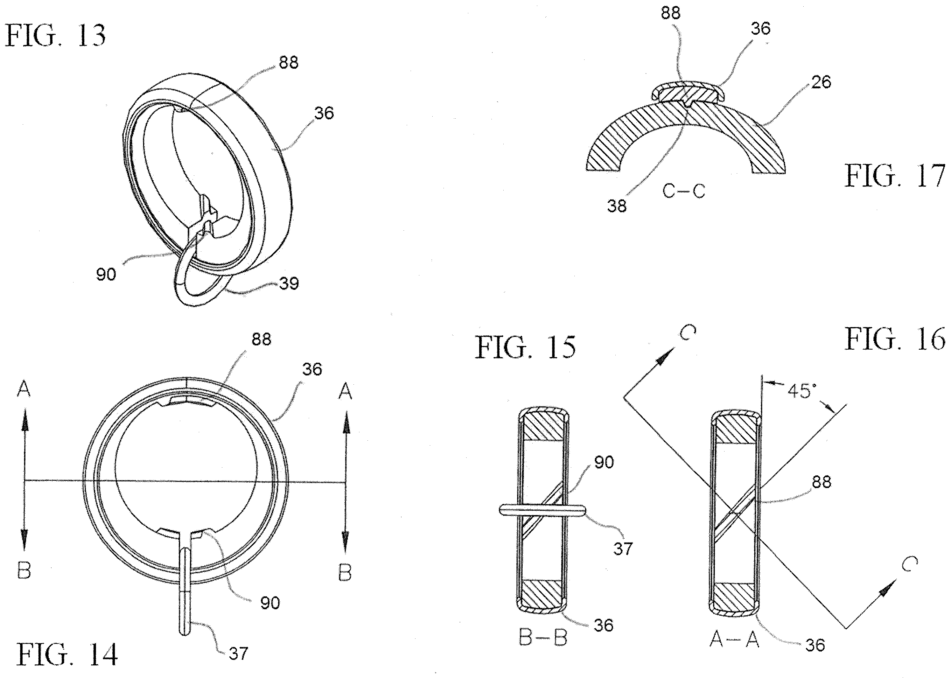

When two clockwise helical grooves **38** or two counter-clockwise helical grooves **40** are utilized, the two clockwise helical grooves **38,** or the two counter-clockwise helical grooves **40** are preferably spaced approximately 180 degrees apart. Other spacings can also be utilized. The clockwise helical grooves **38** and the counterclockwise helical grooves **40** preferably form the same angle with the longitudinal axis. The profile of the helical grooves **38, 40** can be self-centering to allow the drive tooth **62** to traverse the intersection of the clockwise helical groove **38** and the counter clockwise helical groove **40** without binding. A beveled groove, which allows such self-centering, is shown in FIG 17.

The helical grooves **24** may be formed by forming grooves into the outer surface **26** of the drive element **22** such that the grooves **24** are recessed from the outer surface **26** of the drive element **22.** Alternatively, the helical guide structures **24** may be formed as one or more protrusions that project or bulge from the outer surface **26** of the drive element **22.** The protrusions may be formed in a variety of manners, for example, by winding material around the outer surface **26** of the drive element **22,** forming, e.g., extruding the drive element in a manner that creates indentations in and/or projections from the outer surface of the drive element, or forming the drive element so as to have an outer surface able to apply a force in the longitudinal direction to a structure **62** of the corresponding drive attachment element **36** when the corresponding structure is engaged with the structure **24** upon rotation of the drive element about the longitudinal axis.

In an alternative embodiment, a sleeve, or outer tube **63,** having helical guide structure **24** and sized to fit around a portion of the drive element **22** may be used. In this case, the drive sleeve has at least one helical groove **24** in a clockwise or counter clockwise direction formed on the outer surface of the sleeve. The sleeve/outer tube can be interconnected to an inner tube 61, or other inner drive element **9** (e.g., rod), that is rotated so as to cause the rotation of the sleeve/outer tube. The inner drive element **9** can provide sufficient stiffness to keep the sleeve from bending too much along the longitudinal axis of the sleeve from the weight of the curtains, so that the sleeve need not be sufficiently stiff to keep from bending too much along the longitudinal axis of the sleeve from the weight of the curtains. The drive element **22,** which then comprises the inner drive element **9** and the outer tube or sleeve, again translates the torque from the rotation assembly to axially movement of the curtain support **67** or drive attachment element **36** across the drive element **22.** In an embodiment, the drive sleeve is secured to the inner drive element to form the drive element **22** such that the sleeve does not slide up or down the inner drive element or rotate around the inner drive element **9.** It may also be desired to remove the sleeve from the inner drive element **9** and replace it with another sleeve. Using a drive sleeve has the advantage that the geometry of the helical groove **24** including its length may be easily changed by removing the sleeve and replacing it without fabricating a new drive element **22.**

The helical grooves **24** may also vary in angle and therefore, may differ in the amount of time (rotations of the drive element) that it takes to travel across the drive element **22.** For example, a helical groove **24** with a larger angle, with respect to a plane through a cross-section of the drive element, may create a shorter path for the structure to travel and lead to a faster moving curtain **44** for a certain rotation speed of the drive element. In some embodiments, the angle of the helical grooves **24,** with respect to a cross-sectional plane of the drive element, may vary along the drive element in the direction of the longitudinal axis **60** of the drive element **22** such that the curtain **44** may move at different speeds along the drive element **22,** for a given rotational speed of the drive element, if desired. The angle of the helical groove **24,** with respect to a cross-sectional plane of the drive element, varies from greater than 0 degrees and less than 90 degrees, preferably varies from 10 degrees to 80 degrees, more preferably varies from 20 degrees to 70 degrees, even more preferably varies from 30 degrees to 60 degrees, and is most preferably 45 degrees.

Embodiments of the subject invention relate to a method and apparatus for cutting one or more grooves in a cylindrical element. In specific embodiments, the one or more grooves are cut into an outer surface of the cylindrical element. The cylindrical element can be solid, or can have one or more hollow portions. In a specific embodiment, the cylindrical element is a hollow tube. Embodiments also pertain to a cylindrical element having one or more grooves cut in an outer surface of the cylindrical element. Further specific embodiments are directed to cylindrical elements having one or more grooves that can be utilized as a drapery or curtain tube, where the one or more grooves, in combination with rotation of the cylindrical element, can be used for moving the drapery to one or more positions along the tube, such as from an open position for the drapery or curtain to a closed position for the drapery or curtain, by engaging an interconnecting element between the drapery or curtain and the one or more grooves while rotating the tube.

A specific embodiment involves machining two grooves, 180 degrees apart, around the outer surface of a cylindrical shaft or tube with a right hand, or clockwise, twist, and/or two grooves, 180 degrees apart, around the outer surface of the cylindrical shaft or tube with a left hand, or counter clockwise, twist.

Specific embodiments of the subject method and apparatus can incorporate one or more of the following features: machining multiple single direction (right hand or left hand) grooves in the shaft or rod at the same time; machining two grooves using two single point tools spaced a distance ½ the length of the lead; machining a groove using multiple single point tools where each single point tool machines a portion of the groove, such as a single point tool machining a rough cut depth and a further single point tool machining a finish cut depth; machining multiple right hand, or clockwise, grooves in one pass along the shaft or tube and, optionally, machining multiple left hand, or counter clockwise, grooves using an opposite directional single pass along the shaft or tube, where if more than one single point tool is used for each groove, the positions of the rough cut depth tools and the finish cut depth tools are reversed between the pass and the opposite directional pass; machining two grooves in each direction within two minutes for a ten foot shaft or tube; minimum set up time; machining either multiple grooves in a single direction or multiple groove in two directions; machining a groove using two or more tools in a single pass, which reduces tool changes compared with making a separate pass for each tool; and machining two or more grooves in a single pass using different tools for each groove, such that the alignments of the grooves are more accurate compared with machining each of the two or more grooves in separate passes.

### ROTATION ASSEMBLY

The drive element 22 can be connected to a rotation assembly 33 for rotating the drive element 22, where the rotation of the drive element 22 moves the drive attachment element 36 along the drive element via the helical groove 24 of the drive element 22.

The rotation assembly 33 is a motor assembly 32. In background examples, the drive element 22 may be rotated manually. For example, a pull cord 72 as shown in FIGS. 1-3 may be connected to the drive element 22 such that the drive element 22 can be manipulated manually to rotate when it is desired to deploy or store the curtain 44. The use of pull cords 72 is well known in the art.

A motor assembly 32 is be used to rotate the drive element 22. The motor 82 may be mounted either inside or outside the drive element 22. In one embodiment, the motor 82 is mounted inside the drive element 22 and generally concealed from plain view. Components including axles 52 and bearings 94 may also be located inside the rotatable drive element 22. A slip ring 28 may be used to transfer current from the power supply external to the drive element 22 to the motor 82 in the drive element 22 as shown in FIG. 6. Alternatively, batteries 84 in a battery tube 86 may be used as shown in FIG. 5 to power the motor 82. The batteries 84 in the battery tube 86 may be in a spring loaded sleeve to assist with loading and unloading the batteries 84 from the battery tube. In some embodiments, a motor drive adapter 92 as shown in FIG. 6 may also be used to securely attach or connect the motor 82 to the drive element 22. In other embodiments, the motor housing fits tightly against the drive element 22 and turns the drive element 22 when the motor output shaft is held in end bracket 54 to prevent it from turning. FIG. 5 shows the interconnection of end caps 51, axles 52, bearings 94, bearing housings 57 (note the bearing housing 57 is shown on the motor end in FIG. 5, but the bearing housing 57 on the battery end is not shown), motor 82, and battery tube 86. FIG. 6 shows a slip ring 28, which is optional, and allows the circuit to be completed while rotating.

In a motorized operation, the user may push a button 98 on a remote control 96 to turn on the motor 82 to rotate the drive element 22 such that the curtain 44 moves across the drive element 22 between a stored position and a deployed position depending on the user's preference. The remote control 96 and button 98 are shown in FIGS. 1 -3. In other embodiments, the motor 82 may respond to a signal from the remote control 96 that is initiated by a voice command to the remote control, which then causes the motor 82 to rotate the drive element 22.

The curtain assembly 20 may also include a remote control 96 having a control board that generates a signal when the user makes a selection on the remote control 96. The control board has a transmitter that can wirelessly communicate with a receiver that is remotely located from the transmitter. For example, the receiver may be located in the motor 82 in the drive element 22. The receiver receives the transmitted signal from the transmitter and transmits it to the motor 82, which will cause the motor 16 to turn on, rotate the drive element 22, and moves the curtain 44.

As the drive element rotates, by a motor 82, the curtain 44 is engaged on the drive element 22 and moves axially along the drive element 22 to either a deployed or stored position.

### CURTAIN SUPPORT, DRIVE ATTACHMENT ELEMENT AND STRUCTURE

The curtain assembly 20 can include a drive attachment element 36 having a structure 62 that communicates with the guide structure 24 to move the drive attachment element 36 axially along the drive element 22 when the drive element 22 is rotated. The curtain assembly can also include one or more idler attachment elements 67 that interconnect with the drive element to support the window covering, e.g. curtain. In specific embodiments, the drive attachment element 36 has a corresponding feature 62 that is a tooth 62 as described below.

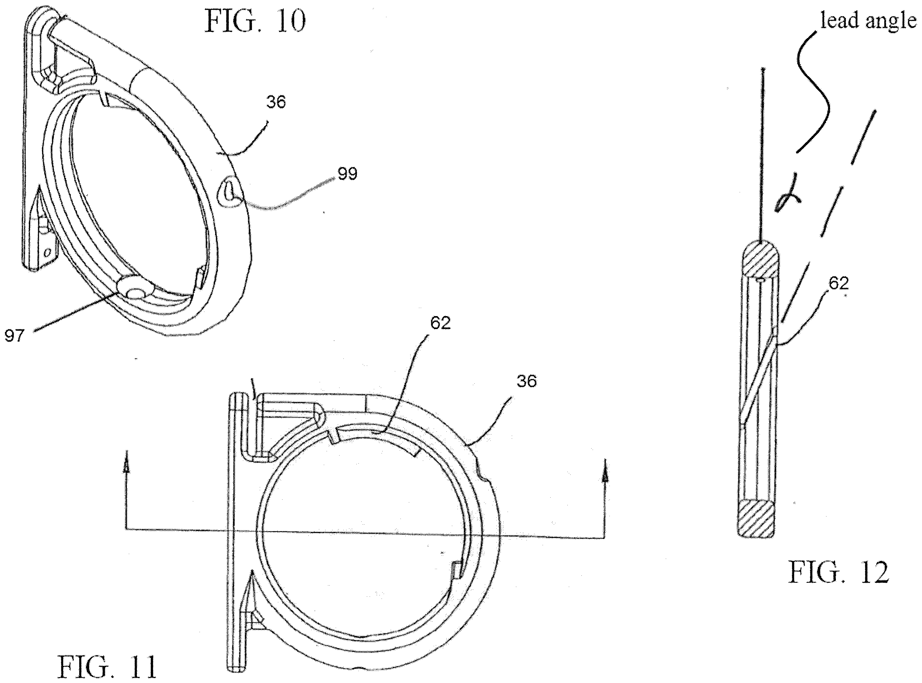

The curtain assembly 20 of the present invention may include in some embodiments at least one drive attachment element 36 having a feature 62 that communicates with a helical guide structure 24 to move the drive attachment element 36 axially along the drive element 22 when the drive element 22 is rotated. The helical guide structure may be a helical groove 24 and the feature 62 may be a tooth. Referring to Figure 1, one end, such as the motor end, of the curtain can be fixed 64 and the adjacent opposing end, such as the bearings end, of the curtain 66 can be attached to the drive attachment element 36. The feature 62 as a tooth is shown in FIGS. 10-12. FIG. 10 shows an enlarged perspective view of the drive attachment element 36. FIG. 11 is an enlarged side view of the drive attachment element 36 showing the drive tooth 62 according to one embodiment. FIG. 12 is an enlarged cross-sectional view of the drive attachment element 36 showing the angle α (approximately 30 degrees) of the drive tooth 67. This angle α is the same angle as the helical groove makes with respect to a cross-sectional plane of the drive element.

As shown in FIGS. 10- 12, the drive attachment element **36** can be ring-shaped and slides over the drive element **22.** A different construction, however, may be used for the drive attachment element **36.** As an example, the drive attachment element may have one or more additional structures **62,** which may follow a corresponding one or more additional grooves, and/or one or more of the structures **62** can be located at a different rotational position with respect to the longitudinal axis of the drive element when the structure is mounted onto the drive element. The drive attachment element **36** is preferably provided with a slot **99** into which a traditional curtain hook **37** can be used to connect the end of the curtain to the drive attachment element **36.** Curtain pins and curtain rings that are well known in the art to hang curtains may be used.

The structure **62** is designed to communicate with or engage the helical groove **24** of the drive element to move the drive attachment element **36** axially along the drive element, thereby moving the curtain. In one embodiment, the feature is a tooth formed on an angle on the inner surface of the body of the drive attachment element. The angle α of the drive tooth **62** is specifically designed to engage the helical groove on the drive element **22.** In an embodiment, a design consideration is to maximize the amount of contact between the rotating drive element **22** and the drive attachment element **36** to move the weight of the curtain. The location of the tooth **62** with respect to the drive attachment element **36,** in some embodiments of the present invention, are adjustable such that the angle the location of the tooth makes with respect to the drive element when the drive attachment element is interconnected to the drive element is adjustable. This adjustability allows the user of the curtain assembly to set the correct location of the drive attachment element(s) **36** in relationship to the axial position along the drive element for a particular rotational position of the drive element, as where the tooth is positioned and where the helical groove is located for a particular angular position of the drive element determines the axial position of the drive attachment element and, therefore, the axial position of the point of the curtain attached to the drive attachment element. In this way, if it is desired for a distal end of the curtain to reach the distal end of the drive element at a particular degree of rotation of the drive element (e.g., 720°, or 3600°), then the relative rotational position of the tooth to the drive attachment element can be adjusted.

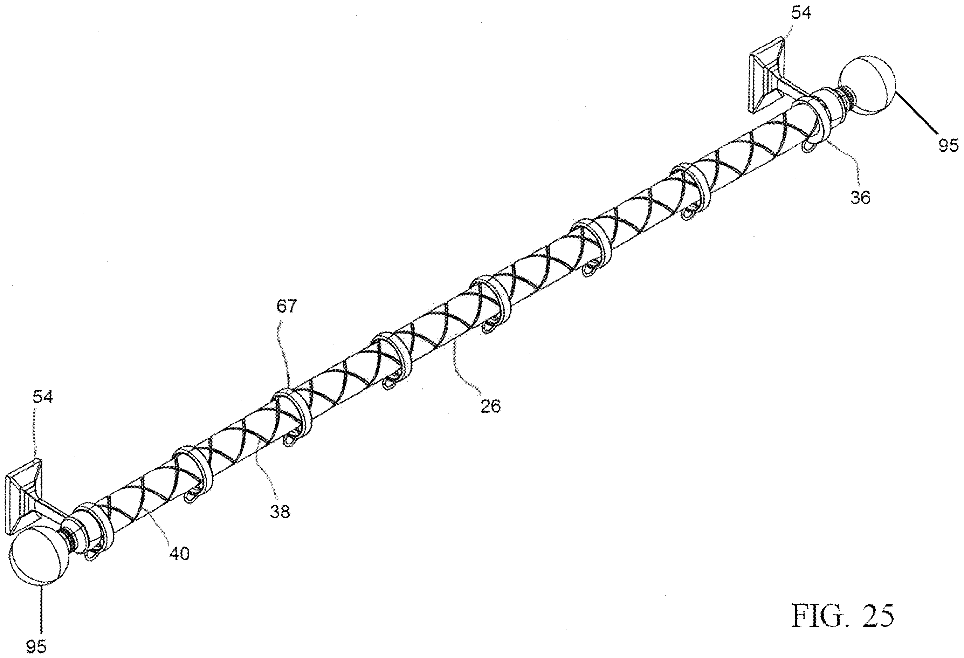

In some embodiments, the drive attachment element **36** has a first drive tooth **88** and a second drive tooth **90** as shown in FIGS.13-16. Both the first drive tooth **88** and the second drive tooth **90** are configured to communicate with different helical grooves **24** of the drive element **22.** The first drive tooth **88** and the second drive tooth **90** are positioned inside the drive attachment element **36** at the top and the bottom of the drive attachment element **36,** respectively. FIGS. 15 and 16 show cross-sectional views of the top and the bottom of the drive attachment element **36** which show the angle α₁ of the first drive tooth and the angle of the second drive tooth α₂. The angles α₁, α₂ are both 45 degrees. The angles α₁, α₂ of the first drive tooth **88** and the second drive tooth **90** are not limited to 45 degrees and are configured to communicate with the corresponding helical groove **24** of the drive element **22.** In a preferred embodiment, also shown in FIGS 22-26, there are four helical grooves **26.** Two are clockwise spirals **38** and two are counter-clockwise **40.**

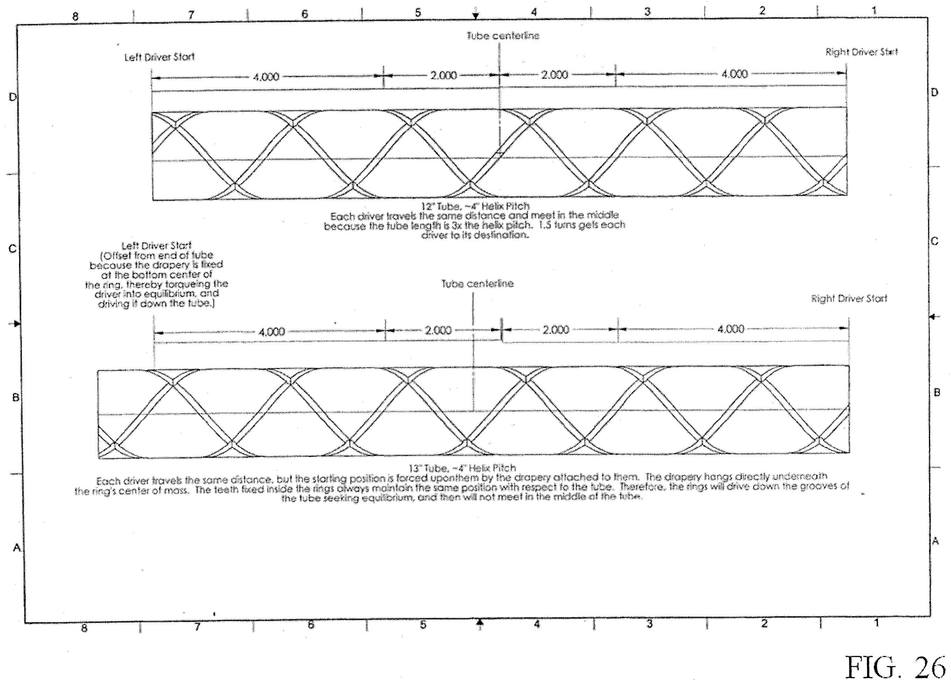

One issue with this type of helical pattern on center closing curtains is keeping the timing of the drive attachment elements and the helical groove such that the two curtains always meet in the center of the opening when the drive element is drive (rotated to the close position. This issue is further complicated by being able to cut down the length of the tube to fit smaller windows. If a quad-helix drive element (two clockwise and two counterclockwise helixes) is cut down to a length that is not a multiple of ½ the pitch of the helixes, the drive attachment elements of the right curtain and the left curtain (for a dual curtain assembly) may not meet in the middle of the drive element. See FIG 26. The adjustable drive attachment element can allow the teeth to be repositioned inside the drive attachment element such that the drive attachment element can start from a different axial position along the drive element and end at the desired axial position in the center, or other desired axial position. This adjustment of the position of the tooth with respect to the drive attachment element can correct the offset caused by the odd length of the drive element, e.g., from cutting an end off, and allows the right curtain drive attachment element and the left attachment element to meet in the middle.

The gear teeth between the "Clicker" and "Gear Ring" parts of the adjustable drive attachment element, in a specific embodiment, do not allow the "Clicker" to rotate when it is on the tube. In this case, removing the adjustable drive attachment element from the drive element allows the user to adjust the "Clicker" manually by disengaging it from the Gear Ring. The outward force of the drive element on the Clicker's gear teeth essentially locks it into the Gear Ring. Specific embodiments allow the tooth to be repositioned about one inch in either direction. For a drive element where ½ the pitch length is two inches, rotating the tube 180 degrees before installing the adjustable drive attachment element changes the starting position by ½ pitch length, which will correct the adjustable drive attachment element's starting position to an acceptable degree.
Although the structure **62** described in the embodiments above is a tooth, other embodiments for the structure **62** may be used as well.

### SIMPLE ATTACHMENT ELEMENTS

The curtain assembly **20** may further comprise a plurality of idle attachment elements **67** connected to the drive element **22** for sliding movement along the drive element **22.** The remaining attachment points **68** of the curtain **34** that are not connected to the drive attachment element **36** can then be suspended from the drive element **22** using one or more idler attachment elements **67.**

Referring to Figure 1, the curtain has one fixed end **64** and an adjacent opposing end **66** that is connected to the drive attachment element **36.** The remaining ends (or attachment points) of the curtain **68** are positioned between the fixed end **64** and the adjacent opposing end **66** that is connected to the drive attachment element **36.** These remaining attachment points **68** may be suspended from the drive element **22** using a plurality of idler attachment elements **67.** The idler attachment elements **67** are interconnected to the rotatable drive element **22** as shown in FIGS. 1-4. Such interconnection of idler attachment elements **67** can be such that the idler attachment element surrounds a portion of, or all of, the circumference of the cross-section of the drive element and hangs freely on the drive element. In other embodiments, the idler attachment elements can be also interconnected with a structure external to the drive element.

The idler attachment elements **67** may be shaped similar to the drive attachment element **36.** In some embodiments, the idler attachment elements **67** may have a smooth bore to allow free movement along the drive element **22** as the curtain moves. In other embodiments, the idler attachment elements **67** may have a tooth to assist in the movement of the curtain across the drive element. In embodiments having a tooth, the drive element can have a region that frees the tooth when the simple attachment element reaches a certain axial region of the drive element, such as an end of the drive element, going one axial direction, and re-engages the tooth as the idler attachment element is pulled in the other axial direction out of the same axial direction.

As shown in FIGS. 1-4, the idler attachment elements **67** may be rings that slide over the drive element **22.** The idler attachment elements **67** may be provided with a slot or a hole (not shown) into which a traditional curtain hook (or loop) **37** is used to attach the remaining attachment points **68** of the curtain **44** to the idler attachment element **67** as shown in FIGS. 4-6. Curtain pins and curtain rings that are well known in the art to hang curtains may be used.

### PULL RODS AND PROGRAMMING

In some embodiments, the drive attachment element **36** has a single tooth **62** and is a loose fit on the drive element **22.** In these cases, the curtain assembly **20** can include a draw rod **70** connected to the drive attachment element **36** wherein the drive tooth **62** is disengaged from the guide structure **24** of the drive element **22** by applying force on the draw rod **70.** The draw rod **70** may be an elongated rod or any other mechanism that is configured to allow the user to manually disengage the drive attachment element **36** from the guide structure **24.** The draw rod can then be used to axially move the drive attachment element along the drive element.

The motor **82** for the curtain assembly **20** may be programmed from the factory with a preset number (integer or fractional) of drive element **22** revolutions to move the curtain axially across the drive element **22.** There are a variety of reasons, however, why this preset number of revolutions may change. For example, the drive element **22** may be shortened (e.g., cut) to accommodate a narrower window **34** or the curtain has been manually moved with the draw rod **70** and not moved by the pull cord **72.**

Therefore, in an embodiment, the initial setup of the motor **82** is able to count the number of revolutions the drive element **22** makes to fully open and fully close the **curtain 44.** This setup may be accomplished by a setup routine in which a program button is pressed once on a remote control **96** to start the motor **82** moving the curtain 44 and then pressing the button a second time, either to stop the movement or after the movement has stopped, which stores the number of revolutions the curtain 44 has moved.

In a specific embodiment, the number of revolutions can be confirmed by pressing the program button a third time, which reverses the motor **82** and moves the curtain **44** in the opposite direction. Pressing the program button a fourth time, either to stop the curtain **44** or after the movement has stopped, can cause the number of counts to be compared, and set a new count in the memory to complete the set up routine. If the program button on the remote control **96** is not pressed the second time, the motor **82** can run until the preset count is reached, then shut off. Alternatively, the assembly can implement some sort of maximum axial distance detector or force detector, or clutch, such that the motor stops, or stops rotating the drive element, respectively, when a threshold force is encountered trying to move the drive attachment element.

If it is desired to automatically move the curtain after the curtain was manually moved, the user can press the program button twice on the remote control **96,** which will cycle the curtain twice. This resynchronizes the curtain movement count by first moving the curtain to one distal end of the drive element followed by moving the curtain **44** to the opposite distal end of the drive section, i.e., two cycles.

When the curtain **44** is moved towards its fully deployed position, as shown in FIG. 1, the drive attachment element **36** is driven by the rotation of the helical groove **24** on the drive element **22** acting on the feature in the drive attachment element until the drive element **22** rotates a set number of revolutions and stops in the fully deployed position.

### CENTER CLOSING EMBODIMENTS

Referring to FIG. 4, a specific embodiment of the curtain assembly **20** is shown in which the curtain **44** used is a center closing curtain **46.** As described above, a center closing curtain **46** is composed of two fabric panels, a right panel **50** and a left panel **48,** which meet in the center of the window **42** to close and cover the window **34.**

The center closing curtain **46** is in the deployed position and the window **34** is covered in FIG. 4. The drive element **22** has a clockwise helical groove **38** and a counter clockwise helical groove **40** formed on the outer surface **26** of the drive element **22.** The clockwise helical groove **38** and counter clockwise helical groove **40** have the same angle and oppose each other to create the correct movement of the center closing curtain **46** when the drive element **22** rotates.

To accommodate a center closing curtain **46,** the curtain assembly **20** has a left drive attachment element **74** and a right drive attachment element **76** as shown in FIG. 4. The left drive attachment element **74** is connected to the adjacent opposing end **66** of the left panel **48** and the right drive attachment element **76** is connected to adjacent opposing end **66** of the right panel **50.** In other words, the left panel **48** has a fixed end **64** and an adjacent opposing end **66** that is connected to the left drive attachment element **74.** The right panel **50** has a fixed end **64** and an adjacent opposing end **66** that is connected to the right drive attachment element **76.** There may also be a left draw rod **78** and a right draw rod **80** attached to the left drive attachment element **74** and the right drive attachment element **76,** respectively.

The tooth **62** of the right drive attachment element **76** can follow the counter-clockwise helical groove **40** and the tooth **62** of the left drive attachment element **74** can follow the clockwise helical groove **38,** such that when the drive element is rotated in a first rotational direction the left panel **48** and right panel **50** both close and when the drive element is rotated in the opposite direction the left panel **48** and right panel **50** both open. In a specific embodiment, the drive element has only one or more clockwise helical grooves **24** on the left end of the drive element, on which the closed left panel **48** hangs, and the drive element has only one or more counter-clockwise helical grooves on the right end of the drive element, on which the closed right panel **50** hangs.

### DUAL CURTAIN

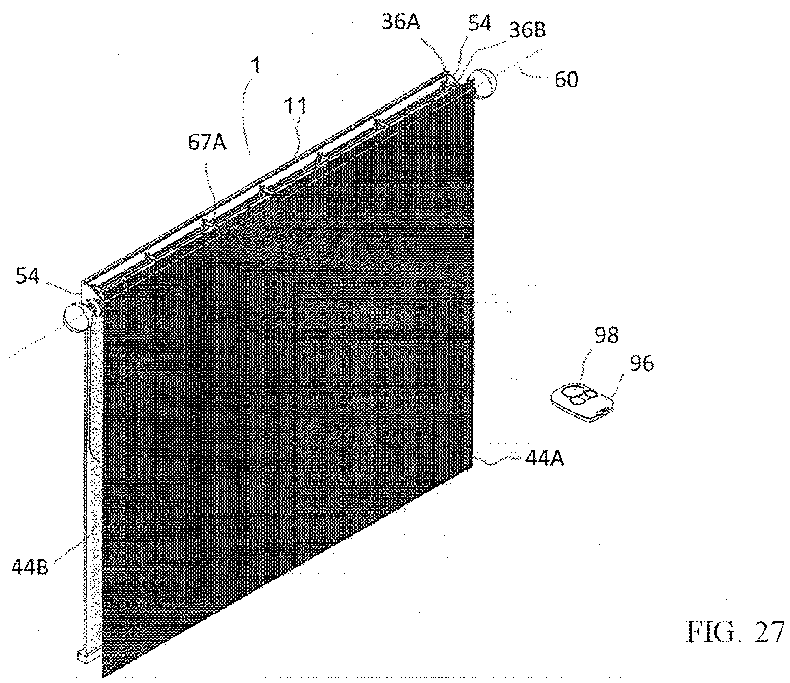

Referring to FIGS. 27-30, a dual curtain assembly **1** is provided. The dual curtain assembly **1** comprises a rotatable drive element **22** wherein at least one helical structure **24** is formed on the outer surface **26** of the drive element **22;** curtain drive elements **36A** and **36B** having a corresponding structure that communicates with the helical structure **24** to move the curtain supports axially along the drive element **22** when the drive element **22** is rotated and; a rotation assembly **33** for rotating the drive element **22.**

In some embodiments of the invention, the helical structure **24** is a helical groove and the corresponding structure is a tooth. While the helical structure **24** is shown in FIGS. 27-30 as a helical groove, the helical structure is not limited to a groove. Similarly, the corresponding structure discussed below in some embodiments is a tooth but is not limited to being a tooth. In some embodiments, the curtain support includes an outer curtain outer curtain drive attachment element **36A** and an inner curtain drive element **36B** as shown in FIGS. 27-30 and explained further below.

The curtain assembly **1** may further comprise an outer curtain **44A** and an inner curtain **44B;** the outer curtain **44A** is suspended from the rotatable drive element **22** while the inner curtain **44B** is suspended from hooks **17** in carrier tracks **12** and **81** that move along the support guide **11.** The rotatable drive element **22** comprises at least one drive element 22 having opposing distal end portions **35, 36,** where the distal end having the motor can be referred to as the motor end **58** and the other distal end can be referred to as the bearing end **59,** wherein at least one helical groove **24** is formed in either a clockwise direction or a counterclockwise direction on the outer surface **26** of the drive element **22** extending from one distal end portion **35, 36** of the drive element 22 to the opposing distal end portion **35, 36** of the drive element **22.**

When the drive element **22** is rotated, either the outer curtain **44A** or the inner curtain **44B** will move along the drive element **22,** while the other curtain is held in place in a non-driving or stall area. Once the moving driver attachment element **36A** or **36B** has reached a stall area at the end of the drive element **22,** the non-moving driver attachment element will be tugged to engage the helical groove **24.** This movement of the outer curtain **44A** and the inner curtain **44B,** along the helical groove **24** of the drive element **22** is explained in greater detail below. Whether the outer curtain **44A** moves or the inner curtain **44B** moves is determined by the sequence of the movement of the curtains. A system for selecting either the outer curtain **44A** or the inner curtain **44B** is explained below.

As shown in FIG. 27, the outer curtain **44A** and inner curtain **44B** may be composed of a single continuous panel of fabric that moves back and forth across the drive element **22** to the deployed position (covering the window **34**) and to the stored position (not covering the window **34**). Although, there is no limitation on the type of fabric used for the curtains **44A** and **44B,** in one embodiment, the outer curtain **44A** is a blackout curtain and the inner curtain **44B** is a sheer curtain. Using a blackout curtain with a sheer curtain to cover the same window **34** allows the user to use the sheer curtain when some light is desired and then also to use the blackout curtain when no light is desired. For example, the blackout curtain may be stored and the sheer curtain may be deployed, if some light is desired and privacy is needed. The blackout curtain may be deployed and the sheer curtain may be deployed when no light is desired. The blackout curtain may be stored and the sheer curtain may also be stored, when light is desired and privacy is not needed. The dual curtain assembly **1** disclosed herein allows for these combinations of positions for the outer curtain **44A** (blackout curtain) and the inner curtain **44B** (sheer curtain) as shown in FIGS. 27-30.

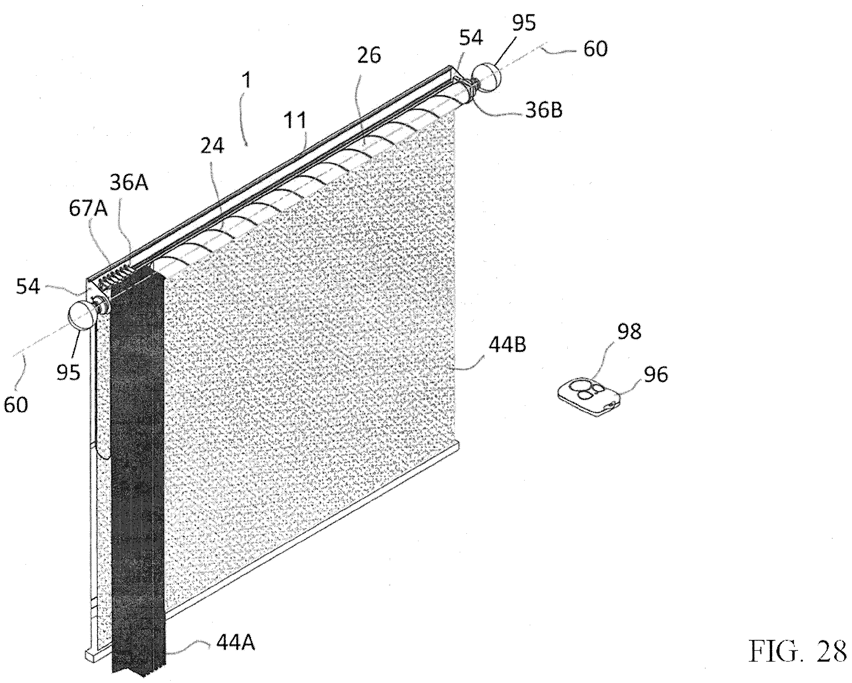

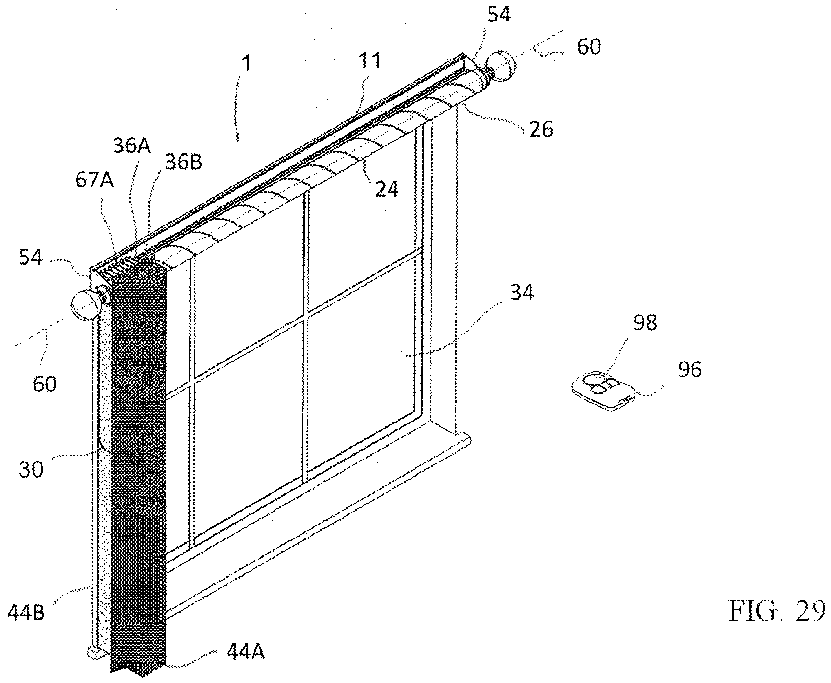

FIG. 27 illustrates a curtain assembly **1** when the outer curtain **44A** is a blackout curtain in the deployed position and the inner curtain **44B** is a sheer curtain in the deployed position. Therefore, in FIG. 27, the window **34** is covered by the outer curtain **44A** or the blackout curtain and the inner curtain **44B.** FIG. 28 illustrates a curtain assembly **1** when the outer curtain **44A** is a blackout curtain in the stored position and the inner curtain **44B** is a sheer curtain in the deployed position. The window **34** is covered by the sheer curtain and the blackout curtain is stored in this instance. FIG. 29 illustrates a curtain assembly **1** when the outer curtain 44A is a blackout curtain in the stored position and the inner curtain 44B is a sheer curtain in the stored position. The window 34 is left uncovered in this instance.

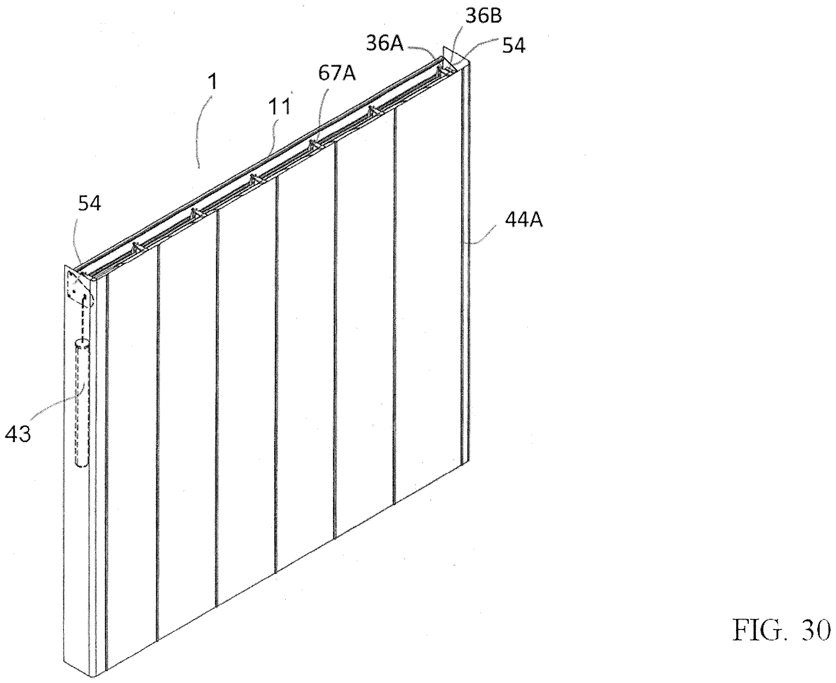

FIG. 30 illustrates the preferred embodiment curtain assembly 1 when the outer curtain 44A is a blackout curtain in the deployed position and the inner curtain 44B is a sheer curtain in the deployed position. Therefore, in FIG. 27, the window 34 is covered by the outer curtain 44A or the blackout curtain and the inner curtain 44B. Further, the outer curtain bas the stationary end attached to the end bracket 54 and the movable end wrapped around the other end bracket 54 on the distal end. There is also a cut away area to show the position of an external power supply 43.

### DRIVE ELEMENT AND DRIVE SECTION

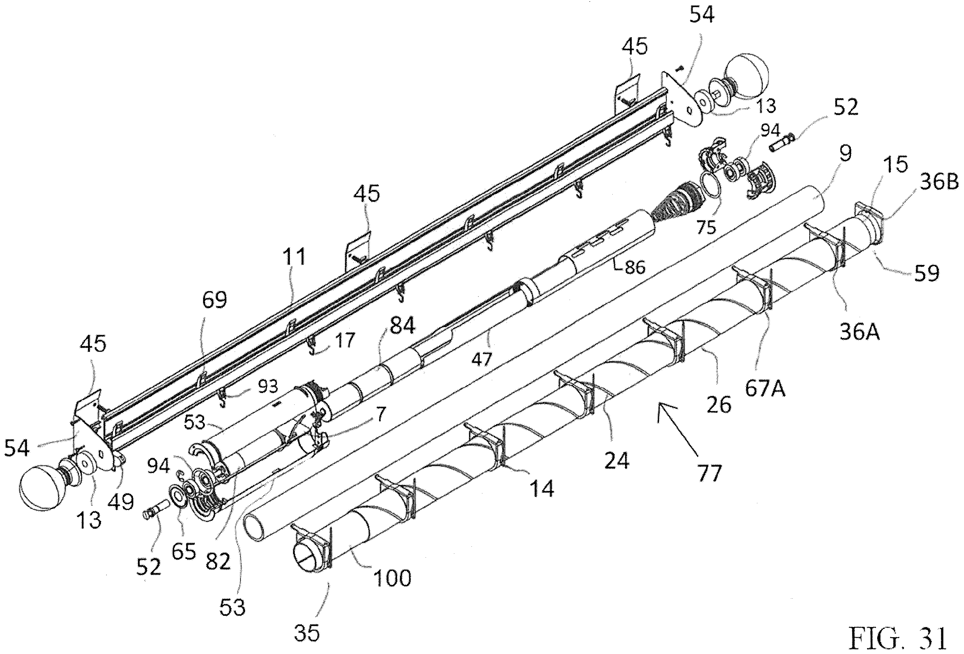

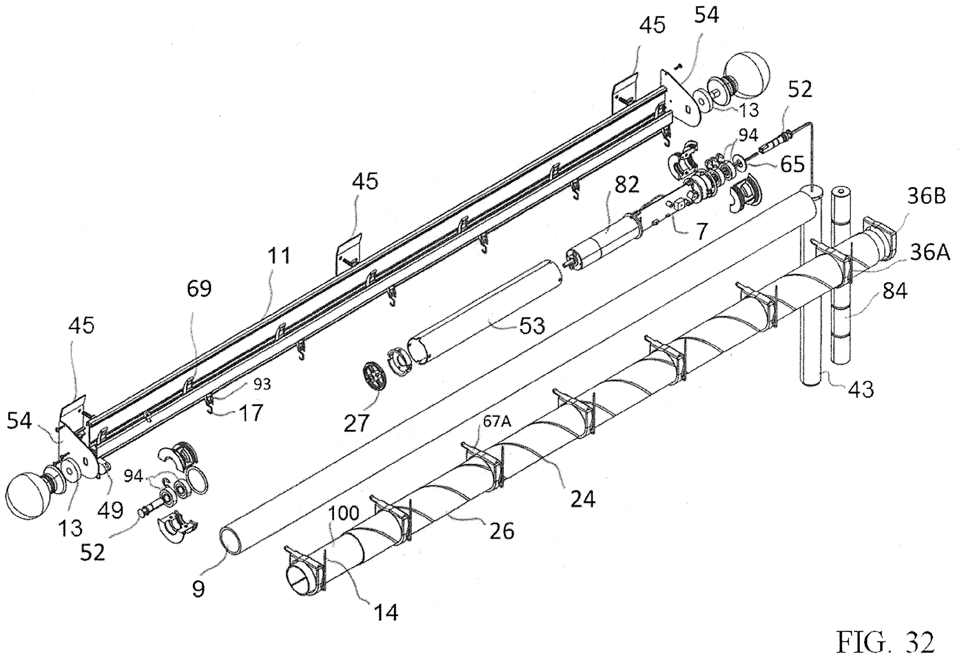

The rotatable drive element 22 and drive element 22 will now be explained in detail below. The curtain assembly 1 includes a rotatable drive element 22. FIGS. 31 and 32 show the rotatable drive element 22 and its components in greater detail. Both the outer curtain 44A and the inner curtain 44B are connected to the rotatable drive element 22 by the outer curtain outer curtain drive attachment element 36A or the inner curtain attachment drive element 5 or various attachment and suspension elements as explained below. The rotation assembly 33 which rotates the drive element 22 moves these attachment drive elements which are connected to the curtains 44A and 44B separately across the drive element 22.

The rotatable drive element 22 is designed to be installed above a window 34 similar to a traditional curtain rod. For example, as shown in FIG. 27, drive element 22 is mounted on axles 52 that are located and secured in the end brackets 54. The end brackets 54 are adapted for connection with a window frame, sash or wall. The end brackets 54 may also include a rubber mounting disk 13 that is compressed when the drive element 22 is installed to hold the drive element 22 firmly in place and minimize noise.

The drive element 22 is connected to a rotation assembly 33 for rotating the drive element 22 wherein the rotation of the drive element 22 moves the outer curtain drive attachment element 36A and the inner curtain drive element 36B separately across the helical groove 24 of the drive element 22. The rotation assembly 33 is a motor 82. In background examples, the drive element 22 may be rotated manually. For example, a draw cord 72 as shown in FIGS 27-29 may be connected to the drive element 22 such that the drive element 22 can be manipulated manually to rotate when it is desired to deploy or store the curtains 44A or 44B. The use of pull cords 72 is well known in the art.

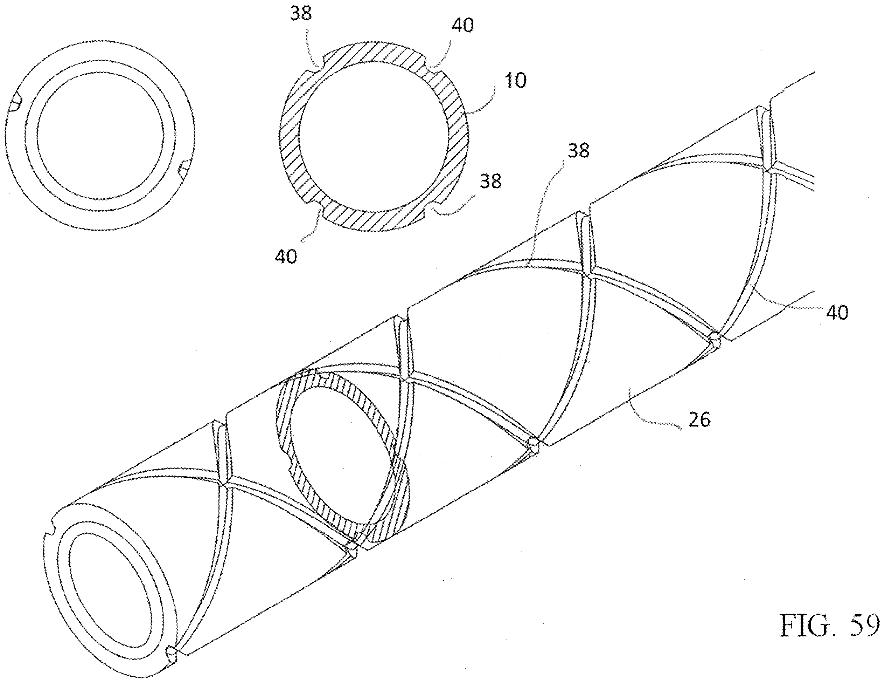

The drive element 22 is connected to a motor 82, which can be used to rotate the drive element 22. The motor 82 may be mounted either inside or outside the drive element 22. In one embodiment, the motor 82 is mounted inside the drive element 22 and generally concealed from plain view. Components including axles 52 and bearings 94 may also be located inside the rotatable drive element 22. A slip ring 28 may be used to transfer current from the power supply 43 external to the drive element 22 to the motor 82 in the drive element 22 as shown in FIG. 32. Alternatively, batteries 84 in a battery tube 86 may be used as shown in FIG. 31 to power the motor 82. The batteries 84 in the battery tube 86 may be in a spring loaded sleeve to assist with loading and unloading batteries 84 from the battery tube 86. In some embodiments, the motor drive adapter 27 as shown in FIG. 59 may also be used to securely attach or connect the motor 82 to the drive element 22. In other embodiments, the motor housing 53 fits tightly against the drive element 22 and turns the drive element 22 when the motor output shaft 87 is held in end bracket 54 to prevent it from turning. In a motorized operation, the user may push a button 98 on a remote control 96 to turn on the motor 16 to rotate the drive element 22 such that the sequence selected curtain 44A or 44B moves across the drive element 22 between a stored position and a deployed position depending on the user's preference. The remote control 96 and button 98 are shown in FIGS. 27-29. In other embodiments, the remote control may respond to a voice command and send a signal to the motor controls, which then causes the motor 82 to rotate the drive element 22. The curtain assembly 1 may also include a remote control 96 having a control board which generates a signal when the user makes a selection on the remote control 96. The control board has a transmitter which can wireless communicate with a receiver which is remotely located from the transmitter. For example, the receiver may be located in the drive element 22. The receiver receives the transmitted signal from the transmitter and transmits it to the motor 82, which will cause the motor 82 to turn on, rotate the drive element 22, and moves one of the curtains 44A or 44B.

As the drive element 22 rotates, either manually or by a motor 82, the outer curtain drive attachment element 36A or the inner curtain drive attachment element 36B is engaged on the drive element 22 and moves across the drive element 22 to either a deployed or stored position while the other curtain 44A or 44B remains in place. When the moving curtain 44A or 44B reaches the end of the drive element 22, the stationary curtain 44A or 44B will be pulled into engagement with the helical groove **24** and move across the drive element **22** to a new position.

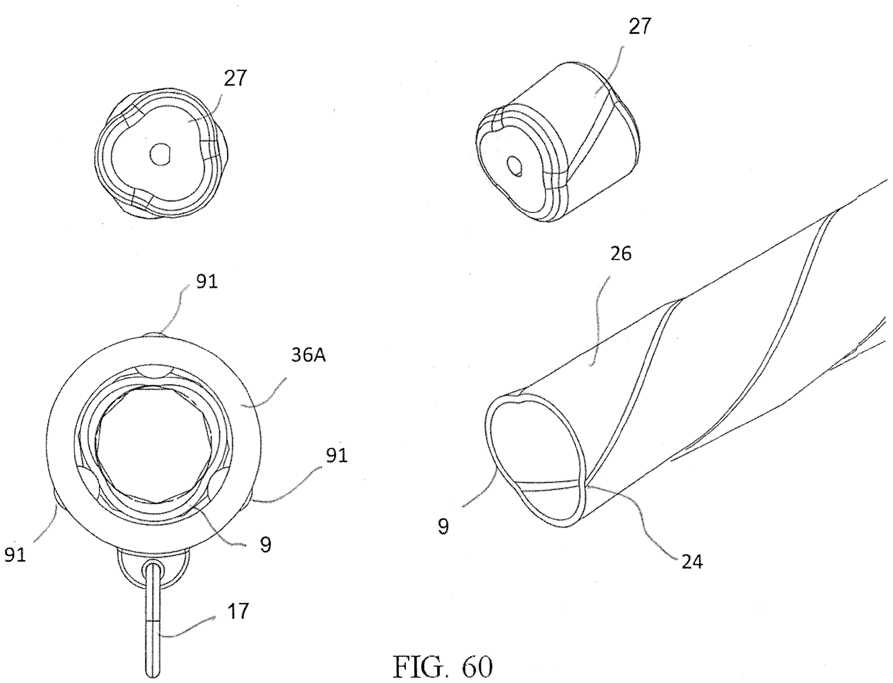

The rotatable drive element **22** is preferably cylindrical in shape as shown in FIGS. 31, 32, 34, and 59, which shows the drive element **22** having an inner tube, referred to as an inner drive element **9,** and an outer tube or sleeve **63.** However, the shape of inner drive element **9** and an outer tube or sleeve **63** of the drive element **22** are not limited and can be non-circular. In an alternative embodiment, as shown in FIG. 60, the rotatable drive element **22** may be tri-lobed. In this case the drive element is a spiraled tube having creases that a ball bearing can ride in.

The drive element **22** may vary in size. For example, the drive element **22** may be the width of the window **34** or it may be wider than the window **34.** There is no limitation on the diameter of the drive element **22** other than space needed inside a room. Preferably, the drive element **22** is configured to mount a motor **82** inside the drive element **22** rather than mounting the motor **82** outside the drive element **22.** Using the inside of the drive element **22** to conceal the motor **82** may give a more aesthetically pleasing design for a curtain assembly 1 or **20.** Any number of materials may be used to fabricate the drive element **22** provided the drive element **22** can support the weight of the outer and inner curtains **44A**, **44B.**

The drive element **22** comprises a guide structure 24, such as a helical groove, over at least one or more portions of the length of the drive element **22.** The drive element **22** has opposing distal end portions **35, 59** and may be any length along the longitudinal axis **60** of the drive element **22.** The longitudinal axis **60** of the drive element **22** is shown in FIGS. 27-30. The length of the guide structure along the drive element **22** is a factor in determining how far the curtain **44A or 44B** will travel across the drive element **22,** i.e., the entire length of the drive element **22** as opposed to some shorter section of the drive element **22.**

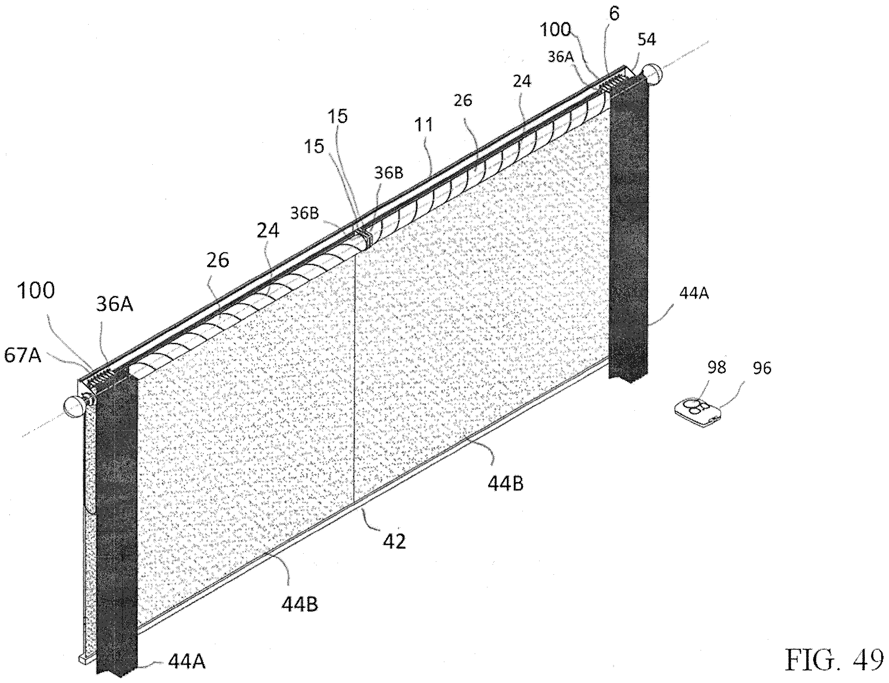

In an embodiment, the drive element **22** has at least one helical groove **24** that is formed in either a clockwise direction or a counterclockwise direction on the outer surface **26** of the drive element **22** extending from one distal end portion **35, 59** of the drive element **22** to the opposing distal end portion **35, 59** of the drive element **22.** FIG. 49 illustrates a left hand drive element **22** in which the helical groove **24** is in a clockwise direction and also illustrates a right hand drive element **22** in which the helical groove **24** is in a counterclockwise direction.

In some embodiments, the drive element **22** may have two helical grooves **24,** one formed in the clockwise direction and one formed in the counterclockwise direction as shown in FIG. 59. A drive element **22** having a drive element **22** with helical grooves **24** in both directions is particularly useful for center closing curtains **46** as explained below.

In the preferred embodiment, the drive element **22** may have two helical grooves **24** in the same direction, where the inner drive attachment element **36B** has two teeth **5a** and **5b** spaced 180 degrees apart and the outer drive attachment element **36A** has two teeth **4a** and **4b** spaced 180 degrees apart, such that tooth 4a, and tooth 5a, engages one of the helical grooves and tooth 4b, and tooth 5b, engages the other helical groove at the same time, respectively, so as to add stability with respect to driving Drive attachment element 36A, and 36B, respectively.

In other embodiments, the drive element preferably has four helical grooves **24,** two clockwise helical grooves **24** and two counterclockwise helical grooves **24** as shown in FIG. 59. A cross-sectional view of the rotatable drive element having four helical grooves **24,** two clockwise helical grooves and two counterclockwise helical grooves is shown in FIG. 59. Helical grooves are preferably spaced approximately 180 degrees apart. The clockwise helical grooves **24** and the counterclockwise helical grooves **24** preferably opposed each other and are spaced 180 degrees apart. The profile of the helical grooves **24** is self-centering to allow the first outer drive tooth **4a** and the first inner drive tooth **5a** to traverse the intersection of the clockwise helical groove and the counter clockwise helical groove without binding.

The helical groove **24** forms a path through the drive element **22** of the drive element **22** as shown in FIGS. 27-30. As the drive element **22** rotates, one of the curtains **44A or 44B** is pulled along the helical groove **24** across the drive element **22** into a deployed or stored position. Both the clockwise and the counterclockwise helical grooves **24** will cause the curtain **44A or 44B** to move axially across the drive element **22** when the drive element **22** rotates and the curtain drive elements **36A** or **36B** are engaged with the helical groove **24.**

The helical grooves **24** may be formed by forming grooves into the outer surface **26** of the drive element **22** such that the grooves are recessed from the outer surface **26** of the drive element **22.** Alternatively, the helical grooves **24** may be formed as protrusions that project or bulge from the outer surface **26** of the drive element **22.** The protrusions may be formed any means, for example, by winding material around the outer surface **26** of the drive element **22.**

The angle of the helical groove **24** may vary and therefore, may differ in the amount of time that it takes to travel across the drive element **22.** For example, a helical groove **24** with a larger angle may create a shorter path for the curtain **44A**, **44B** to travel and result in a faster moving curtain **44A** or **44B** for a given rotational speed of the drive element. In some embodiments, the angle of the helical grooves **24** may vary along the drive element **22** such that the curtain **44A**, **44B** may move at different speeds along the drive element **22,** for a given rotational speed of the drive element, if desired. The angle of the helical groove **24** preferably varies from 30 degrees to 60 degrees and is most preferably 45 degrees.

In an alternative embodiment, the drive element **22** may be formed from a drive sleeve or outer tube **63** that is sized to fit around a portion of an inner drive element **9,** which can be, for example, an inner tube **61.** In this case, the drive sleeve has at least one helical groove **24** in a clockwise or counter clockwise direction formed on the outer surface of the sleeve. The drive element **22** must be able to translate the torque from the rotation assembly to axially movement of the curtain support or attachment elements **36A**, **36B** across the drive element **22,** and the drive sleeve may be made from a high lubricity material. Therefore, the drive sleeve can be secured to the inner drive element **9** such that the sleeve does not slide up or down the drive element **22** or rotate around the inner drive element **9.** It may also be desired to remove the sleeve from the inner drive element **9** and replace it with another sleeve. Using a sleeve to form the drive element **22** has the advantage that the helical groove **24** or the length of the drive element **22** may be easily changed by removing the sleeve and replacing it without fabricating a new drive element **22.**

### ATTACHMENT ELEMENTS AND TEETH

In some embodiments, the curtain assembly **1** may include at least one outer curtain drive attachment element **36A** connected to the drive element **22** and has a drive teeth **4a** and **4b** that communicates with the helical groove **24** to move the outer curtain drive attachment element **36A** axially along the drive element **22** when the drive element **22** is rotated. The outer curtain drive attachment element **36A** is connected one end of the outer curtain **44A.** The curtain assembly **1** may include at least one inner drive attachment element **36B** connected to the drive element **22** and has a drive teeth **5a** and **5b** that communicates with the helical groove **24** to move the inner drive attachment element **36B** axially along the drive element **22** when the drive element **22** is rotated. The inner drive attachment element **36B** is connected one end of the inner curtain **44B.**

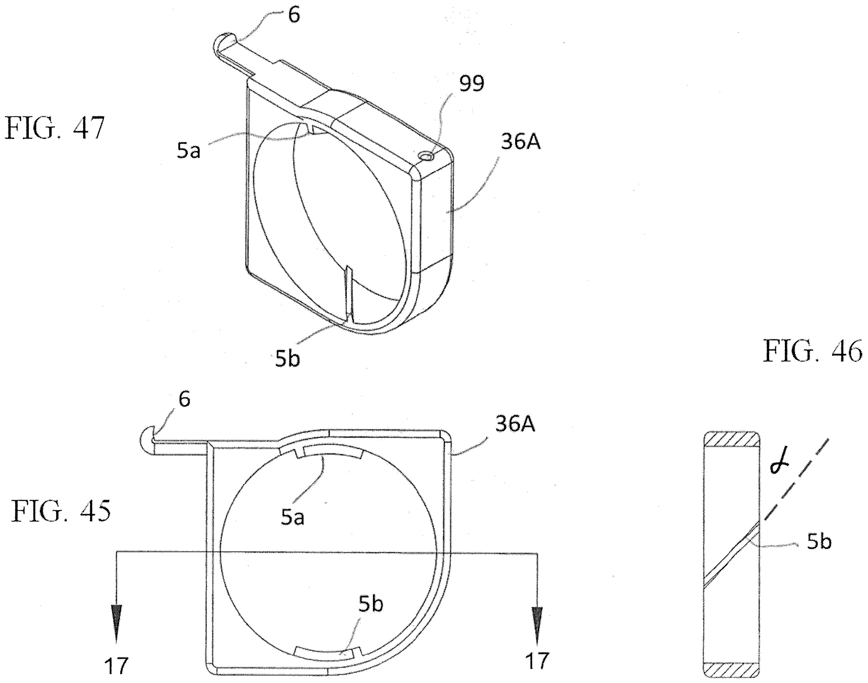

FIGS. 45-47 show the front and cross-sectional views of the outer curtain drive attachment element **36A** as well as the drive teeth **5a** and **5b.** Both the first outer drive tooth **5a** and the second outer drive tooth **5b** are configured to communicate with the helical groove **24** of the drive element **22.** The first outer drive tooth **5a** and the second outer drive tooth **5b** are positioned inside the outer drive attachment element **36A** which shows the angle α of one drive tooth and both the angles are 45 degrees.

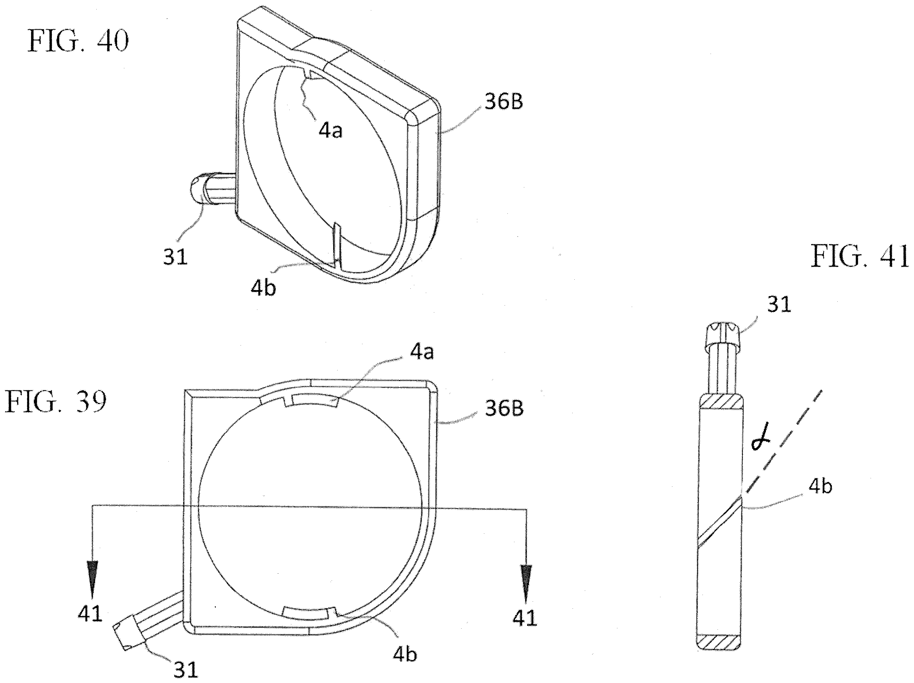

FIGS. 39-41 show the front and cross-sectional views of an embodiment of an inner drive attachment element as well as the drive teeth 4**a** and 4**b**. Both the inner drive tooth 4**a** and the inner drive tooth **4b** are configured to communicate with the helical groove **24** of the drive element **22.** The inner drive tooth **4a** and the inner drive tooth **4b** are positioned inside the drive attachment element which shows the angle α of one drive tooth and both the angles are 45 degrees. In this embodiment, the inner carrier attachment post **31** is located at a portion of the inner drive attachment element designed to interconnect with a carrier in the inner curtain carrier track **81.**

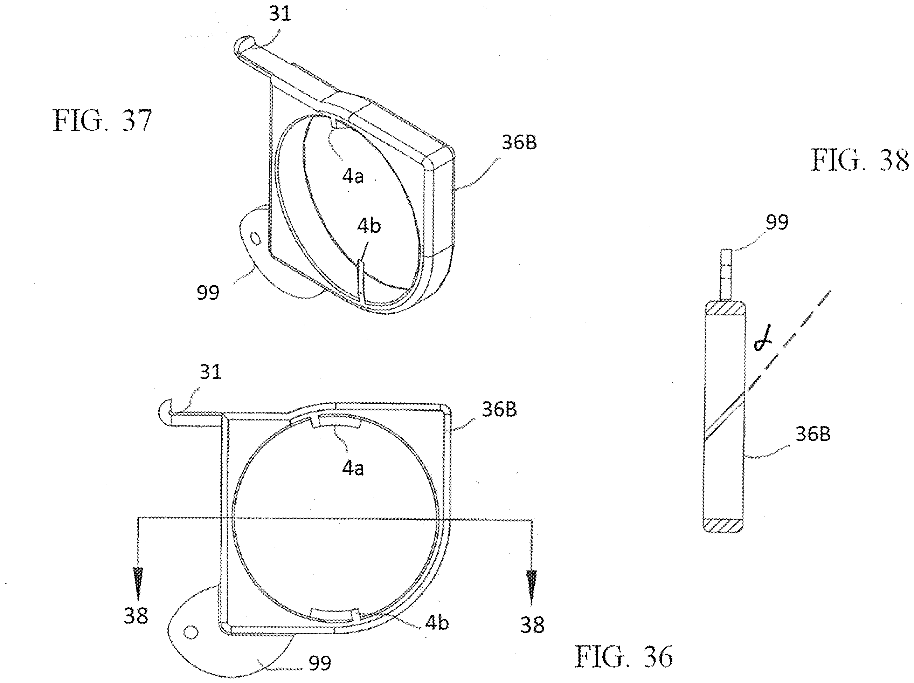

FIGS. 36-38 show the front and cross-sectional views of an alternative inner drive attachment element **36B** as well as the drive teeth 4**a** and 4**b**. Both the inner drive tooth 4**a** and the inner drive tooth **4b** are configured to communicate with the helical groove **24** of the drive element **22.** The inner drive tooth **4a** and the inner drive tooth **4b** are positioned inside the drive attachment element which shows the angle α of one drive tooth and both the angles are 45 degrees. In this embodiment, the inner carrier attachment post **31** can be the same as the outer carrier attachment post **6** of Figures 45-47 designed to interconnect with a carrier in the outer curtain carrier track **12,** and the attachment points of the inner curtain can attach via hooks to the receiver for hooks **99.**

As shown in various figures, the outer curtain outer curtain drive attachment element **36A** and the inner curtain drive element **36B** are ring-shaped and slide over the drive element **22.** Although a different construction may be used for the outer curtain outer curtain drive attachment element **36A** and the inner curtain drive element **36B,** they are be able to connect to the appropriate ends of the outer curtain **44A** and the inner curtain **44B** and engage the helical groove **24** and move across the drive element **22.**

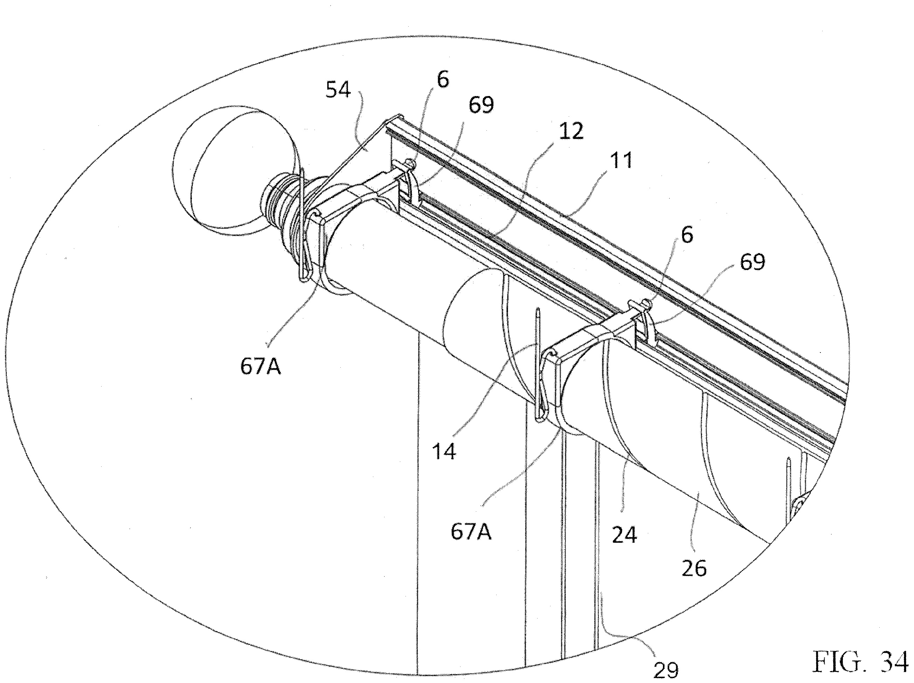

The outer curtain outer curtain drive attachment element **36A** is preferably provided with a slot or a hole **99** into which a traditional curtain hooks or pins can be used to connect the ends and upper edge of the outer curtain **44A** to the appropriate attachment element. FIG. 34 illustrates an example of the hole **99** and a pin hook **14** on an outer curtain idler attachment element **67A.** In another embodiment, as shown in FIG. 60, a traditional curtain ring is used. The inner curtain **44B** is suspended by S-hooks **17** in inner curtain carrier track **81** in support guide **11.** Curtain pins, hooks and rings are well known in the art to hang curtains **44A**, **44B.**

The drive tooth **5a** on the outer drive attachment element **36A** and the drive tooth **4a** on the inner drive attachment element **36B** may have the same construction. The outer drive tooth **5a** and the inner drive tooth **4a** are both designed to engage with the helical groove **24** of the drive element **22** to drive the curtain **44A or 44B** across the drive element **22.** In one embodiment, the drive tooth **5a** is formed on an angle inside the body of the outer curtain drive attachment element **36A.** The angle is specifically designed to engage the helical groove **24** on the drive element **22.** A design consideration is to maximize the contact between the rotating drive element **22** and the outer drive attachment element **36A** and/or inner drive attachment element **36B** to carry the weight of the curtain **44A or 44B.** The outer curtain outer curtain drive attachment element **36A** and the drive teeth **5a** and the inner curtain drive attachment element **36B** teeth and the inner curtain teeth **4a,** in some embodiments of the present invention, are adjustable. The adjustability of these components allow the user of the curtain assembly to set the correct timing on the location of the outer curtain drive attachment element(s) **36A** and inner curtain drive attachment element(s) **36B** in relationship to the helical grooves **24.**

Although the curtain support described in the embodiments above is an outer curtain outer curtain drive attachment element **36A** and an inner curtain drive attachment element **36B,** other embodiments for the curtain support may be used as well.

### OUTER CURTAIN IDLER ATTACHMENTS

The curtain assembly **1** may further comprise a plurality of outer curtain idler attachment **67A** connected to the rotatable drive element **22** for sliding movement along the drive element **22** wherein the adjacent ends of the outer curtain **44A** that are not connected to the outer curtain drive attachment element **36A** are suspended from the drive element **22** using one or more outer idler attachment elements **67A.**

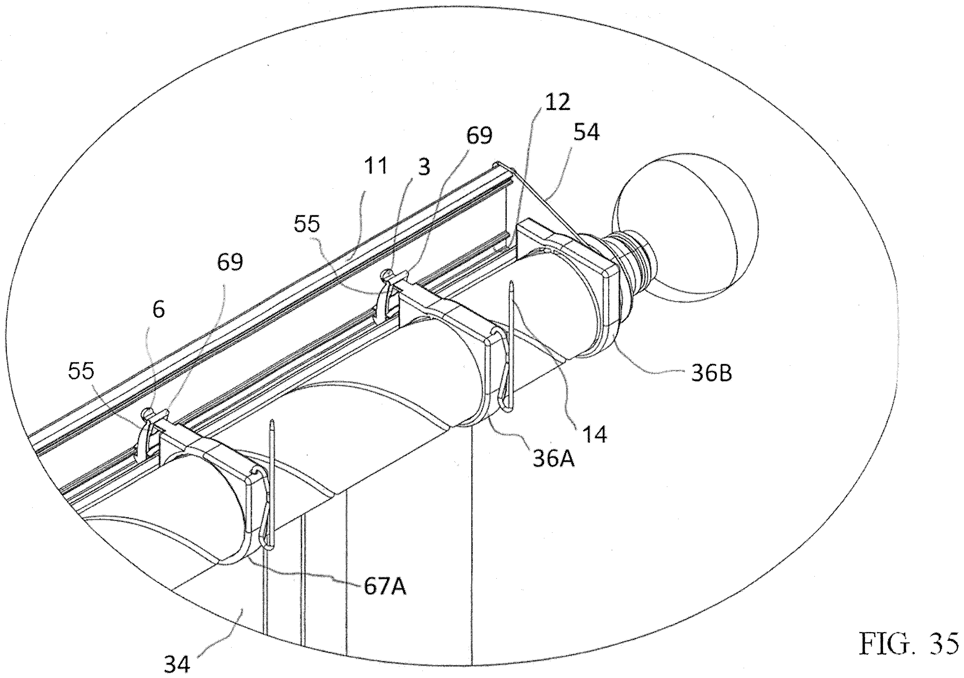

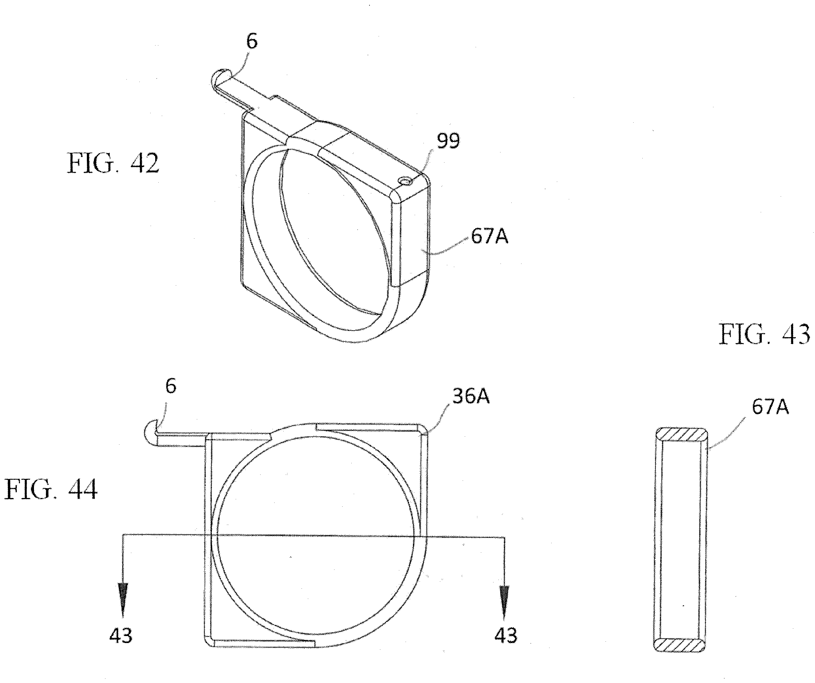

The outer curtain **44A** has the movable end connected to the outer drive attachment element **36A.** The non-movable end of the outer curtain **44A** can be attached to the end bracket **54.** Outer idler attachment elements **67A** may be used to suspend the remaining attachment points of outer curtain **44A** to the drive element **22.** The outer idler attachment elements **67A** are connected to the rotatable drive element **22** as shown in FIGS. 31-32 and 34-35. An enlarged view of the outer idler attachment **67A** is shown in FIGS. 42-44.

The outer idler attachment **67A** may be shaped similar to the outer drive attachment element **36A** and inner drive attachment element **36B.** The outer idler attachment **67A** can have a smooth bore to allow free movement along the drive element **22** of the tube as the curtain **44A** is moved or may have a tooth on each outer idler attachment **67A** to assist in the movement of the curtain **44A.**

The outer idler attachments are also linked to the outer curtain carriers **69** by the insertion of the outer carrier attachment post **6** on the outer idler attachment elements 67A into the aperture **55** on outer curtain guide carrier **69.** The outer current carriers are then positioned in the outer curtain carrier track **12** in the support guide **11.** This prevents the outer curtain idler attachment **67A** from rotating or binding the rotation of the element **22.**

The outer curtain idler attachment **67A** are preferably provided with a slot or a hole **99** into which a traditional curtain hook or pin can be used to attach the ends of the outer curtain **44A** to the outer curtain idler attachment. FIG. 42 illustrates an example of this hole **99** and a pin hook **14** on an outer curtain idler attachment **67A.**

The inner curtain **44B** can have the stationary end connected to the end bracket **54** and other end attached to the inner drive attachment element **36B.** The inner curtain carrier track **81** and hooks **17** may be used to suspend the remaining attachment points of the inner curtain **44B** to the inner curtain carrier track **81** of the support guide **11** along the axis of the drive element **22.**

The outer curtain **44A** is connected to the outer drive attachment element **36A** and the inner curtain **44B** is attached to the inner drive attachment element **36B.** This arrangement ensures that the outer curtain **44A** and inner curtains **44B** drive attachment elements **36A** and **36B** are linked together on the same drive element **22** and they are able to move in sequence across the drive element **22.**

### OUTER DRIVER STALL AREA AND INNER DRIVER STALL AREA

The curtain assembly **1** preferably includes at least one outer driver stall area **100** positioned to one end of the drive element **22** to engage and disengage the outer drive attachment element **36A** from the helical groove **24** of the drive element **22.**

The curtain assembly **1** also preferably includes at least one inner driver stall area **15** positioned on the distal end of the drive element **22** that is configured to hold the inner curtain drive element **36B** in place while the outer drive attachment element **36A** moves through the drive element **22.**

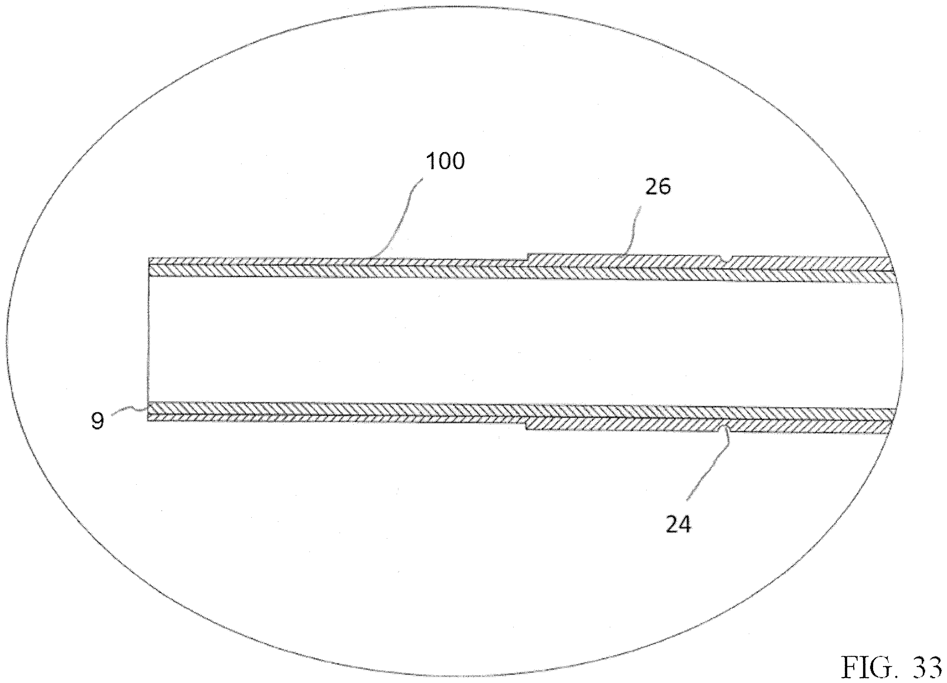

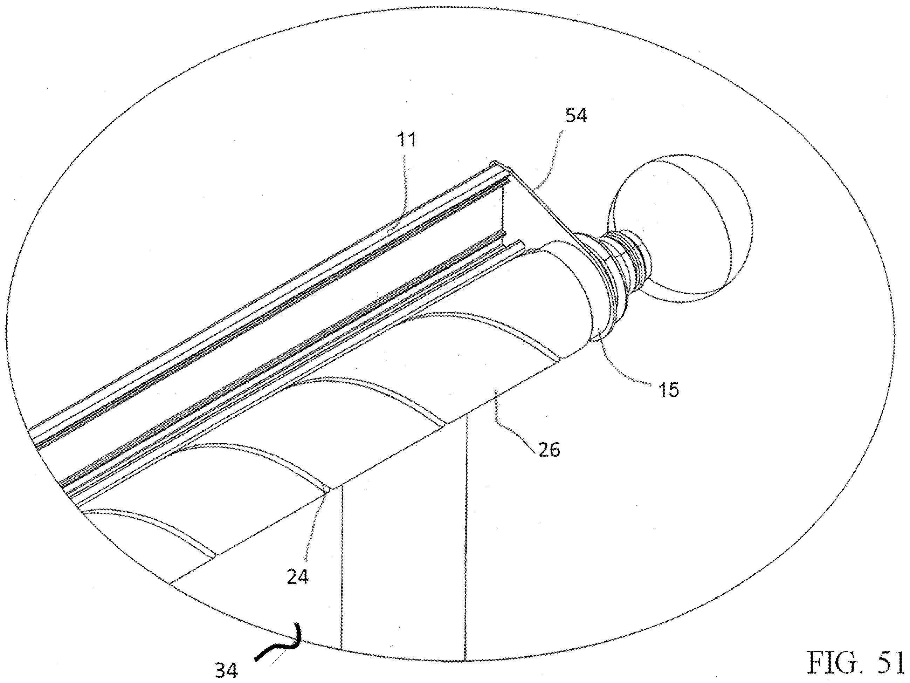

FIGS. 33-34 show an outer driver stall area **100** at one distal portion **35, 59** of the drive element **22.** FIG. 51 shows the inner driver stall area **15** at the opposing distal end **35, 59** of the drive element **22.** FIG. 49 shows a rotatable drive element **22** having an outer driver stall area **100** at each distal end portion of the drive element **22** and an inner driver stall area **15** positioned in between the two stall areas s **100.** The rotatable drive element **22** shown in FIG. 49 will accommodate the outer curtains **44A** and inner curtains **44B,** as center closing curtains.

Enlarged views showing details of the outer driver stall area **100** are shown in FIG. 34. The outer driver stall area **100** is a section of the drive element **22** along the drive element **22** without a helical groove **24** formed on the outer surface **26** of the drive element **22.** The outer driver stall area **100** interrupts the movement of the outer curtain **44A** or the inner curtain **44B** along the helical groove **24** therefore allowing the curtain assembly **1** to change which attachment element (either the outer curtain drive attachment element **36A** or the inner curtain drive element **36B**) is engaged with the helical groove **24.**

The outer driver stall area **100** also serves to collect or provide a space for the outer curtain idler attachment elements **67A** as well as the outer curtain drive attachment element **36A.** For example, when the outer curtain drive attachment element **36A** is engaged and moves through the drive element **22,** it will reach the outer driver stall area **100** at the end of the drive section. The outer driver stall area **100** stops the movement of the outer curtain drive attachment element **36A** in the helical groove **24** and temporarily stores the outer curtain drive attachment element **36A.** The outer curtain idler attachment elements **67A** that are holding the remaining adjacent end of the curtain **44A** are pushed by the outer curtain drive attachment element **36A** and ultimately stack up in the outer driver stall area **100** until the outer curtain drive attachment element **36A** becomes disengaged with the helical groove **24** and will remain stalled until the drive element **22** rotates in the opposite direction. As this disengagement occurs, the outer curtain drive attachment element **36A** pushes against the outer curtain idler attachment **67A** in the outer driver stall area **100** which moves the inter-curtain engager **49** toward the end bracket **54.** The inner curtain **44B,** being the correct length, pulls the inner curtain drive element out of the inner driver stall area **15** and into engagement with the helical grooves **24.**

In some embodiments, the inner driver stall area **15** is positioned at the distal end **59** of the drive element **22** opposite the outer driver stall area **100** and functions to hold the inner curtain drive element **36B** stalled in place. In other embodiments, at least one inner driver stall area **15** is positioned between two outer driver stall areas **100,** as shown in FIG. 49. The position of the inner driver stall area **15** on the drive element **22** defines the end of the portion of the drive element **22** where the inner curtain drive element **36B** travels on the drive element **22.**

As described above, FIG. 27 shows a curtain assembly **1** when the outer curtain **44A** (blackout) is in the deployed position and the inner curtain **44B** is also in the deployed position. At this moment, the outer curtain **44A** is fully extended and the curtain drive attachment element **36A** is in the helical groove **24** at one distal end of the drive element **22** and the inner curtain drive element **36B** is in the inner driver stall area **15** at the same end of the drive element **22.** To change the positions of the curtains such that the outer curtain **44A** is in the stored position and the inner curtain **44B** stays in the deployed position as shown in FIG. 28, the drive element **22** starts to rotate in the opposite direction. The rotation of the drive element **22** will move the outer curtain drive attachment element **36A**, attached to outer curtain **44A**, collapsing curtain **44A** into the stored position until outer curtain drive attachment element **36A** moves into the outer driver stall area **100** where it will push against the outer idler attachment elements **67A** in the outer driver stall area and force the inter-curtain engager **49** toward the end bracket **54** creating a tug pressure on the inner curtain **44B** and the inner curtain drive element **36B** because the inner curtain **44B** is the correct length and extended. This tug pressure pulls the inner curtain drive element **36B** out of the inner driver stall area **15** and into engagement with the helical groove **24** positioning the curtains as shown in FIG. 28. When the inner curtain **44B** is fully extended, the inner curtain drive element **36B** will move into the inner driver stall area **15.** Because the inner curtain is now extended, the outer curtain drive attachment element **36A** will be pulled into the helical groove **24** prepared to deploy the outer curtain **44A.** Because the inner driver stall area **15** does not have a helical groove **24,** the inner curtain attachment **36B** element is prevented from moving or stalled along the drive element **22.**

As the outer drive attachment element **36A** moves through the drive element **22,** the outer curtain **44A** will move from the stored position to the fully deployed position and the outer drive attachment element **36A** moves up to and against the inner curtain drive element **36B** in the inner driver stall area **15** and stops the drive element **22** from rotating The curtain assembly **1** will then be as shown in FIG. 27, with the outer curtain **44A** in the deployed position and the inner curtain **44B** in the deployed position.

To move the inner curtain 44B to the stored position as shown in FIG. 29, the drive element 22 will rotate and the outer drive attachment element 36A moving into the outer driver stall area 100 will pull the inner curtain drive element 36B from the inner driver stall area 15 thereby engaging the inner curtain drive element 36B with the helical groove 24. The inner curtain drive element 36B will move the curtain 3 through the drive element 22 from the deployed position to the stored position at the other distal end of the drive element 22 until the inner curtain drive element 36B pushes against the outer drive attachment element 36A and stops the drive element 22 from rotating. At this point, the inner drive attachment element 36B is engaged with the helical groove 24.

### GUIDE MECHANISM

The curtain assembly 1 preferably includes a support guide 11 wherein the guide means facilitates the movement of the outer and inner curtains 44A, 44B along the drive element 22 without misalignment. The support guide 11 may also assist with the spacing of the curtain panels when the outer curtain 44A or the inner curtain 44B is fully extended in the deployed position.

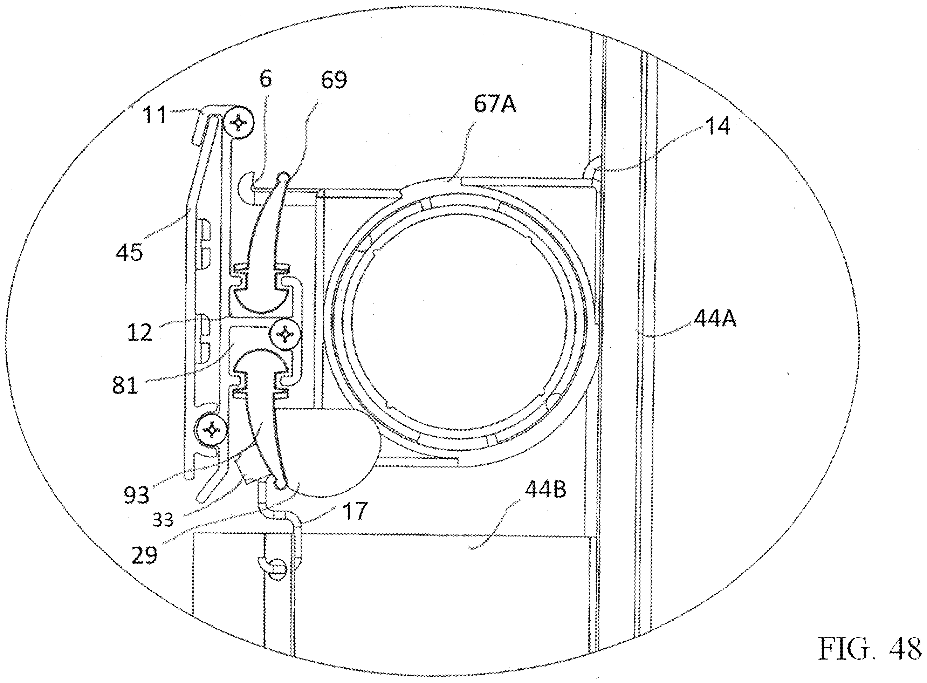

In one embodiment, the support guide 11 is an elongated pair of channels positioned parallel to the rotatable drive element 22. The support guide 11 is shown in several of the figures, including an end view in in FIG. 48. The inner curtain carrier track 81 and the outer curtain carrier track 12 are the same part but are numbered differently and discussed differently because their functions are different. The inner curtain carriers 93 have apertures 55 where an inner carrier attachment post 31 on the inner curtain drive element 36B inserted at one end of the inner curtain and an inner carrier attachment post 31 on the inter-curtain engager 49 is inserted on the other end. The remaining inner curtain carriers 93 have S-hooks 17 inserted into the aperture 55 as known in the art.

The outer drive attachment element 36A and the outer curtain idler attachment 67A preferably have a hanger pin hole 99 wherein the pin hooks 14 are connected to the attachment elements and support the outer curtain 44A. Further, these attachment elements 36A and 67A to the outer curtain 44A are guided and held from rotation by the insertion of the outer carrier attachment posts 6 into the apertures 55 in curtain carriers 69 riding in the outer curtain carrier track 12 in support guide 11.

The motor 82 for the curtain assembly 1 may be programmed from the factory with a preset number of drive element 22 revolutions to move the curtain the width of the window 34 opening. However, there are a variety of reasons why this preset number of revolutions may change. For example, the drive element 22 may be shortened to accommodate a narrower window 34.

Therefore, the initial setup of the motor 82 may be able to count the number of revolutions the drive element 22 makes to fully open and fully close the curtains 44A or 44B. This may be accomplished by a setup routine where pressing a program button 98 on a remote control 96 once to start the motor 82 moving the curtain 44A, 44B and then pressing the button 98 another time to stop the movement which will store the number of revolutions the curtain 44A, 44B has moved.

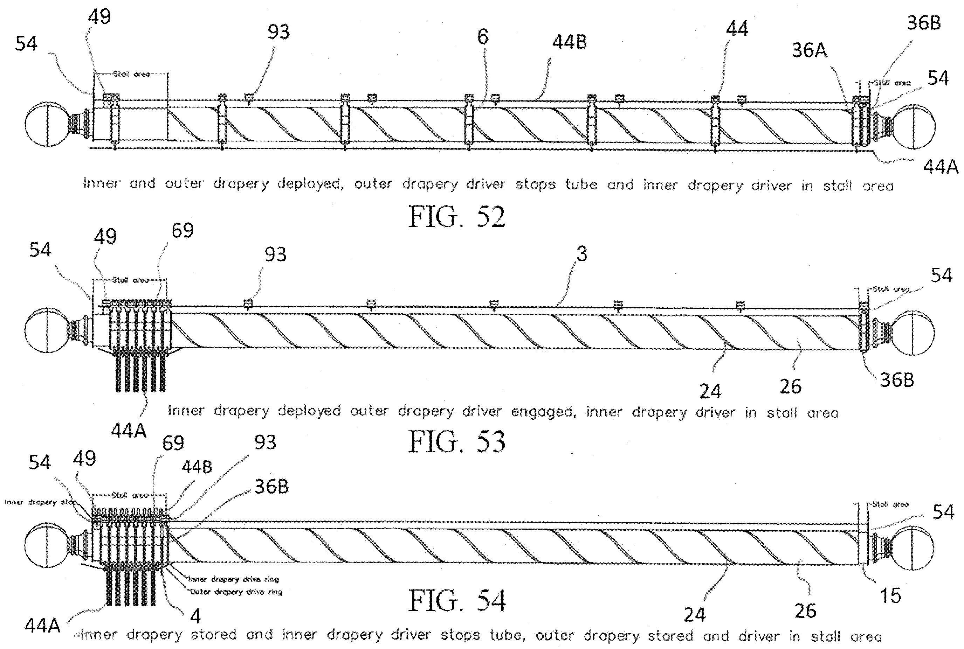

The number of revolutions can be confirmed by pressing the program button 98 a third time, which will reverse the motor 16 and move the curtain 44A, 44B in the opposite direction. Pressing the program button 98 a fourth time will stop the curtain 44A, 44B, compare the counts, and set a new count in the memory to complete the set up routine. If the program button 98 on the remote control 96 is not pressed the inner time, the motor 82 will run until the preset count is reached, then the motor 82 will shut off. If the number of revolutions is ever lost, the controls can reset a zero position when the outer curtain drive attachment element 36A stops the drive element 22 from rotating when the outer curtain 44A is fully deployed, as shown in FIG. 52 or when the outer curtain 44A and the inner curtain 44B are fully stored and the inner curtain drive element 36B stops the drive element 22 from rotating, as shown in FIG. 54.

In specific embodiments, the drive element 22 stops rotating when the inner driver attachment element 36B and the outer driver attachment element 36A are brought into contact at either end of the drive element. When the inner driver attachment element 36B and the outer driver attachment element 36A are brought into contact, the inner driver attachment element 36B and the outer driver attachment element 36A bind together and their teeth bind in the drive element's grooves. The interconnection of the inner driver attachment element 36B and the outer driver attachment element 36A to the support guide 11 in opposite orientations helps to cause this binding. Once the inner driver attachment element 36B and the outer driver attachment element 36A bind together, the drive element is bound, and the controller board senses that the driver element is no longer rotating and stops running the motor.

In specific embodiments, the stall area **100** and/or **15** prevents one of the inner driver attachment element **36B** and the outer driver attachment element **36A** from moving down the drive element **22.** When the inner driver attachment element **36B** and the outer driver attachment element **36** meet each other, the axial force (down the rotational axis of the rotating drive element) binds the stalled driver to the still-driving driver. This, coupled with the weight of the curtain hanging from the outer driver and the interconnection of the inner driver attachment element **36B** and the outer driver attachment element **36A** to the support guide, causes the driver whose teeth are still engaged to the tube to bind up with the rotational drive element. At that point, this driver is being torqued so as to try and rotate around the axis of rotation and prevented from such rotation by the support guide, which stalls the motor and signals the controller board to stop running the motor.

The dual curtain assembly mounted in rubber mounting disk **13** increases the sensitivity of motion such that a person can pull on the stored or deployed curtain and activate the motor to move the curtain in the opposite direction from the last movement. The motor controls will count the number of revolutions and when the predetermined count is matched it will shut the motor down.

### CENTER CLOSING EMBODIMENTS

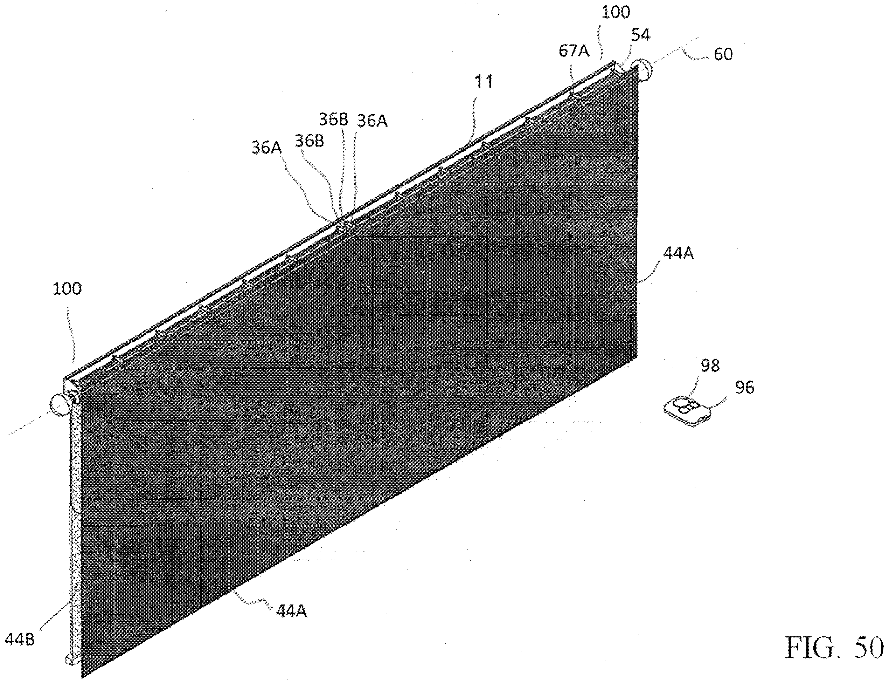

An alternative embodiment of the dual curtain assembly **1** is shown in FIGS. 49 and 50 in which the outer curtain **44A** and the inner curtain **44B** are center closing curtains. A center closing curtain is composed of two fabric panels, a right panel and a left panel, that meet in the center of the window **34** to close and cover the window **34.** In FIG. 50, the outer curtain **44A** is a center closing blackout curtain that is in the deployed position and the inner curtain **44B** is a center closing sheer curtain that is also in the deployed position. In FIG. 49, the outer curtain **44A** is a center closing blackout curtain that is in the stored position and the inner curtain **44B** is a center closing sheer curtain that is in the deployed position. In this embodiment, the drive element **22** of the drive element **22** preferably has four helical grooves **24,** two formed in the clockwise direction and two formed in the counterclockwise direction. For example, the opposing helical grooves **24** shown in FIG. 59 create the correct movement of the center closing curtains with one motor **82** turning the drive element **22** in one direction. FIG. 59 shows an enlarged cross-sectional view of the rotatable drive element according to one embodiment of the curtain assembly showing the four helical grooves formed on the outer surface of the drive element. FIG. 59 also shows an enlarged perspective view of the rotatable drive element according to one embodiment of the curtain assembly showing the four helical grooves formed on the outer surface of the drive element.

To accommodate center closing curtains, the curtain assembly **1** has a left outer drive attachment element **36A**, a right outer drive attachment element **36A**, a left inner drive element **36B** and a right inner drive attachment element **36B** as shown in FIGS. 49 and 50. The left outer drive attachment element **36A** is connected to one end of the left panel of the outer curtain **44A.** The right outer drive attachment element **36A** is connected to one end of the right panel of the outer curtain **44A.** The left inner drive element **36B** is connected to an adjacent end of the left panel of the inner curtain **44B** and the opposite end of the inner curtain is attached to the end bracket **54.** The right inner drive attachment element **36B** is connected to adjacent end of the right panel of the inner curtain **44B** and the opposite end of the inner curtain is attached to the end bracket **54.**

FIG. 49 shows an embodiment of a rotatable drive element **22** in which the outer curtain **44A** and the inner curtain **44B** are both center closing curtains. There is an outer driver stall area **100** positioned at each distal end of the rotating drive element **22** and an inner driver stall area **15** positioned between the outer driver stall area s **100.** For example, there is a left outer driver stall area **100** positioned along the drive element **22** to engage and disengage the left outer drive attachment element **36A** from the helical groove **24** of the drive element **22** and a right outer driver stall area **100** positioned along the drive element **22** to engage and disengage the right outer drive attachment element **36A** from the helical groove **24** of the drive element **22.** The inner driver stall area **15** is configured to hold the left inner n drive element **36B** in place while the left drive attachment element **36B** moves through the drive element **22.** The same inner driver stall area **15** is also configured to hold the right inner drive attachment element **36B** in place while the right inner drive attachment element 36B moves through the drive element **22.** Alternative embodiments can have two separate inner driver stall area **15.** FIG. 49 illustrates that the left and right inner drive attachment elements **36B** will meet in the center **42** of the window **34** when the outer curtain **44A** is deployed and the inner curtain **44B** is stored to minimize light leakage. Therefore, the single inner driver stall area **15** in some embodiments is wide enough to fit both the left inner curtain drive element **36B** and the right inner curtain drive attachment element **36B.**

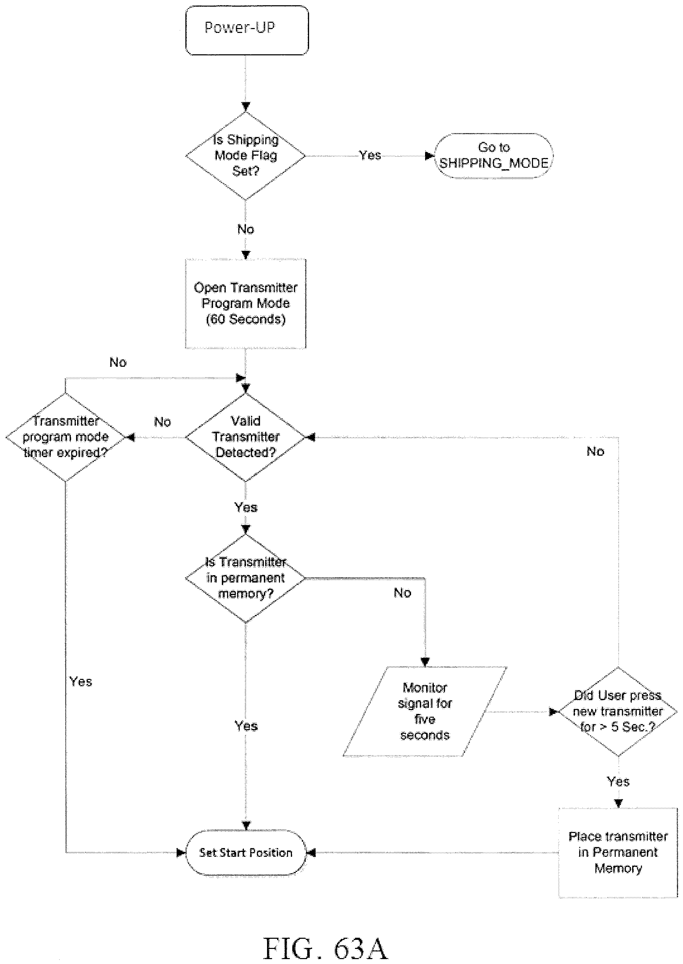

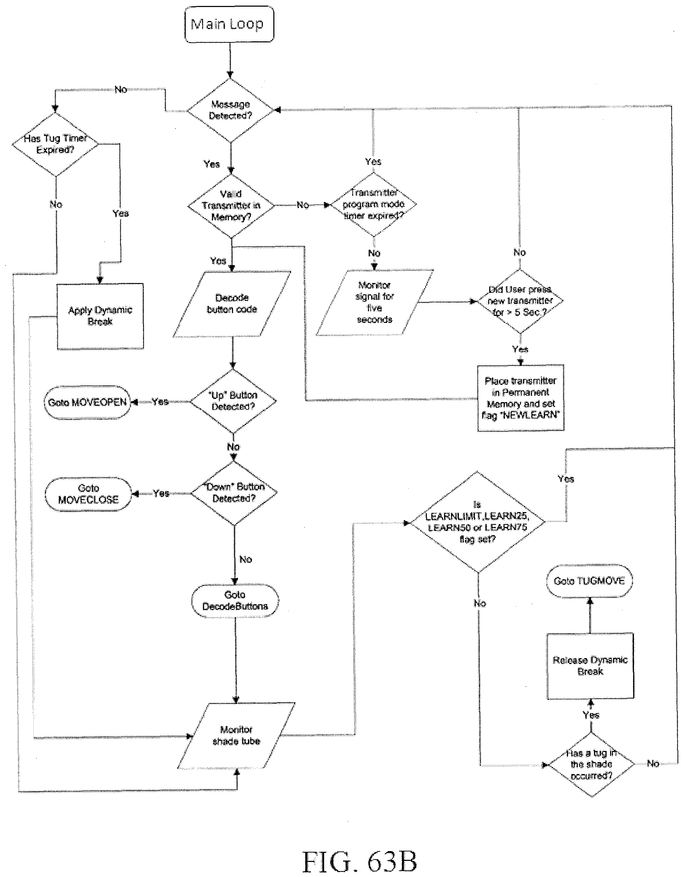

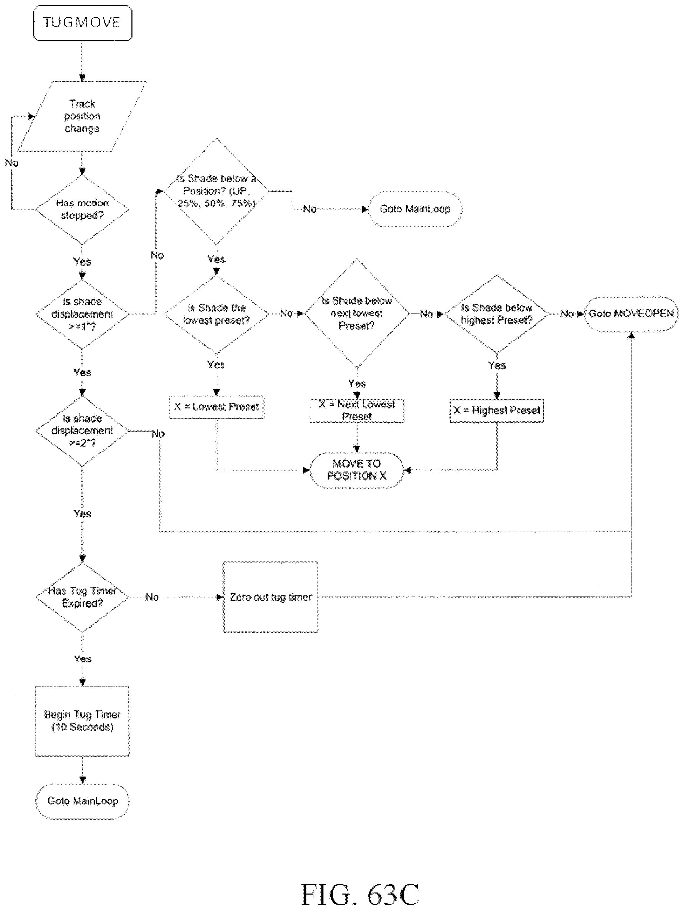

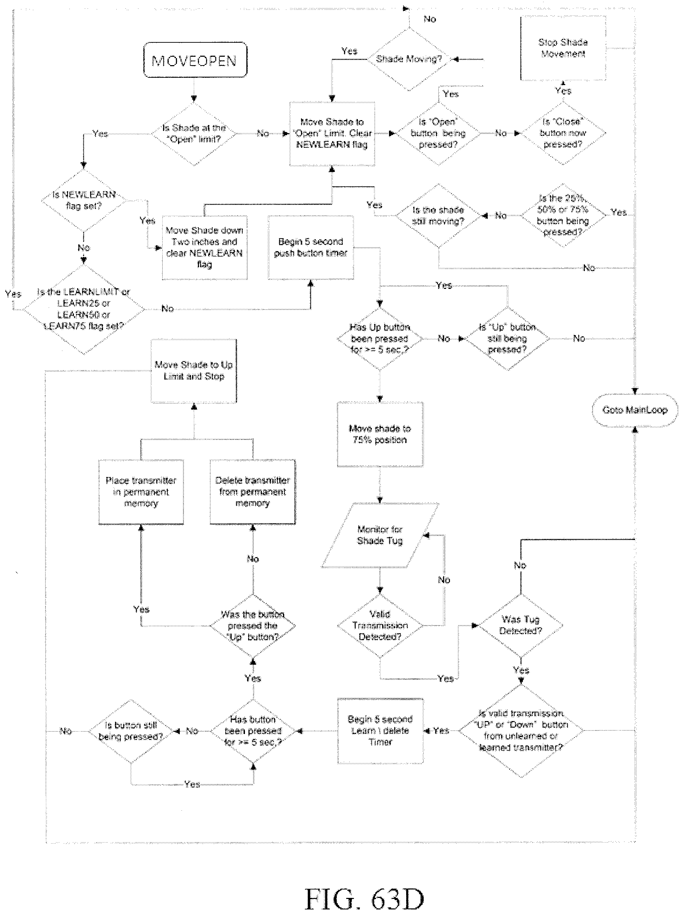

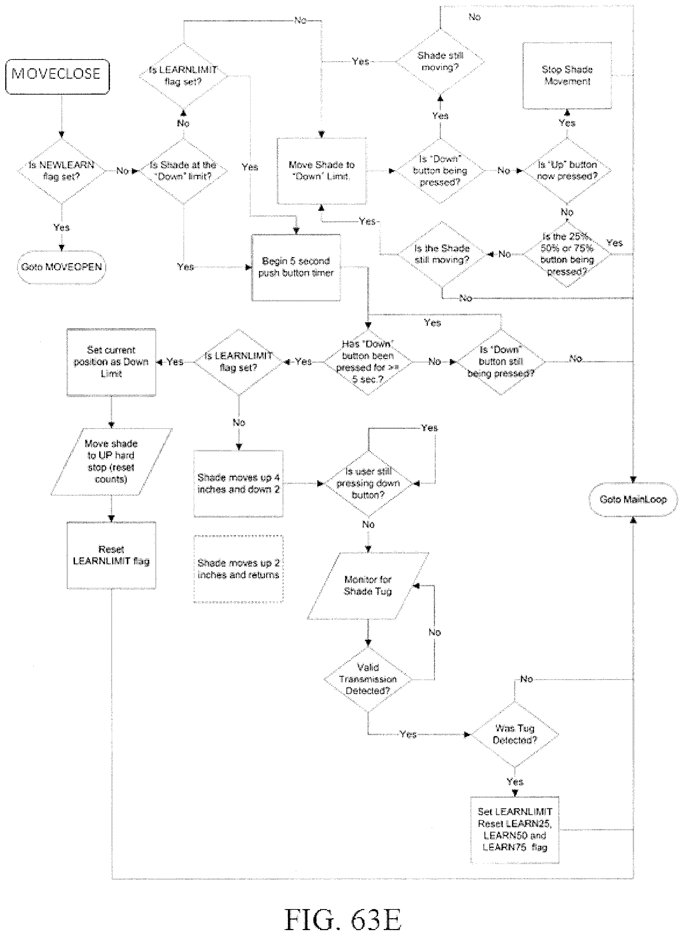

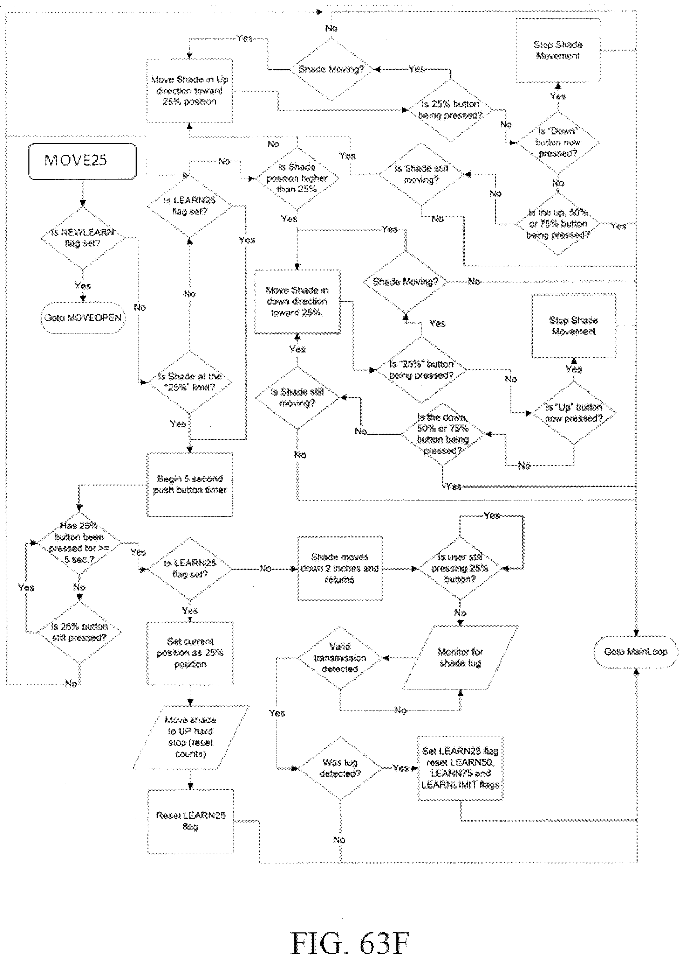

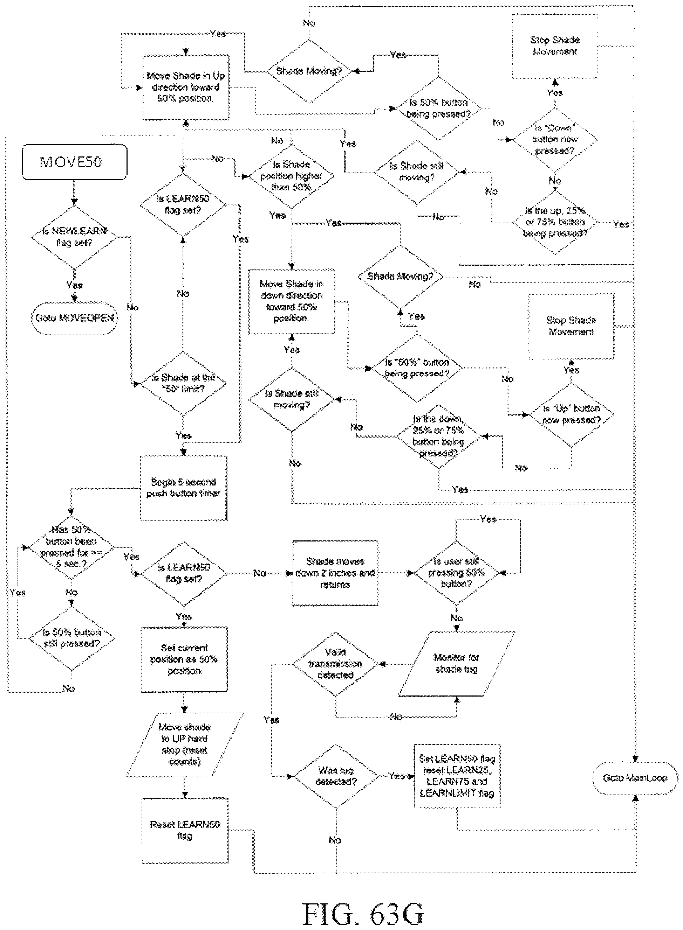

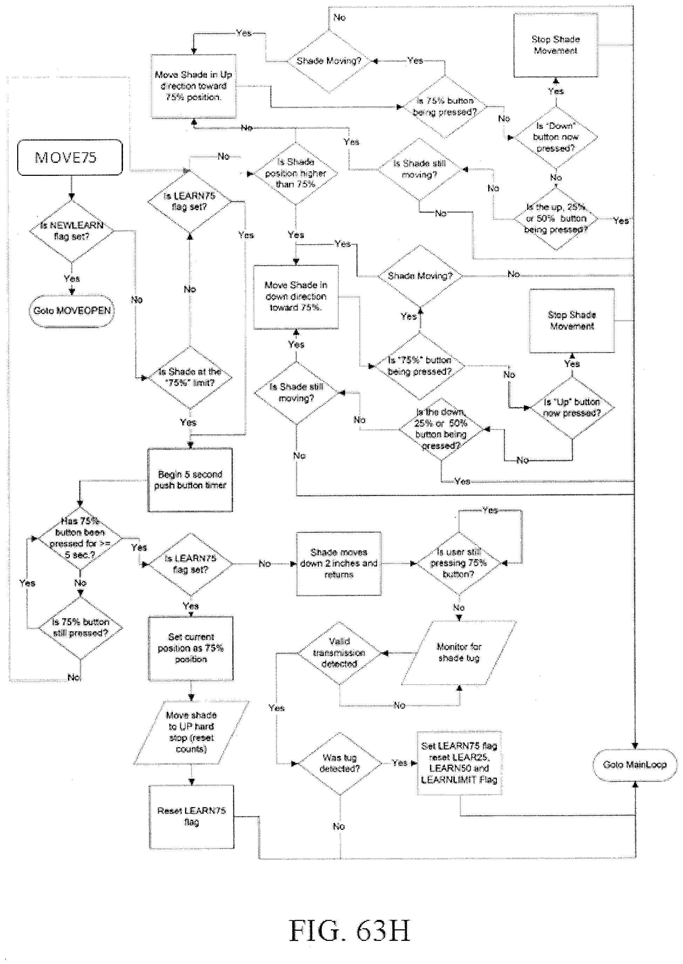

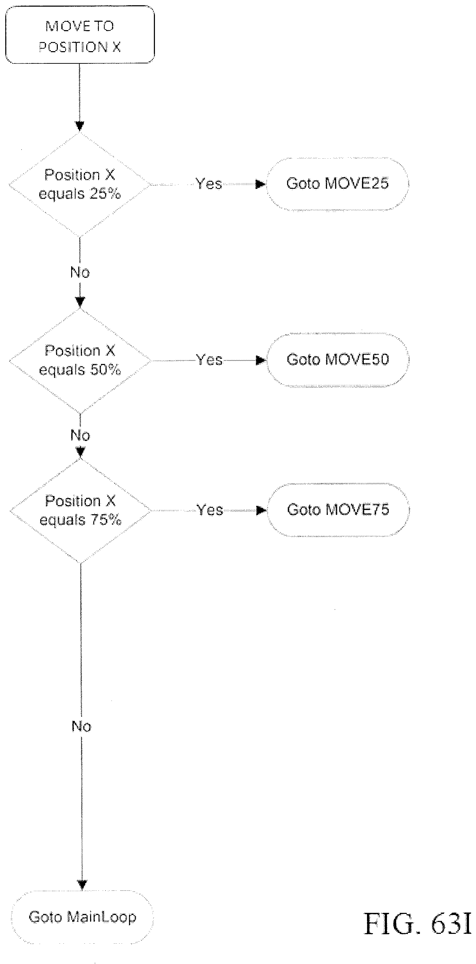

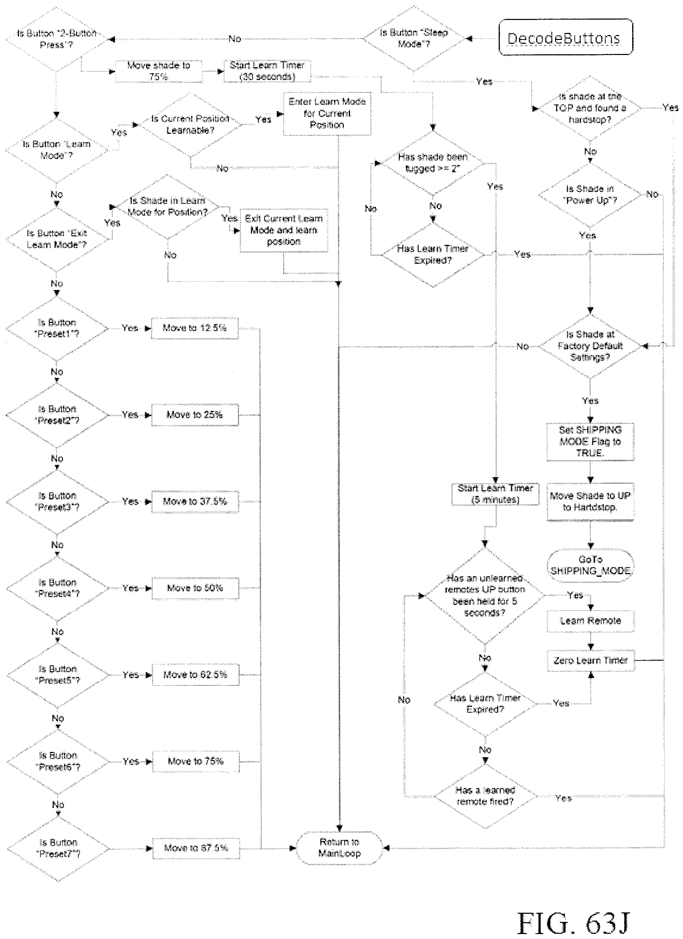

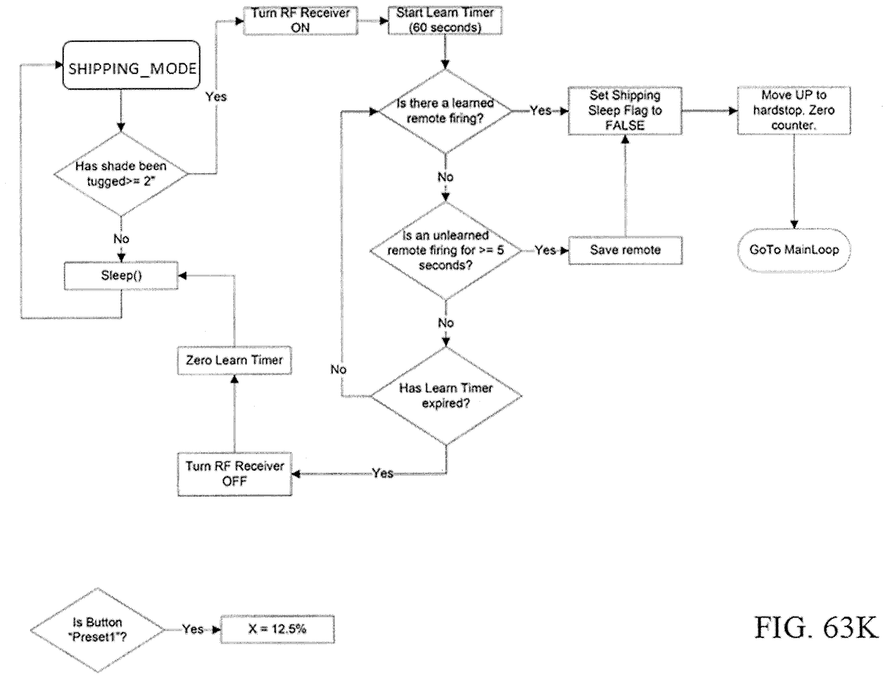

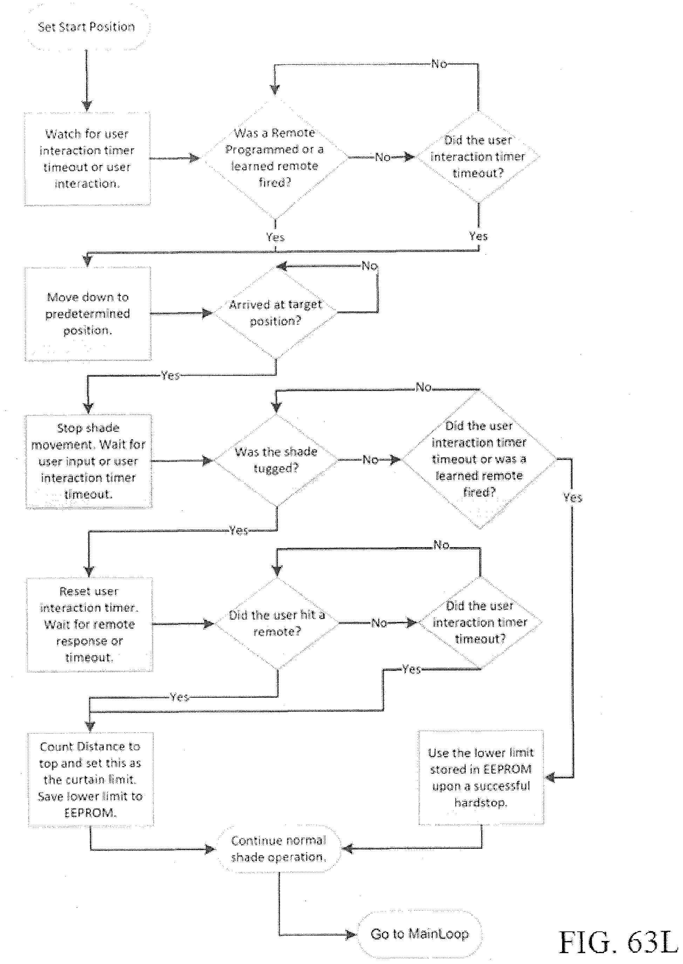

FIGS. 63A-63L show flowcharts implemented by the control system for specific embodiments of the invention.

### Method and Apparatus for Machining one or more grooves on outer surface of Cylindrical Element

Embodiments of the subject invention relate to a method and apparatus for machining one or more grooves on an outer surface of a cylindrical element. The terms rod or shaft can refer to a solid cylindrical object that may be made of a single material or multiple materials, and may be homogeneous or may be inhomogeneous, such as having layers or changes in materials, densities, and/or other material properties, along the length of the cylinder and/or as a function of radius and/or rotational position with respect to the longitudinal axis of the cylindrical element. The term tube can refer to a hollow cylindrical element that can have one or more features cut into or on an inner surface of the hollow passageway through the hollow cylindrical element. Other types of cylindrical elements can also be machined in accordance with embodiments of the subject invention, including, but not limited to, cylindrical elements having one or more partial or full bores through the cylindrical elements, and/or one or more features cut into or on an outer surface of the cylindrical element. Specific embodiments relate to machining a single spiraling groove or multiple spiraling grooves. For embodiments with multiple grooves, the grooves may all have the same handedness, or may differ in handedness. Embodiments having two grooves are provided as an example to teach certain features of various embodiments, where embodiments having a single groove to machine more than two grooves, or alternatively, a single groove.

Specific embodiments include, but are not limited to, the following:
(i) machining one or more grooves around the outer surface of a shaft or tube with a right hand, or clockwise, twist or with a left hand, or counter clockwise, twist, which, in a further specific embodiment, allows the shaft or tube to be used to drive a carrier along the shaft or tube when the shaft or tube is rotated.
(ii) machining two or more grooves around the outer surface of a shaft or tube, where at least one groove has a right hand, or clockwise, twist and at least one other groove has a left hand, or counter clockwise, twist, which, in a further specific embodiment, allows the shaft or tube to be used to drive a right hand and/or a left hand carrier along the shaft or tube when the shaft or tube is rotated.
(iii) machining one or more grooves, in accordance with (i), including machining at least two grooves.
(iv) machining two or more grooves, in accordance with (ii), including machining at least two right hand grooves and at least two left hand grooves.
(v) machining one or more grooves, in accordance with (i), where the one or more grooves are 180 degrees apart.
(vi) machining one or more grooves, in accordance with (i) and/or (ii), where the one or more grooves are cut by a 0.250 inch diameter cutter at a depth of 0.040 inches.
(vii) machining grooves, in accordance with (i) and/or (ii), wherein the grooves are 180 degrees apart.
(viii) machining grooves, in accordance with (i) and/or (ii), using a rough cut tool to cut a rough portion of each groove and a finish cut tool to cut a finish portion of each groove, where the spacing of the rough cut tool and the finish cut tool is one half the lead of the groove.

A specific embodiment of the subject invention will be described to illustrate several features that can be incorporated with various embodiments of the invention. Referring to FIGS. 1-3, an embodiment of an apparatus set up for cutting a pair of spiraling grooves **12** on a rod or tube **1** is shown, with the rod or tube **1** placed and secured on a lathe **10.** The handedness of the grooves **12** can be right handed (clockwise) or left handed (counterclockwise). The handedness of the grooves, for a certain rotational direction of the rod or tube, can be selected by the directional engagement of the directional lever **7,** where the directional lever controls the direction the cutting tool moves with respect to the rotating cylindrical element. The traversing speed of the tool post **5** is set by one of the speed adjusters, which, for a given rotation speed and cylinder radius, will also set the traversing lead of the groove **12,** where the traversing lead is the angle the groove **12** makes with respect to an axis parallel to the longitudinal axis of the cylindrical element. Lever **6** is used to engage the lead screw, which is geared to the chuck or spindle to generate the desired lead.

The groove cutting tools **11** are secured in the tool holder **9** on the tool post **5.** The rod or tube **1** is placed in the chuck **8** of the lathe **10.** A vertical backup roller **4** is placed against the top surface of the rod or tube **1** and a horizontal back up roller **3** is placed against the back side of the rod or tube **1** to support the rod while the grooves **12** are cut, as known in the art. The tool **11** cutting depth can be set differently for each set of tools **11,** as shown in FIG. 3. While several settings can be used, in the shown embodiment the first, or rough, cutter cuts into the cylindrical element to an initial depth, which is more than half of the total groove depth, and the last, or finish, cutter cuts further into the cylindrical element to deepen the groove **12.** Although the rough cutter cuts into the cylindrical element more than the finish cutter in this embodiment, in other embodiments the finish cutter can cut more than half of the groove's depth. In an embodiment, the top of the cutter, which can be flat is perpendicular to a plane tangent to the drive element at the point of contact between the cutter and the drive element.

In the embodiment shown in Figure 3, the cylindrical element is rotating such that the top surface of the cylindrical element is coming out of the page, and the tool post **5** is moving from right to left with respect to the element **1.** There are four cutters, with the first two cutters, shown on the left, making the rough depth cuts, set at a certain depth, for two separate grooves **12,** and the two finish cutters, shown on the right, cutting farther into the respective groove. In the embodiment shown in FIG. 3, the rough cuts (on left in Figure 3) are 0.030 inches deep, while the finish cut (on right in Figure 3) adds an additional 0.010 inches of depth to the groove for a final groove depth of 0.040 inches.

In an embodiment, the two rough cutters are spaced one-half of a lead from each other and the two finish cutters are spaced one-half of a lead from each other, such that the two grooves are spaced 180°, or one-half of a lead, apart, where a lead is defined as the linear distance along the axis of the shaft or tube that is covered by one 360° rotation of the groove. Any number of cutters can be used to cut each groove, but to avoid two passes of the tool post **5** down the rotating element when two cutters (e.g., rough and finish) are used for each groove, two cutters are needed for each groove. The embodiment shown in Figure 3 produces a pair of spiraling grooves as shown in FIGS. 7-8. In this embodiment, the two grooves are spaced 180°, or one-half of a lead, apart, but other embodiments have spacing greater than or less than 180°.

Referring to FIGS. 4-6, the apparatus from FIGS. 1-3 is shown being used for cutting two opposing pairs of spiraling grooves **12** on a rod or tube, with the rod or tube **1** still in place and secured on a lathe **10** and the tool post **5** traveling in the other direction after the first pair of grooves were finished. Figure 1 shows the point where a little less than half the length of the first pair of grooves have been cut and the tool post **5** is moving from right to left. The vertical backup roller **4** is again placed against the top surface of the rod or tube **1** and a horizontal roller **3** is placed against the back side of the rod or tube **1** to support the rod while the grooves **12** having the opposite handedness of the pair of grooves shown being cut in FIG. 3 are cut, as known in the art.

The grooves **12** of opposite handedness can be cut over (intersecting) the original grooves **12** by switching the rough cutter tool holder **9** (e.g., **9R** in FIGS. 2 and 3) and the finish cutter tool holder **9** (e.g., **9F** in FIGS. 2 and 3) and reversing the directional lever **6** such that the tool post **5** is moved in the opposite direction with respect to the rotating cylindrical element as when the original grooves were cut. The traversing speed of the tool post **5** can remain the same as during the first pass and the rotation speed of the cylindrical element can remain the same as during the first pass, such that the traversing lead stays the same. If the same cutters are used for rough and finish cutting, rather than switching the rough cutters tool holder **9** (e.g., **9R** in FIGS. 2 and 3) and the finish cutters tool holder **9** (e.g., **9F** in FIGS. 2 and 3), the cutting depth of the groove cutting tools **11** can be changed, such that cutters set to the rough depth on the first pass (**11A** and **11B** in **9R** in FIG. 3) are set to the finish depth on the second pass (**11A** and **11B** in **9F** in FIG. 6) and the cutters set to the finish depth on the first pass (**11A** and **11B** in **9F** in FIG. 3) are set to the rough depth on the second pass (**11A** and **11B** in **9R** in FIG. 6), and secured in the tool holder **9** on the tool post **5.** In the embodiment shown in FIGS. 7-8, there are four cutters with the first two cutters making a rough depth cut set at a rough depth and the finish cutters cutting farther into the groove to the final depth. In the embodiment shown in FIGS. 7-8, the rough cut is 0.030 inches deep while the finish cut cuts an additional 0.010 inches resulting in a depth of 0.04 inches for the groove.

Again, the two rough cutters are spaced one-half a lead from each other and the two finish cutters are spaced one-half of a lead from each other. As before, any number of cutters can be used, but to avoid needing two passes of the tool post **5** down the rotating element when two tools are used for each groove, two rough cutters and two finish cutters are needed. For embodiments having two right hand grooves and two left hand grooves, and using a rough cutter and a finish cutter for each groove, four cutters are needed to accomplish the four grooves in two passes. This produces two opposing pairs of spiraling grooves as shown in FIGS. 9-10. In this embodiment, the grooves are spaced 180° apart, as measured around the perimeter of the rod, but other embodiments having spacing greater than or less than 180° are contemplated.

In regard to the tolerance of the groove "pitch" spacing, embodiments of the subject tool holder ensure such spacing is consistent. In an embodiment, a 4.0" lead works well in relation to speeds and feed capability of the curtain, but other leads are also utilized. An embodiment has a tolerance of +/-0.12" on the pitch, which is based on the feed speed of the machine (lathe) cutting the grooves and should be very consistent.

The groove radius can be based on a .125 Radius tool, by using a machining center to cut the groove and a 1/4" ball end mill. In embodiments using a lathe, different cutters are used. The actual finished shape of the groove is approximately a true radius at .118". Different tools can be used for each cut on the tube such that the finished groove is .118 Radius.

In an embodiment using a lathe, the tolerances for the groove depth are +/-.010".

FIG. 11A shows a perspective view of a stock bit, or tool, **11** used to cut a portion of an outer surface or a tube or shaft to create a groove in the outer surface of the tube or shaft, where the angle θ that the bit's front portion ball **13,** which faces the outer surface of the tube or shaft, make with respect to a line **14** perpendicular to the top surface **15** at the bit **11.** The angle θ for a specific stock bit **11** is approximately 11°. FIG. 11B shows an embodiment of bit **11** that can be utilized to cut a portion of a groove **12** in accordance with an embodiment of the subject invention, which has an θ > 30°. The increase angle allows the bit to cut a portion of a groove that has a lead angle that might cause the standard bit to rub the side of the groove during cutting, particularly for the bit **11** cutting a finish portion, or deepest portion, of the groove. FIG. 11C shows an embodiment of a bit **11** in accordance with the subject invention having an angle θ of 45°. Specific embodiments of the invention can utilize bits **11** having an angle θ > 15°, θ > 20°, θ > 25°, θ > 30°, θ > 35°, θ > 40°, θ > 45°, 15° > θ > 20°, 20° > θ > 25°, 25° > θ > 30°, 30° > θ > 35°, 35° > θ > 40°, and/or 40° > θ > 45°. The bit can be produced by, for example, grinding away a portion of a standard bit having an angle θ = 11°. Various embodiments can utilize rough cutter bits and finish cutter bits that are the same or different, two cutter bits for two grooves that are the same or different, in shape, size, material, or other properties.

FIGS. 12A, 12B, and 12C show an embodiment of a tool holder **9** that incorporates two rows of tools **11,** a top row that has tools **11** for cutting grooves in a tube or shaft where the tool holder **9** is moved right to left with respect to the rotating tube or shaft, and a bottom row that has tools **11** for cutting grooves in a tube or shaft where the tool holder **9** is moved left to right with respect to the rotating tube or shaft, where for both the top row and bottom row, rough cutters start cutting the grooves and finish cutters finish the grooves. The embodiment shown in FIGS. 12A-12C incorporates 5 pairs of cutters where each pair, having a left cutter and a right cutter, cuts further than the adjacent pair, and the five left cutters of the five pairs cuts a first groove and the five right cutters of the five pairs cuts a second groove, and the top row cuts a pair of grooves of a first handedness and the bottom row cuts a pair of grooves of the opposite handedness.

Embodiments of the invention are directed to a method and apparatus for cutting one or more grooves into an outer surface of a cylindrical element. A specific embodiment, which can be referred to as Embodiment one, involves:
rotating a cylindrical element about a longitudinal axis of the cylindrical element;
where, while rotating the cylindrical element about the longitudinal axis, further incorporating:
   moving a rough cutter and the rotating cylindrical element with respect to each other in a direction parallel to the longitudinal axis, where the rough cutter moves from a rough start position to a rough end position, wherein the rough start position has a rough axial start position along a length of the cylindrical element and a rough rotational start position about the longitudinal axis, where the rough end position has a rough axial end position along a length of the cylindrical element and a rough rotational end position about the longitudinal axis; and
   moving a finish cutter and the rotating cylindrical element with respect to each other in a direction parallel to the longitudinal axis, wherein the finish cutter moves from a finish start position to a finish end position, where the finish start position has a finish axial start position along the length of the cylindrical element and a finish rotational start position about the longitudinal axis, where the finish end position has a finish axial end position along a length of the cylindrical element and a finish rotational end position about the longitudinal axis;
   where, while moving the rough cutter from the rough start position to the third position, positioning the rough cutter with respect to an outer surface of the cylindrical element such that the rough cutter cuts away a rough portion of the outer surface,
   where, while moving the finish cutter from the finish start position to the finish end position, positioning the finish cutter with respect to the outer surface of the cylindrical element such that the finish cutter cuts away a finish portion of the outer surface,
   where, cutting away the rough portion and cutting away the finish portion creates a groove in the outer surface of the cylindrical element.

Moving the cutters and the rotating element can be accomplished by rotating the element in place and moving the cutters along the outer surface of the rotating element, holding the cutters in place and moving the rotating element, or moving both the cutters and the rotating element. The rough cutter and finish cutter can be started at the same rotational positions or at different rotational positions, these rotational positions can remain the same as the cutters and rotating element are moved relative to each other, or can vary, and the speed of such relative movement can vary or be constant. The rotating element can be rotated at a constant rotational speed or the rotational speed can vary while the rotating element and cutters move with respect to each other. The cutters can remain in constant contact with the outer surface of the rotating element or can be disengaged from contact with the outer surface, the cutters can cut to a constant depth when engaged with the outer surface or the depth can vary while engaged with the outer surface, the rough cutter and the finish cutter can move at the same speed or different speed and such speeds can be constant or vary. Likewise, embodiments using two rough cutters and/or two finish cutters can have the rough cutters and/or the finish cutters move at the same speed or different speeds, during the relative motion of the rotating element and the cutters. Two passes can be made in the same direction or in opposite directions, as desired. The cylinder can be rotated in either direction, with an appropriate position of the cutters.

In specific embodiments, incorporating the limitations of Embodiment one, when the finish rotational start position is the same as the rough rotational start position, the finish axial start position is axially separated from the rough axial start position by n leads, where a lead is an axial distance covered by one 360° rotation of the groove in the outer surface of the cylindrical element and n is an integer having a value of 1 or greater. This allows the finish cutter to cut further into the groove started by the rough cutter. In a specific embodiment, n = 1, and the axial start positions are separated by one lead.

In a specific embodiment, which can be referred to as Embodiment two, wherein the rough rotational end position is the same as the rough rotational start position, wherein the finish rotational end position is the same as the finish rotational start position, wherein the finish rotational start position is the same as the rough rotational start position, where while moving the rough cutter from the rough start position to the rough end position, the rough cutter is maintained at the rough rotational start position, where while moving the finish cutter from the finish start position to the finish end position, the finish cutter is maintained at the finish rotational start position, where rotating the cylindrical element comprises rotating the cylindrical element at a constant speed of rotation, where moving the rough cutter from the rough start position to the rough end position comprises moving the rough cutter from the rough start position to the rough end position at a first axial speed, wherein the first axial speed is a constant axial speed, where moving the finish cutter from the finish start position to the finish end position comprises moving the finish cutter from the finish start position to the finish end position at the first axial speed, where the finish axial start position is axially separated from the rough axial start position by n leads, where a lead is an axial distance covered by one 360° rotation of the groove in the outer surface of the cylindrical element and n is an integer having a value of 1 or greater, where n = 1.

In a further embodiment, which can be referred to as Embodiment three, incorporating the limitations of Embodiment one, while rotating the cylindrical element about the longitudinal axis, further including:
moving a second rough cutter and the rotating cylindrical element with respect to each other in the direction parallel to the longitudinal axis, wherein the second rough cutter moves from a second rough start position to a second rough end position, where the second rough start position has a second rough axial start position along the length of the cylindrical element and a second rough rotational start position about the longitudinal axis, where the second rough end position has a second rough axial end position along the length of the cylindrical element and a second rough rotational end position about the longitudinal axis; and
moving a second finish cutter and the rotating cylindrical element with respect to each other in a direction parallel to the longitudinal axis, wherein the second finish cutter moves from a second finish start position to a second finish end position, where the second finish start position has a second finish axial start position along the length of the cylindrical element and a second finish rotational start position about the longitudinal axis, where the second finish end position has a second finish axial end position along the length of the cylindrical element and a second finish rotational end position about the longitudinal axis;
where while moving the second rough cutter from the second rough start position to the second rough end position, positioning the second rough cutter with respect to the outer surface of the cylindrical element such that the second rough cutter cuts away a second rough portion of the outer surface,
where while moving the second finish cutter from the second finish start position to the second finish end position, positioning the second finish cutter with respect to the outer surface of the cylindrical element such that the second finish cutter cuts away a second finish portion of the outer surface,
where cutting away the second rough portion and cutting away the second finish portion creates a second groove in the outer surface of the cylindrical element.

In a further specific embodiment, which can be referred to as Embodiment four, incorporating the limitations of Embodiment three, the second finish axial start position is axially separated from the second rough axial start position by m leads, where m is an integer having a value of 1 or greater. In this way the second finish cutter follows in the groove started by the second rough cutter. In a specific embodiment, m = 1.

In a further specific embodiment, which can be referred to as Embodiment five, incorporating the limitations of Embodiment four, where the second rough axial start position is axially separated from the finish axial start position by (p + ½) leads, where p is an integer having a value of zero or greater, where p = 0.

In a further specific embodiment, which can be referred to as Embodiment six, incorporating the limitations of Embodiment one, while rotating the cylindrical element about the longitudinal axis, further incorporating:
moving a second rough cutter and the rotating cylindrical element with respect to each other in the direction parallel to the longitudinal axis, where the second rough cutter moves from a second rough start position to a second rough end position, where second rough start position has a second rough axial start position along the length of the cylindrical element and a second rough rotational start position about the longitudinal axis, where second rough end position has a second rough axial end position and a second rough rotational end position; and
moving the second finish cutter and the rotating cylindrical element with respect to each other in the direction parallel to the longitudinal axis, where the second finish cutter moves from a second finish start position to an second finish end position, where the second finish start position has a second finish axial start position along the length of the cylindrical element and a second finish rotational start position about the longitudinal axis, where the second finish end position has a second finish axial end position and a second finish rotational end position;
where while moving the second rough cutter from the second rough start position to the second rough end position, positioning the second rough cutter with respect to the outer surface of the cylindrical element such that the second rough cutter cuts away a second rough portion of the outer surface,
where while moving the second finish cutter from the second finish start position to the second finish end position, positioning the second finish cutter with respect to the outer surface of the cylindrical element such that the second finish cutter cuts away a second finish portion of the outer surface,
where cutting away the second rough portion and cutting away the second finish portion creates a second groove in the outer surface of the cylindrical element.

A specific embodiment, which can be referred to as Embodiment seven, relates to a method and apparatus for cutting two grooves into an outer surface of a cylindrical element, involving:
rotating the cylindrical element about the longitudinal axis of a cylindrical element;
moving a first cutter and the rotating cylindrical element with respect to each other in the direction parallel to the longitudinal axis, where the first cutter moves from a first start position to a first end position, where the first start position has a first axial start position along a length of the cylindrical element and a first rotational start position about the longitudinal axis, where the first end position has a first axial end position along a length of the cylindrical element and a first rotational end position about the longitudinal axis; and
moving a second cutter and the rotating cylindrical element with respect to each other in the direction parallel to the longitudinal axis, where the second cutter moves from a second start position to a second end position, where the second start position has a second axial start position along the length of the cylindrical element and a second rotational start position about the longitudinal axis, where the second end position has a second axial end position along a length of the cylindrical element and a second rotational end position about the longitudinal axis;
where while moving the first cutter from the first start position to the first end position, positioning the first cutter with respect to an outer surface of the cylindrical element such that the first cutter cuts away a first portion of the outer surface,
where while moving the second cutter from the second start position to the second end position, positioning the second cutter with respect to the outer surface of the cylindrical element such that the second cutter cuts away a second portion of the outer surface,
where cutting away the first portion creates a first groove in the outer surface of the cylindrical element, and
where cutting away the second portion creates a second groove in the outer surface of the cylindrical element.

In a further specific embodiment, which can be referred to as Embodiment eight, incorporating the limitations of Embodiment seven, the first rotational end position is the same as the first rotational start position, the second rotational end position is the same as the second rotational start position, the second rotational start position is the same as the first rotational start position, where while moving the first cutter from the first start position to the first end position, the first cutter is maintained at the first rotational start position, where while moving the second cutter from the second start position to the second end position, the second cutter is maintained at the second rotational start position, where the second rotational start position is the same as the first rotational start position, where rotating the cylindrical element comprises rotating the cylindrical element at a constant speed of rotation, where moving the first cutter from the first start position to the first end position comprises moving the first cutter from the first start position to the first end position at a first axial speed, where the first axial speed is a constant axial speed, wherein moving the second cutter from the second start position to the second end position comprises moving the second cutter from the second start position to the second end position at the first axial speed, where the second axial start position is axially separated from the first axial start position by a separation axial distance, where the second groove is separated from the first groove by the separation axial distance, where the separation axial distance is (k + ½) leads, where a lead is an axial distance covered by one 360° rotation of the first groove in the outer surface of the cylindrical element and k is an integer having a value of zero or greater, where k = 0.

### Additional Methods and Apparatus for Machining one or more grooves on outer surface of Cylindrical Element

The following embodiments 1-35 may or may not share features of the above-referenced Embodiments one to eight, but are referred to as Embodiments 1 to 35, which numbering of embodiments is not necessarily related to the description of Embodiment one to eight.
Embodiment 1. A method of cutting one or more grooves into an outer surface of a cylindrical element, comprising:
   rotating a cylindrical element about a longitudinal axis of the cylindrical element;
   wherein while rotating the cylindrical element about the longitudinal axis, further comprising:
      moving a rough cutter and the rotating cylindrical element with respect to each other in a direction parallel to the longitudinal axis, wherein the rough cutter moves from a rough start position to a rough end position, wherein the rough start position has a rough axial start position along a length of the cylindrical element and a rough rotational start position about the longitudinal axis, wherein the rough end position has a rough axial end position along a length of the cylindrical element and a rough rotational end position about the longitudinal axis; and
      moving a finish cutter and the rotating cylindrical element with respect to each other in a direction parallel to the longitudinal axis, wherein the finish cutter moves from a finish start position to a finish end position, wherein the finish start position has a finish axial start position along the length of the cylindrical element and a finish rotational start position about the longitudinal axis, wherein the finish end position has a finish axial end position along a length of the cylindrical element and a finish rotational end position about the longitudinal axis;
      wherein while moving the rough cutter from the rough start position to the third position, positioning the rough cutter with respect to an outer surface of the cylindrical element such that the rough cutter cuts away a rough portion of the outer surface,
      wherein while moving the finish cutter from the finish start position to the finish end position, positioning the finish cutter with respect to the outer surface of the cylindrical element such that the finish cutter cuts away a finish portion of the outer surface,
      wherein cutting away the rough portion and cutting away the finish portion creates a groove in the outer surface of the cylindrical element.
Embodiment 2. The method according to embodiment 1, wherein the rough rotational end position is the same as the rough rotational start position.
Embodiment 3. The method according to embodiment 2, wherein the finish rotational end position is the same as the finish rotational start position.
Embodiment 4. The method according to embodiment 3, wherein the finish rotational start position is the same as the rough rotational start position.
Embodiment 5. The method according to embodiment 2, wherein while moving the rough cutter from the rough start position to the rough end position, the rough cutter is maintained at the rough rotational start position.
Embodiment 6. The method according to embodiment 3, wherein while moving the finish cutter from the finish start position to the finish end position, the finish cutter is maintained at the finish rotational start position.
Embodiment 7. The method according to embodiment 4, wherein while moving the rough cutter from the rough start position to the rough end position, the rough cutter is maintained at the rough rotational start position, wherein while moving the finish cutter from the finish start position to the finish end position, the finish cutter is maintained at the finish rotational start position.
Embodiment 8. The method according to embodiment 1, wherein rotating the cylindrical element comprises rotating the cylindrical element at a constant speed of rotation.
Embodiment 9. The method according to embodiment 7, wherein rotating the cylindrical element comprises rotating the cylindrical element at a constant speed of rotation.
Embodiment 10. The method according to embodiment 9, wherein moving the rough cutter from the rough start position to the rough end position comprises moving the rough cutter from the rough start position to the rough end position at a first axial speed, wherein the first axial speed is a constant axial speed, wherein moving the finish cutter from the finish start position to the finish end position comprises moving the finish cutter from the finish start position to the finish end position at the first axial speed.
Embodiment 11. The method according to embodiment 10, wherein the finish axial start position is axially separated from the rough axial start position by n leads, where a lead is an axial distance covered by one 360° rotation of the groove in the outer surface of the cylindrical element and n is an integer having a value of 1 or greater.
Embodiment 12. The method according to embodiment 11, wherein n = 1.
Embodiment 13. The method according to embodiment 12, wherein while rotating the cylindrical element about the longitudinal axis, further comprising:
   moving a second rough cutter and the rotating cylindrical element with respect to each other in the direction parallel to the longitudinal axis, wherein the second rough cutter moves from a second rough start position to a second rough end position, wherein the second rough start position has a second rough axial start position along the length of the cylindrical element and a second rough rotational start position about the longitudinal axis, wherein the second rough end position has a second rough axial end position along the length of the cylindrical element and a second rough rotational end position about the longitudinal axis; and
   moving a second finish cutter and the rotating cylindrical element with respect to each other in a direction parallel to the longitudinal axis, wherein the second finish cutter moves from a second finish start position to a second finish end position, wherein the second finish start position has a second finish axial start position along the length of the cylindrical element and a second finish rotational start position about the longitudinal axis, wherein the second finish end position has a second finish axial end position along the length of the cylindrical element and a second finish rotational end position about the longitudinal axis;
   wherein while moving the second rough cutter from the second rough start position to the second rough end position, positioning the second rough cutter with respect to the outer surface of the cylindrical element such that the second rough cutter cuts away a second rough portion of the outer surface,
   wherein while moving the second finish cutter from the second finish start position to the second finish end position, positioning the second finish cutter with respect to the outer surface of the cylindrical element such that the second finish cutter cuts away a second finish portion of the outer surface,
   wherein cutting away the second rough portion and cutting away the second finish portion creates a second groove in the outer surface of the cylindrical element.
Embodiment 14. The method according to embodiment 13, wherein the second rough rotational start position, the second finish rotational start position, the second rough rotational end position, and the second finish rotational end position are the same as the rough rotational start position.
Embodiment 15. The method according to embodiment 14, wherein while moving the second rough cutter from the second rough start position to the second rough end position, the second rough cutter is maintained at the second rough rotational start position wherein while moving the second finish cutter from the second finish start position to the second finish end position, the second finish cutter is maintained at the second finish rotational start position.
Embodiment 16. The method according to embodiment 15, wherein moving the second rough cutter from the second rough start position to the second rough end position comprises moving the second rough cutter from the second rough start position to the second rough end position at the first axial speed, wherein moving the second finish cutter from the second finish start position to the second finish end position comprises moving the second finish cutter from the second finish start position to the second finish end position at the first axial speed.
Embodiment 17. The method according to embodiment 16, wherein the second finish axial start position is axially separated from the second rough axial start position by m leads, where m is an integer having a value of 1 or greater.
Embodiment 18. The method according to embodiment 17, wherein m = 1.
Embodiment 19. The method according to embodiment 18, wherein the second rough axial start position is axially separated from the finish axial start position by (p + ½) leads, wherein p is an integer having a value of zero or greater.
Embodiment 20. The method according to embodiment 19, wherein p = 0.
Embodiment 21. The method according to embodiment 1, wherein while rotating the cylindrical element about the longitudinal axis, further comprising:
   moving a second rough cutter and the rotating cylindrical element with respect to each other in the direction parallel to the longitudinal axis, wherein the second rough cutter moves from a second rough start position to a second rough end position, wherein second rough start position has a second rough axial start position along the length of the cylindrical element and a second rough rotational start position about the longitudinal axis, wherein second rough end position has a second rough axial end position and a second rough rotational end position; and
   moving the second finish cutter and the rotating cylindrical element with respect to each other in the direction parallel to the longitudinal axis, wherein the second finish cutter moves from a second finish start position to an second finish end position, wherein the second finish start position has a second finish axial start position along the length of the cylindrical element and a second finish rotational start position about the longitudinal axis, wherein the second finish end position has a second finish axial end position and a second finish rotational end position;
   wherein while moving the second rough cutter from the second rough start position to the second rough end position, positioning the second rough cutter with respect to the outer surface of the cylindrical element such that the second rough cutter cuts away a second rough portion of the outer surface,
   wherein while moving the second finish cutter from the second finish start position to the second finish end position, positioning the second finish cutter with respect to the outer surface of the cylindrical element such that the second finish cutter cuts away a second finish portion of the outer surface,
   wherein cutting away the second rough portion and cutting away the second finish portion creates a second groove in the outer surface of the cylindrical element.
Embodiment 22. A method of cutting two grooves into an outer surface of a cylindrical element, comprising:
   rotating the cylindrical element about the longitudinal axis of a cylindrical element;
   moving a first cutter and the rotating cylindrical element with respect to each other in the direction parallel to the longitudinal axis, wherein the first cutter moves from a first start position to a first end position, wherein the first start position has a first axial start position along a length of the cylindrical element and a first rotational start position about the longitudinal axis, wherein the first end position has a first axial end position along a length of the cylindrical element and a first rotational end position about the longitudinal axis; and
   moving a second cutter and the rotating cylindrical element with respect to each other in the direction parallel to the longitudinal axis, wherein the second cutter moves from a second start position to a second end position, wherein the second start position has a second axial start position along the length of the cylindrical element and a second rotational start position about the longitudinal axis, wherein the second end position has a second axial end position along a length of the cylindrical element and a second rotational end position about the longitudinal axis;
   wherein while moving the first cutter from the first start position to the first end position, positioning the first cutter with respect to an outer surface of the cylindrical element such that the first cutter cuts away a first portion of the outer surface,
   wherein while moving the second cutter from the second start position to the second end position, positioning the second cutter with respect to the outer surface of the cylindrical element such that the second cutter cuts away a second portion of the outer surface,
   wherein cutting away the first portion creates a first groove in the outer surface of the cylindrical element, and
   wherein cutting away the second portion creates a second groove in the outer surface of the cylindrical element.
Embodiment 23. The method according to embodiment 22, wherein the first rotational end position is the same as the first rotational start position.
Embodiment 24. The method according to embodiment 23, wherein the second rotational end position is the same as the second rotational start position.
Embodiment 25. The method according to embodiment 24, wherein the second rotational start position is the same as the first rotational start position.
Embodiment 26. The method according to embodiment 22, wherein while moving the first cutter from the first start position to the first end position, the first cutter is maintained at the first rotational start position.
Embodiment 27. The method according to embodiment 24, wherein while moving the second cutter from the second start position to the second end position, the second cutter is maintained at the second rotational start position.
Embodiment 28. The method according to embodiment 25, wherein while moving the first cutter from the first start position to the first end position, the first cutter is maintained at the first rotational start position, wherein while moving the second cutter from the second start position to the second end position, the second cutter is maintained at the second rotational start position.
Embodiment 29. The method according to embodiment 28, wherein the second rotational start position is the same as the first rotational start position.
Embodiment 30. The method according to embodiment 22, wherein rotating the cylindrical element comprises rotating the cylindrical element at a constant speed of rotation.
Embodiment 31. The method according to embodiment 29, wherein rotating the cylindrical element comprises rotating the cylindrical element at a constant speed of rotation.
Embodiment 32. The method according to embodiment 31, wherein moving the first cutter from the first start position to the first end position comprises moving the first cutter from the first start position to the first end position at a first axial speed, wherein the first axial speed is a constant axial speed, wherein moving the second cutter from the second start position to the second end position comprises moving the second cutter from the second start position to the second end position at the first axial speed.
Embodiment 33. The method according to embodiment 32, wherein the second axial start position is axially separated from the first axial start position by a separation axial distance, wherein the second groove is separated from the first groove by the separation axial distance.
Embodiment 34. The method according to embodiment 33, wherein the separation axial distance is (k + ½) leads, where a lead is an axial distance covered by one 360° rotation of the first groove in the outer surface of the cylindrical element and k is an integer having a value of zero or greater.
Embodiment 35. The method according to embodiment 34, wherein k = 0.

Aspects of the invention, such as controlling the transverse, and proximity to the rotating cylindrical element, of the tool box 5, and the rotation of the cylindrical element, may be described in the general context of computer-executable instructions, such as program modules, being executed by a computer. Generally, program modules include routines, programs, objects, components, data structures, etc., that perform particular tasks or implement particular abstract data types. Moreover, those skilled in the art will appreciate that the invention may be practiced with a variety of computer-system configurations, including multiprocessor systems, microprocessor-based or programmable-consumer electronics, minicomputers, mainframe computers, and the like. Any number of computer-systems and computer networks are acceptable for use with the present invention.

Specific hardware devices, programming languages, components, processes, protocols, and numerous details including operating environments and the like are set forth to provide a thorough understanding of the present invention. In other instances, structures, devices, and processes are shown in block-diagram form, rather than in detail, to avoid obscuring the present invention. But an ordinary-skilled artisan would understand that the present invention may be practiced without these specific details. Computer systems, servers, work stations, and other machines may be connected to one another across a communication medium including, for example, a network or networks.

As one skilled in the art will appreciate, embodiments of the present invention may be embodied as, among other things: a method, system, or computer-program product. Accordingly, the embodiments may take the form of a hardware embodiment, a software embodiment, or an embodiment combining software and hardware. In an embodiment, the present invention takes the form of a computer-program product that includes computer-useable instructions embodied on one or more computer-readable media.

Computer-readable media include both volatile and nonvolatile media, transitory and non-transitory, removable and nonremovable media, and contemplate media readable by a database, a switch, and various other network devices. By way of example, and not limitation, computer-readable media comprise media implemented in any method or technology for storing information. Examples of stored information include computer-useable instructions, data structures, program modules, and other data representations. Media examples include, but are not limited to, information-delivery media, RAM, ROM, EEPROM, flash memory or other memory technology, CD-ROM, digital versatile discs (DVD), holographic media or other optical disc storage, magnetic cassettes, magnetic tape, magnetic disk storage, and other magnetic storage devices. These technologies can store data momentarily, temporarily, or permanently.

The invention may be practiced in distributed-computing environments where tasks are performed by remote-processing devices that are linked through a communications network. In a distributed-computing environment, program modules may be located in both local and remote computer-storage media including memory storage devices. The computer-useable instructions form an interface to allow a computer to react according to a source of input. The instructions cooperate with other code segments to initiate a variety of tasks in response to data received in conjunction with the source of the received data.

The present invention may be practiced in a network environment such as a communications network. Such networks are widely used to connect various types of network elements, such as routers, servers, gateways, and so forth. Further, the invention may be practiced in a multi-network environment having various, connected public and/or private networks.

Communication between network elements may be wireless or wireline (wired). As will be appreciated by those skilled in the art, communication networks may take several different forms and may use several different communication protocols. And the present invention is not limited by the forms and communication protocols described herein.

All patents, patent applications, provisional applications, and publications referred to or cited herein are incorporated by reference in their entirety, including all figures and tables, to the extent they are not inconsistent with the explicit teachings of this specification.

It should be understood that the examples and embodiments described herein are for illustrative purposes only and that various modifications or changes in light thereof will be suggested to persons skilled in the art and are to be included within the scope of the attached claims.

### Reference Nos.

- 1: dual curtain assembly
- 3: outer driver carrier attachment post
- 4b: first inner drive tooth
- 4a: second inner drive tooth
- 5a: first outer drive tooth
- 5b: second outer drive tooth
- 6: outer carrier attachment post
- 7: motor control circuit board
- 9: inner drive element
- 10: drive element
- 11: support guide
- 12: outer curtain carrier track
- 13: rubber mounting disk
- 14: pin hook
- 15: inner driver stall area
- 17: S hooks
- 18: axles
- 20: curtain assembly
- 21: batteries
- 22: drive element
- 23: right outer curtain drive attachment element
- 24: helical guide structure
- 25: right inner curtain drive element
- 26: outer surface
- 27: motor drive adapter
- 28: slip ring
- 29: inter-curtain engager catch
- 30: pull cord
- 31: inner carrier attachment post
- 32: motor assembly
- 33: rotation assembly
- 34: window
- 35: motor end
- 36: driver attachment element
- 36A: outer driver attachment element
- 36B: inner driver attachment element
- 37: loop
- 38: clockwise helical groove
- 39: Loop
- 40: counter clockwise helical groove
- 42: Center
- 43: external power supply
- 44A: outer curtain
- 44B: inner curtain
- 45: wall bracket
- 46: center closing curtain
- 47: battery sleeve
- 48: left panel
- 49: intercurtain engager
- 50: right panel
- 51: end cap
- 52: Axles
- 53: motor housing
- 54: end brackets
- 55: aperture
- 56: outer diameter
- 57: bearing housing
- 58: motor end
- 59: bearings end
- 60: longitudinal axis
- 61: inner tube
- 62: driver tooth
- 63: sleeve/outer tube
- 64: non-driven end
- 65: fractal antenna
- 66: driven end
- 67: idler attachment element
- 67A: outer curtain idler attachment element
- 68: attachment point
- 69: outer curtain carrier
- 70: draw rod
- 71: outer tooth drive
- 72: pull cord
- 73: inner tooth drive
- 74: left driver attachment element
- 75: o-ring
- 76: right driver attachment element
- 77: outer drive tube
- 78: left draw rod
- 80: right draw rod
- 81: inner curtain carrier track
- 82: motor
- 84: batteries
- 86: battery tube
- 87: motor output shaft
- 88: first lead tooth
- 90: second lead tooth
- 91: ball bearing
- 92: motor drive adapter
- 93: inner curtain carrier
- 94: bearings
- 95: finial
- 96: remote control
- 97: receiver for draw rod
- 98: button
- 99: receiver for hook
- 100: outer driver stall area
- 101: Cylindrical element (rod or tube)
- 102: Backup rollers holder
- 103: Horizontal backup roller
- 104: Vertical backup roller
- 105: Tool post
- 106: Lever to engage lead screw
- 107: Directional level
- 108: Chuck, part holder
- 109: Tool holder
- 110: Lathe
- 111: Tool
- 112: Groove
- 113: Bit front portion
- 114: Line
- 115: Bit top surface

## Claims

1. A window covering assembly (20), comprising:
a drive element (22) extending a length from a first end to a second end; the drive element (22) having at least one guide structure (24) formed on or into an outer surface (26) of the drive element;
wherein the at least one guide structure (24) includes at least one clockwise helical groove (38);
wherein the at least one guide structure (24) includes at least one counterclockwise helical groove (40);
wherein the at least one clockwise helical groove (38) and the at least one counterclockwise helical groove (40) periodically intersect one another along a length of the drive element (22);
a first drive attachment element (36) having a corresponding first structure that communicates with one or more of the at least one guide structure (24) to move the first drive attachment element (36) axially along the drive element (22) when the drive element (22) is rotated about a longitudinal axis of the drive element;
wherein the outer surface (26) of the drive element has a circular cross sectional shape;
**characterised in that**
at least a portion of the drive element (22) is hollow and **in that** the assembly (20) further comprises a rotation assembly (33) for rotating the drive element (22), the rotation assembly (33) comprising a motor (82) having an axis of rotation, wherein the longitudinal axis of the drive element (22) is aligned with the axis of rotation of the motor (82).

2. The window covering assembly (20) according to claim 1, wherein the drive element (22) is a tube.

3. The window covering assembly (20) according to claim 1, wherein the at least one guide structure (24) comprises a helical guide structure.

4. The window covering assembly (20) according to claim 1, further comprising:
a curtain wherein a first end of the curtain is fixed and a second end of the curtain is connected to the drive attachment element (36).

5. The window covering assembly (20) according to claim 1, further comprising:
a pull rod (70) connected to the first drive attachment element (36),
wherein the first drive attachment element (36) is disengaged from the at least one guide structure (24) of the drive element (22) by applying force on the pull rod (70) such that the first drive attachment element (36) does not move axially along the drive element (22) when the drive element is rotated.

6. The window covering assembly (20) according to claim 1,
wherein rotating the drive element (22) clockwise moves the first drive attachment element (36) in a first axial direction along the drive element (22),
wherein rotating the drive element counter-clockwise moves the first drive attachment element (36) in a second axial direction along the drive element (22); and
wherein the second axial direction is opposite to the first axial direction.

7. The window covering assembly (20) according to any preceding claim, wherein the motor (82) is mounted within the hollow portion of the drive element (22).

## Patentansprüche

1. Fensterabdeckungsanordnung (20), umfassend:
ein Antriebselement (22), das sich entlang einer Länge von einem ersten Ende zu einem zweiten Ende erstreckt;
das Antriebselement (22) mindestens eine Führungsstruktur (24) aufweist, die auf oder in einer äußeren Oberfläche (26) des Antriebselements (22) ausgebildet ist;
wobei die mindestens eine Führungsstruktur (24) mindestens eine im Uhrzeigersinn verlaufende Spiralnut (38) umfasst;
wobei die mindestens eine Führungsstruktur (24) mindestens eine entgegen dem Uhrzeigersinn verlaufende Spiralnut (40) umfasst;
wobei die mindestens eine im Uhrzeigersinn verlaufende Spiralnut (38) und die mindestens eine entgegen dem Uhrzeigersinn verlaufende Spiralnut (40) sich periodisch entlang einer Länge des Antriebselements (22) schneiden;
ein erstes Antriebsbefestigungselement (36) mit einer entsprechenden ersten Struktur, die mit einer oder mehreren der mindestens einen Führungsstruktur (24) in Verbindung steht, um das erste Antriebsbefestigungselement (36) axial entlang des Antriebselements (22) zu bewegen, wenn das Antriebselement (22) um eine Längsachse des Antriebselements gedreht wird;
wobei die äußere Oberfläche (26) des Antriebselements eine kreisförmige Querschnittsform aufweist;
**dadurch gekennzeichnet, dass**
mindestens ein Teil des Antriebselements (22) hohl ist und dass die Anordnung (20) ferner eine Drehvorrichtung (33) zum Drehen des Antriebselements (22) umfasst, wobei die Drehvorrichtung (33) einen Motor (82) mit einer Drehachse umfasst, wobei die Längsachse des Antriebselements (22) zur Drehachse des Motors (82) ausgerichtet ist.

2. Fensterabdeckungsanordnung (20) nach Anspruch 1, wobei das Antriebselement (22) ein Rohr ist.

3. Fensterabdeckungsanordnung (20) nach Anspruch 1, wobei die mindestens eine Führungsstruktur (24) eine spiralförmige Führungsstruktur aufweist.

4. Fensterabdeckungsanordnung (20) nach Anspruch 1, ferner umfassend:
einen Vorhang, wobei ein erstes Ende des Vorhangs fixiert ist und ein zweites Ende des Vorhangs mit dem Antriebsbefestigungselement (36) verbunden ist.

5. Fensterabdeckungsanordnung (20) nach Anspruch 1, ferner umfassend:
eine Zugstange (70), die mit dem ersten Antriebsbefestigungselement (36) verbunden ist,
wobei das erste Antriebsbefestigungselement (36) von der mindestens einen Führungsstruktur (24) des Antriebselements (22) durch Aufbringen von Kraft auf die Zugstange (70) derart gelöst wird, dass sich das erste Antriebsbefestigungselement (36) bei Drehung des Antriebselements (22) nicht axial entlang des Antriebselements (22) bewegt.

6. Fensterabdeckungsanordnung (20) nach Anspruch 1,
wobei das Drehen des Antriebselements (22) im Uhrzeigersinn das erste Antriebsbefestigungselement (36) in einer ersten axialen Richtung entlang des Antriebselements (22) bewegt,
wobei das Drehen des Antriebselements gegen den Uhrzeigersinn das erste Antriebsbefestigungselement (36) in einer zweiten axialen Richtung entlang des Antriebselements (22) bewegt; und
wobei die zweite axiale Richtung der ersten axialen Richtung entgegengesetzt ist.

7. Fensterabdeckungsanordnung (20) nach einem der vorhergehenden Ansprüche, wobei der Motor (82) innerhalb des hohlen Teils des Antriebselements (22) montiert ist.

## Revendications

1. Ensemble de couvre-fenêtre (20), comprenant :
un élément d'entraînement (22) s'étendant sur une longueur à partir d'une première extrémité à une deuxième extrémité ; l'élément d'entraînement (22) ayant au moins une structure de guidage (24) formée sur ou dans une surface externe (26) de l'élément d'entraînement ;
dans lequel l'au moins une structure de guidage (24) comporte au moins une rainure hélicoïdale dans le sens des aiguilles d'une montre (38) ;
dans lequel l'au moins une structure de guidage (24) comporte au moins une rainure hélicoïdale dans le sens inverse des aiguilles d'une montre (40) ;
dans lequel l'au moins une rainure hélicoïdale dans le sens des aiguilles d'une montre (38) et l'au moins une rainure hélicoïdale dans le sens inverse des aiguilles d'une montre (40) se coupent périodiquement sur une longueur de l'élément d'entraînement (22) ;
un premier élément de fixation d'entraînement (36) ayant une première structure correspondante qui communique avec une ou plusieurs de l'au moins une structure de guidage (24) pour déplacer le premier élément de fixation d'entraînement (36) axialement le long de l'élément d'entraînement (22) lorsque l'élément d'entraînement (22) tourne autour d'un axe longitudinal de l'élément d'entraînement ;
dans lequel la surface externe (26) de l'élément d'entraînement a une forme en coupe transversale circulaire ;
**caractérisé en ce que** :
au moins une partie de l'élément d'entraînement (22) est creuse et **en ce que** l'ensemble (20) comprend en outre un ensemble de rotation (33) pour faire tourner l'élément d'entraînement (22), l'ensemble de rotation (33) comprenant un moteur (82) ayant un axe de rotation, où l'axe longitudinal de l'élément d'entraînement (22) est aligné avec l'axe de rotation du moteur (82).

2. Ensemble de couvre-fenêtre (20) selon la revendication 1, dans lequel l'élément d'entraînement (22) est un tube.

3. Ensemble de couvre-fenêtre (20) selon la revendication 1, dans lequel l'au moins une structure de guidage (24) comprend une structure de guidage hélicoïdale.

4. Ensemble de couvre-fenêtre (20) selon la revendication 1, comprenant en outre :
un rideau dans lequel une première extrémité du rideau est fixée et une deuxième extrémité du rideau est reliée à l'élément de fixation d'entraînement (36).

5. Ensemble de couvre-fenêtre (20) selon la revendication 1, comprenant en outre :
une tige de traction (70) reliée au premier élément de fixation d'entraînement (36),
dans lequel le premier élément de fixation d'entraînement (36) est désengagé de l'au moins une structure de guidage (24) de l'élément d'entraînement (22) en appliquant une force sur la tige de traction (70) de sorte que le premier élément de fixation d'entraînement (36) ne se déplace pas axialement le long de l'élément d'entraînement (22) lorsque l'élément d'entraînement tourne.

6. Ensemble de couvre-fenêtre (20) selon la revendication 1,
dans lequel la rotation de l'élément d'entraînement (22) dans le sens des aiguilles d'une montre déplace le premier élément de fixation d'entraînement (36) dans une première direction axiale le long de l'élément d'entraînement (22),
dans lequel la rotation de l'élément d'entraînement dans le sens inverse des aiguilles d'une montre déplace le premier élément de fixation d'entraînement (36) dans une deuxième direction axiale le long de l'élément d'entraînement (22) ; et
dans lequel la deuxième direction axiale est opposée à la première direction axiale.

7. Ensemble de couvre-fenêtre (20) selon l'une des revendications précédentes, dans lequel le moteur (82) est monté à l'intérieur de la partie creuse de l'élément d'entraînement (22).
